(19) Europäisches Patentamt
European Patent Office
Office européen des brevets

(11) EP 3 998 324 A1

(12) EUROPEAN PATENT APPLICATION
published in accordance with Art. 153(4) EPC

(43) Date of publication:
18.05.2022 Bulletin 2022/20

(21) Application number: 20844242.6

(22) Date of filing: 10.07.2020

(51) International Patent Classification (IPC):
*C09K 11/08* (2006.01) *C09K 11/56* (2006.01)
*C09K 11/70* (2006.01) *B82Y 20/00* (2011.01)
*B82Y 40/00* (2011.01) *G02B 5/20* (2006.01)

(52) Cooperative Patent Classification (CPC):
**B82Y 20/00; B82Y 40/00; C09K 11/08; C09K 11/56; C09K 11/70; G02B 5/20**

(86) International application number:
**PCT/JP2020/027021**

(87) International publication number:
**WO 2021/015005 (28.01.2021 Gazette 2021/04)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **19.07.2019 JP 2019134073**

(71) Applicant: **TOKYO OHKA KOGYO CO., LTD.**
**Kawasaki-shi, Kanagawa 211 0012 (JP)**

(72) Inventors:
- **LIAO YuehChun**
  **Kawasaki-shi, Kanagawa 211-0012 (JP)**
- **SESHIMO Takehiro**
  **Kawasaki-shi, Kanagawa 211-0012 (JP)**
- **NODA Kunihiro**
  **Kawasaki-shi, Kanagawa 211-0012 (JP)**

(74) Representative: **Plasseraud IP**
**66, rue de la Chaussée d'Antin**
**75440 Paris Cedex 09 (FR)**

# (54) WAVELENGTH CONVERSION FILM, WAVELENGTH CONVERSION FILM FORMING COMPOSITION, AND CLUSTER-CONTAINING QUANTUM DOT PRODUCTION METHOD

(57) The objective of the invention is to provide a wavelength conversion film demonstrating a high optical density, a wavelength conversion film forming composition used suitably for forming the wavelength conversion film, and a production method for a cluster-containing quantum dot that may be applied suitably to the wavelength conversion film and the wavelength conversion film forming composition. In this invention, for a wavelength conversion film containing a quantum dot converting blue light into red light or green light, the light beam transmittance of the wavelength conversion film at 450 nm wavelength is set to 40% or lower, the light beam transmittance of the wavelength conversion film at 650 nm wavelength is set to 90% or higher if the hue of the light beam after the wavelength conversion is red, and the light beam transmittance of the wavelength conversion film at 550 nm wavelength is set to 90% or higher if the hue of the light beam after the wavelength conversion is green.

EP 3 998 324 A1

FIG. 1

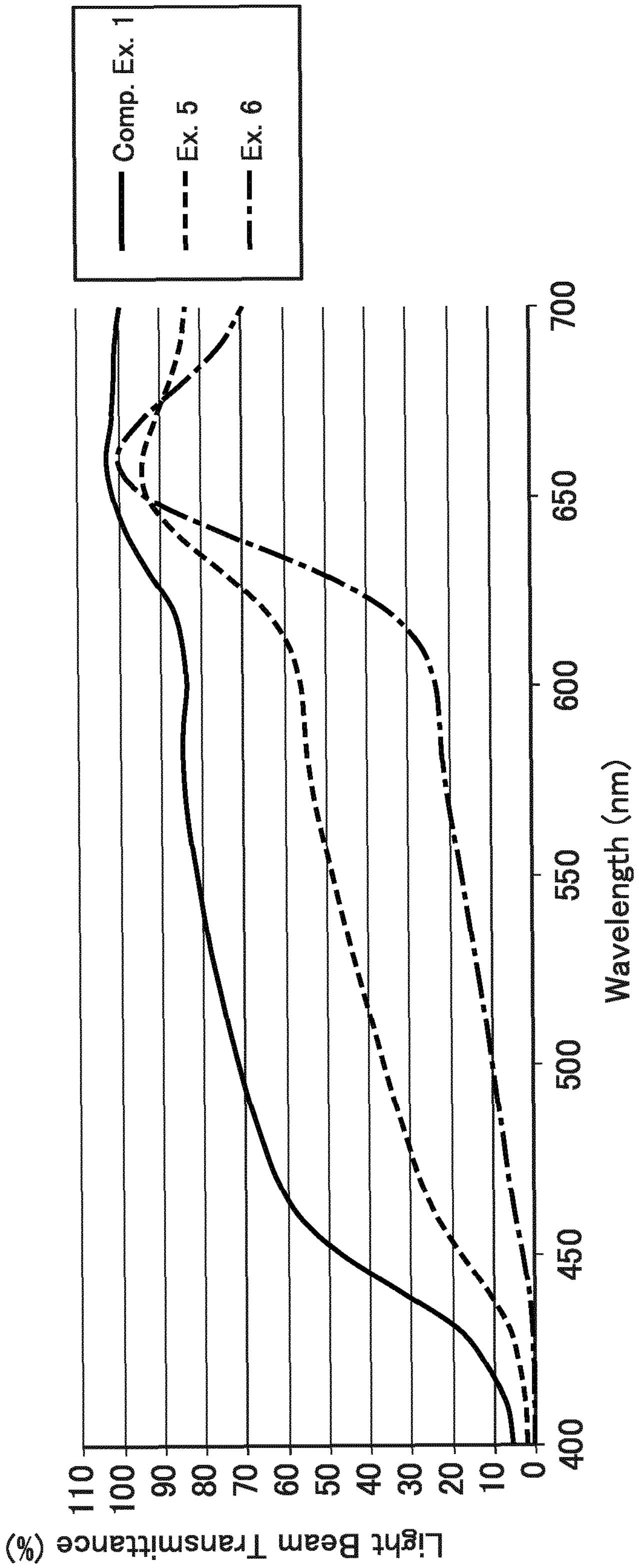
Comp. Ex. 1
Ex. 5
Ex. 6
Light Beam Transmittance (%)
110
100
90
80
70
60
50
40
30
20
10
0
400
450
500
550
600
650
700
Wavelength (nm)

## Description

TECHNICAL FIELD

The present invention relates to a wavelength conversion film, a wavelength conversion film forming composition, and a cluster-containing quantum dot production method.

BACKGROUND ART

An extremely small grain (dot) formed to confine electrons has been conventionally called a quantum dot, and the application thereof in a variety of fields has been investigated. The size of one quantum dot is several nanometers to several tens of nanometers in diameter.
Light-emitting fluorescent color (emission wavelength) can be changed by changing the size of the quantum dot (changing band gap). Thus, the quantum dots can be used as a wavelength conversion material. Regarding the application of the wavelength conversion material to an image display device, for example, a color filter including a light conversion layer containing quantum dots as luminescent nanocrystal particles and light-scattering particles of titanium oxide or the like has been proposed (see examples in Patent Document 1).
Patent Document 1: Japanese Unexamined Patent Application, Publication No. 2019-26780

DISCLOSURE OF THE INVENTION

Problems to be Solved by the Invention

The quantum dot is a very small particle. Thus, even when light emitted from a light source of a display device is passed through a light conversion layer containing only quantum dots, there is a problem in that the light is not allowed to enter favorably the quantum dots and it is difficult to perform favorable wavelength conversion. Then, in the example of Patent Document 1, in order to increase the establishment of the light emitted from the light source to the light conversion layer entering the quantum dots as the luminescent nanocrystal particles and to favorably perform wavelength conversion, the light-scattering particles are contained in the light conversion layer as the luminescent nanocrystal particles together with the quantum dots.
However, in a color filter including a light conversion layer containing light-scattering particles together with quantum dots as luminescent nanocrystal particles as in the examples of Patent Document 1, there is a problem in that it is difficult to obtain a high optical density (OD).
The present invention has been made in consideration of the above-described circumstance, and an object of the present invention is to provide a wavelength conversion film exhibiting a high optical density, a wavelength conversion film forming composition used suitably for forming the wavelength conversion film, and a method for producing a cluster-containing quantum dot that may be applied suitably to the wavelength conversion film and the wavelength conversion film forming composition.

Means for Solving the Problems

The present inventors have found that the above-described problem can be solved by, for a wavelength conversion film containing quantum dots converting blue light into red light or green light, setting the light beam transmittance of the wavelength conversion film at a wavelength of 450 nm to 40% or lower, setting the light beam transmittance of the wavelength conversion film at a wavelength of 650 nm to 90% or higher when a hue of a light beam after wavelength conversion is red, and setting the light beam transmittance of the wavelength conversion film at a wavelength of 550 nm to 90% or higher when a hue of a light beam after wavelength conversion is green, and have accomplished the present invention.
A first aspect of the present invention relates to a wavelength conversion film containing quantum dots converting blue light into red light or green light, in which a light beam transmittance of the wavelength conversion film at a wavelength of 450 nm is 60% or lower, a light beam transmittance of the wavelength conversion film at a wavelength of 650 nm is 90% or higher when a hue of a light beam after wavelength conversion is red, and a light beam transmittance of the wavelength conversion film at a wavelength of 550 nm is 90% or higher when a hue of a light beam after wavelength conversion is green, and in which the light beam transmittance is a value measured on a wavelength conversion film having a film thickness of 5 $\mu$m.
A second aspect of the present invention relates to a wavelength conversion film-forming composition containing primary particles of quantum dots and a quantum dot cluster composed of two or more primary particles of quantum dots.
A fourth aspect of the present invention relates to a method for producing a cluster-containing quantum dot,

including heating a mixture containing quantum dots and a compound represented by the following formula (1):

R-SH (1)

wherein R is a saturated aliphatic hydrocarbon group having 6 or more and 18 or less carbon atoms,

to a temperature of 150°C or higher and 300°C or lower, and
cooling the heated mixture to cluster primary particles of the quantum dots.

Effects of the Invention

According to the present invention, it is possible to provide a wavelength conversion film exhibiting a high optical density, a wavelength conversion film forming composition used suitably for forming the wavelength conversion film, and a method for producing a cluster-containing quantum dot that may be applied suitably to the wavelength conversion film and the wavelength conversion film forming composition.

BRIEF DESCRIPTION OF THE DRAWINGS

FIG. 1 is a view showing the light beam transmittances of wavelength conversion films of Example 5, Example 6, and Comparative Example 1.

PREFERRED MODE FOR CARRYING OUT THE INVENTION

<<Wavelength conversion film>>

A wavelength conversion film converts blue light into red light or green light and contains quantum dots. The light beam transmittance of the wavelength conversion film at a wavelength of 450 nm is 40% or lower and preferably 30% or lower. The light beam transmittance of the wavelength conversion film at a wavelength of 650 nm is 90% or higher when the hue of a light beam after wavelength conversion is red. The light beam transmittance of the wavelength conversion film at a wavelength of 550 nm is 90% or higher when a hue of a light beam after wavelength conversion is green. The light beam transmittance is a value measured on a wavelength conversion film having a film thickness of 5 μm.

The light beam transmittance can be measured using a wavelength conversion film having a film thickness of 5 μm formed on a glass substrate as a sample and a spectrophotometer Vista (manufactured by Hunter Associates Laboratory, Inc.). The light beam transmittance of the glass substrate alone before the formation of the wavelength conversion film is used as a baseline, and a wavelength range to be scanned is 400 to 700 nm.

The OD value of the wavelength conversion film can be increased by adjusting the relationship between the light beam wavelength and the light beam transmittance in the wavelength conversion film as described above. When light-scattering fine particles having a function of scattering light are contained in the wavelength conversion film, since it is easy for light scattered by the light-scattering fine particles in the wavelength conversion film to enter the quantum dots, blue light having a wavelength of 450 nm is favorably converted into red light or green light. In this case, the amount of blue light that is not wave-converted but passes through the wavelength conversion film decreases. As a result, the light beam transmittance of the wavelength conversion film at a wavelength of 450 nm decreases. On the other hand, since the light beam transmittance of red light or green light increases, for example, the difference (contrast) between the light beam transmittance at 650 nm (or the light beam transmittance at 535 nm) and the light beam transmittance at a wavelength of 450 nm increases. When the amount of the quantum dots in the wavelength conversion film is set to be large, the contrast of this OD value becomes favorable.

The use of the light-scattering fine particles increases the efficiency of converting the wavelength of blue light. However, when the amount of the light-scattering fine particles is excessively large, blue light and wavelength-converted red light or green light are reflected toward the light source in more cases, and both the light beam transmittance of blue light and the light beam transmittance of red light or green light are likely to decrease. Therefore, in a case where quantum dot clusters described later are used as the light-scattering fine particles, since the wavelength conversion effect of the quantum dots by scattered light and the wavelength conversion effect of the quantum dot clusters themselves by the light source and/or scattered light are combined, the contrast of the OD value further increases, which is preferable.

A wavelength conversion film satisfying the above-described requirements regarding the light beam transmittances can be manufactured by finely adjusting the amount of the quantum dots and the particle diameters or amount of the light-scattering fine particles in the wavelength conversion film from the above-described viewpoint. In this case, the content of inorganic particles other than quantum dots corresponding to the light-scattering fine particles in the wavelength conversion film is preferably 5% by mass or less and more preferably 3% by mass or less relative to the

mass of the quantum dots. The content of the inorganic particles other than the quantum dots corresponding to the light-scattering fine particles in the wavelength conversion film may be 1% by mass or less or 0% by mass relative to the mass of the quantum dots. The lower limit of the content of the inorganic particles other than the quantum dots corresponding to the light-scattering fine particles in the wavelength conversion film is not particularly limited. Typically, the lower limit may be 0% by mass or more, 0.1% by mass or more, or 0.5% by mass or more relative to the mass of the quantum dots.

However, in a case where quantum dots and conventionally known light-scattering fine particles such as titanium oxide fine particles are used, in order to achieve the desired light beam transmittance at each wavelength, a very severe balance is required for the amount of the quantum dots used, the amount of the light-scattering fine particles used, the particle diameters of the light-scattering fine particles, and the like.

When this point is taken into account, it is preferable that some of the quantum dots are a quantum dot cluster composed of two or more primary particles of the quantum dots. The quantum dot cluster is a fine particle composed of two or more primary particles of the quantum dots that come close and bond to each other. The bond between the primary particles is not particularly limited and may be a physical bond attributed to the affinity between the particles or a chemical bond by the formation of a covalent bond, an ionic bond, or the like. The size of the primary particle is, for example, preferably within a range of 3 nm or more and 80 nm or less and more preferably within a range of 5 nm or more and 30 nm or less.

The quantum dot cluster is preferably a cluster of quantum dots having a common emission wavelength (component (A) described later) in terms of improving the contrast of the OD values, and, in a case where quantum dots that do not form any clusters are contained together with the quantum dot clusters in the wavelength conversion film forming composition described later, each quantum dot preferably has a common emission wavelength. That is, in a case where it is desired to turn the emission color of blue light at the time of having passed through the wavelength conversion film into red, the emission wavelengths of the quantum dots forming the quantum dot clusters are wavelengths corresponding to red (having an emission central wavelength in a wavelength range of 600 to 680 nm), and the emission wavelengths of the quantum dots that are not clusters and are combined into the wavelength conversion film forming composition are also wavelengths corresponding to red (having an emission central wavelength in a wavelength range of 600 to 680 nm). In addition, in a case where it is desired to turn the emission color of blue light at the time of having passed through the wavelength conversion film into green, clustered quantum dots and non-clustered quantum dots each having an emission central wavelength in a wavelength range of 520 to 580 nm are used.

Whether or not the quantum dots contain the quantum dot clusters can be confirmed from an electron microscope photograph (SEM) of the wavelength conversion film. The fact that quantum dot clusters having relatively similar sizes are scattered in granular forms in the wavelength conversion film can be confirmed from a cross-sectional SEM photograph of the wavelength conversion film. In a case where the presence of a plurality of granular clusters in the wavelength conversion film is confirmed, it is found that the quantum dot clusters are retained as clusters in the wavelength conversion film and the quantum dots do not simply cohere locally. The size of the quantum dot cluster is preferably, for example, 100 nm or more and 700 nm or less and more preferably 200 nm or more and 600 nm or less. The size of the quantum dot cluster is preferably within the range from the viewpoint of QY (luminescent yield) or contrast improvement.

It is preferable that a ligand is bonded to a surface of the quantum dot cluster. When a ligand is present on the surface of the quantum dot cluster, the quantum dot clusters do not excessively come close to each other in the wavelength conversion film due to the steric hindrance by the ligands and are present at positions a certain distance apart. In this case, when blue light enters the quantum dots, since energy derived from the blue light does not transfer between the quantum dots, the quantum yield increases. Therefore, when some of the quantum dots are a quantum dot cluster having a ligand on the surface, the conversion efficiency of blue light into red light or green light becomes high.

For example, examples of the ligand include phosphorus compounds such as a phosphine, a phosphine oxide, and a trialkylphosphine; organic nitrogen compounds such as a pyridine, an aminoalkane, and a tertiary amine; organic sulfur compounds such as a mercapto alcohol, a thiol, and a dialkylsulfde; surface modification agents such as a higher fatty acid, and an alcohol.

It should be noted that, in the specification of the present application, in a case where the cluster of quantum dots (A) (quantum dot cluster) contains a ligand, the mass of the ligand is not included in the mass of the cluster of the quantum dots (A) and is defined as the mass of a material separate from the cluster of the quantum dots (A). However, in the present specification, in a case where the quantum dot (A) that does not form any clusters contains a ligand, the mass of the ligand is not the mass of a material separate from the quantum dot (A) and is defined as the mass of a material constituting the quantum dot (A). Therefore, in a case where the quantum dot (A) contains a ligand, the mass of the ligand is included in the mass of the quantum dot (A).

The ligand in the quantum dot (A) that does not form any clusters is preferably different from the ligand that can bond to the surface of the quantum dot cluster. When the ligand that can bond to the surface of the quantum dot cluster is defined as a specific compound described later, it is possible to blend quantum dots (A) that do not form any clusters and clustered quantum dots (A) (quantum dot clusters) in the same system.

As the ligand that can bond to the surface of the quantum dot cluster, a compound represented by the following formula (1) :

R-SH (1)

(R in the formula (1) is an aliphatic hydrocarbon group having 6 or more and 18 or less carbon atoms) is preferable. R in the formula (1) is an aliphatic hydrocarbon group. The structure of the aliphatic hydrocarbon group may have a linear shape, a branched chain shape, a cyclic shape, or a combination of these structures. Among these structures, a linear shape or a branched chain shape is preferable and a linear shape is more preferable since the quantum dot clusters are likely to be apart from each other. The aliphatic hydrocarbon group as R may have one or more unsaturated bonds. The unsaturated bond may be a double bond or a triple bond.

Preferred specific examples of the compound represented by the formula (1) include 1-hexanethiol, 1-heptanethiol, 1-octanethiol, 2-ethyl-1-hexanethiol, 1-nonanthiol, 1-decanethiol, 1-undecanethiol, 1-dodecanethiol, 1-tridecanethiol, 1-tetradecanethiol, 1-pentadecanethiol, 1-hexadecanethiol, 1-heptadecanethiol, and 1-octadecanethiol.

Regarding the blending ratio between the quantum dot cluster and the compound represented by the formula (1), in a case where the mass of the primary particles constituting the quantum dot cluster is indicated by X and the mass of the compound represented by the formula (1) is indicated by Y, X:Y is, for example, preferably within a range of 1:2 to 1:0.01, more preferably within a range of 1:1.5 to 1:0.1, and even more preferably within a range of 1:1.2 to 1:0.5 in consideration of the stability of the cluster and the stability at the time of preparing the composition. Regarding the mass ratio between the mass XX of the quantum dot cluster and the mass YY of the compound represented by the formula (1) that is bonded to the quantum dot cluster and coexists with the quantum dot cluster, XX:YY is, for example, preferably within a range of 1:2 to 1:0.01, more preferably within a range of 1:1.5 to 1:0.1, even more preferably within a range of 1:1.2 to 1:0.2, and far even more preferably within a range of 1:1.1 to 1:0.3 in consideration of the stability of the cluster itself and the stability at the time of preparing the composition.

<Quantum dots (A)>

As long as the quantum dots (A) are fine particles showing a function as quantum dots, the structure and constituents thereof are not particularly limited. The quantum dots (A) are a nanoscale material having particular optical characteristics according to quantum mechanics (quantum-confined effect described below), and commonly mean semiconductor nanoparticles. In the description, the quantum dots (A) also include quantum dots in which the surface of semiconductor nanoparticles is further covered to improve a luminescent quantum yield (quantum dots having a shell structure described below) and quantum dots which are surface-modified for stabilization.

The quantum dots (A) are considered as semiconductor nanoparticles which absorb photons having energy larger than a band gap (a difference in energy between a valence band and a conduction band) and emit light with a wavelength depending on the particle diameter thereof. Examples of elements included in materials for the quantum dots (A) include one or more selected from the group consisting of group II elements (group 2A, group 2B), group III elements (particularly group 3A), group IV elements (particularly group 4A), group V elements (particularly group 5A), and group VI elements (particularly group 6A). Examples of preferred compounds or elements as materials for the quantum dots (A) include group II-VI compounds, group III-V compounds, group IV-VI compounds, group IV elements, group IV compounds and combinations thereof.

Examples of group II-VI compounds include at least one compound selected from the group consisting of CdSe, CdTe, ZnS, ZnSe, ZnTe, ZnO, HgS, HgSe, HgTe, MgSe, MgS and mixtures thereof; at least one compound selected from the group consisting of CdSeS, CdSeTe, CdSTe, ZnSeS, ZnSeTe, ZnSTe, HgSeS, HgSeTe, HgSTe, CdZnS, CdZnSe, CdZnTe, CdHgS, CdHgSe, CdHgTe, HgZnS, HgZnSe, HgZnTe, MgZnSe, MgZnS and mixtures thereof; and at least one compound selected from the group consisting of HgZnTeS, CdZnSeS, CdZnSeTe, CdZnSTe, CdHgSeS, CdHgSeTe, CdHgSTe, HgZnSeS, HgZnSeTe, HgZnSTe and mixtures thereof.

Examples of group III-V compounds include at least one compound selected from GaN, GaP, GaAs, GaSb, AlN, AlP, AlAs, AlSb, InN, InP, InAs, InSb and mixtures thereof; at least one compound selected from GaNP, GaNAs, GaNSb, GaPAs, GaPSb, AlNP, AlNAs, AlNSb, AlPAs, AlPSb, InNP, InNAs, InNSb, InPAs, InPSb, GaAlNP and mixtures thereof; and at least one compound selected from GaAlNAs, GaAlNSb, GaAlPAs, GaAlPSb, GaInNP, GaInNAs, GaInNSb, GaInPAs, GaInPSb, InAlNP, InAlNAs, InAlNSb, InAlPAs, InAlPSb and mixtures thereof.

Examples of group IV-VI compounds include at least one compound selected from SnS, SnSe, SnTe, PbS, PbSe, PbTe and mixtures thereof; at least one compound selected from SnSeS, SnSeTe, SnSTe, PbSeS, PbSeTe, PbSTe, SnPbS, SnPbSe, SnPbTe and mixtures thereof; and at least one compound selected from SnPbSSe, SnPbSeTe, SnPbSTe and mixtures thereof.

Examples of group IV elements include at least one compound selected from Si, Ge and mixtures thereof. Examples of group IV compounds include at least one compound selected from SiC, SiGe and mixtures thereof.

The structure of quantum dots (A) can be a homogeneous structure made of one compound, or a composite structure made of two or more compounds. In order to improve luminescent quantum yields of the above compounds, the structure of quantum dots (A) is preferably a core-shell structure in which the core is covered with one or more shell layers, and more preferably a structure in which the surface of a particle of the compound, a core material, is epitaxially covered with a semiconductor material. When group II-VI CdSe, for example, is used as a core material, ZnS, ZnSSe and the like are used as its covering layer (shell). The shell preferably has the same lattice constant as a core material has, and a material combination in which the difference in the lattice constant between the core and shell is small is properly selected.

The quantum dots (A) preferably include a compound including Cd or In as a constituent from the viewpoint of fluorescence efficiency. The quantum dots (A) more preferably include a compound including In as a constituent when taking into account safety.

Specific suitable examples of quantum dots (A) of the homogeneous structure type not having a shell layer include $AgInS_2$ and Zn-doped $AgInS_2$. Examples of quantum dots (A) of the core-shell type include InP/ZnS, InP/ZnSSe, $CuInS_2$/ZnS, and (ZnS/$AgInS_2$) solid solution/ZnS. It should be noted that materials for quantum dots (A) of the core-shell type are described as (core material)/(shell layer material) in the above description.

In addition, a shell of the core-shell structure has preferably a multi-layer structure from the viewpoint of improvement of safety and a luminescent quantum yield and more preferably two layers. In a core-multilayer shell structure, the material of the core is preferably at least one compound selected from the group consisting of InP, ZnS and ZnSe, and more preferably includes InP. The proportion of InP included is 50% by mass or more and 100% by mass or less of the total mass of the core, preferably 60% by mass or more and 99% by mass or less, and more preferably 82% by mass or more and 95% by mass or less. In addition, the proportion of ZnS and/or ZnSe included is 0% by mass or more and 50% by mass or less of the total mass of the core, preferably 1% by mass or more and 40% by mass or less, and more preferably 5% by mass or more and 18% by mass or less.

In a multilayer shell structure, a material for the first shell is preferably one or more selected from ZnS, ZnSe and ZnSSe. The proportion of one or more selected from ZnS, ZnSe and ZnSSe included is for example 50% by mass or more and 100% by mass or less, preferably 75% by mass or more and 98% by mass or less, and more preferably 80% by mass or more and 97% by mass or less based on the total mass of the first shell. When a material for the first shell is a mixture of ZnS and ZnSe, the mixing ratio (mass ratio) is not particularly limited, and is 1/99 or more and 99/1 or less, and preferably 10/90 or more and 90/10 or less.

In a multilayer shell structure, the second shell is grown on the surface of the first shell. A material for the second shell is preferably equivalent to the material for the first shell (however, differences in the lattice constant with respect to the core differ from each material. That is, a case where 99% or more in the materials have the same quality is excluded). The proportion of one or more selected from ZnS, ZnSe and ZnSSe included is for example 50% by mass or more and 100% by mass or less, preferably 75% by mass or more and 98% by mass or less and more preferably 80% by mass or more and 97% by mass or less based on the total mass of the second shell. When a material for the second shell is a mixture of two selected from ZnS, ZnSe and ZnSSe, the mixing ratio (mass ratio) is not particularly limited, and is 1/99 or more and 99/1 or less, and 10/90 or more and 90/10 or less.

The first shell and the second shell in a multilayer shell structure have different lattice constants. A difference in the lattice constant between the core and the first shell for example is 2% or more and 8% or less, preferably 2% or more and 6% or less, and more preferably 3% or more and 5% or less. In addition, a difference in the lattice constant between the core and the second shell is 5% or more and 13% or less, preferably 5% or more and 12% or less, more preferably 7% or more and 10% or less, and further preferably 8% or more and 10% or less.

In addition, a difference in the lattice constant between the first shell and the second shell is for example 3% or more and 9% or less, preferably 3% or more and 7% or less, and more preferably 4% or more and 6% or less.

The quantum dots (A) by these core-multilayer shell structures can have an emission wavelength in a range of 400 nm or higher and 800 nm or lower (furthermore a range of 470 nm or higher and 680 nm or lower, and, particularly, 600 nm or higher and 680 nm or lower in case of red light, and 520nm or higher and 580nm or lower in case of green light).

Examples of the quantum dots (A) by these core-multilayer shell structures include InP/ZnS/ZnSe and InP/ZnSe/ZnS.

Two or more of the above quantum dots (A) may be used in combination. Quantum dots (A) of the core-(multilayer) shell type and quantum dots (A) of the homogeneous structure type may be used in combination.

The average particle diameter of the quantum dots (A) is not particularly limited as long as the particles can function as quantum dots. The average diameter of the quantum dots (A) is preferably 0.5 nm or more and 30 nm or less, more preferably 1.0 nm or more and 15 nm or less as a diameter of primary particle. In quantum dots (A) of the core-(multilayer) shell type, the size of core is for example 0.5 nm or more and 10 nm or less, and preferably 2 nm or more and 5 nm or less. The average thickness of the shell is preferably 0.4 nm or more and 2 nm or less, and more preferably 0.4 nm or more and 1.4 nm or less. When the shell includes the first shell and the second shell, the average thickness of the first shell is for example 0.2 nm or more and 1 nm or less, and preferably 0.2 nm or more and 0.7 nm

or less. The average thickness of the second shell does not depend on the average thickness of the first shell, and is for example 0.2 nm or more and 1 nm or less, and preferably 0.2 nm or more and 0.7 nm or less.

The quantum dots (A) having an average particle diameter within such range show a quantum-confined effect and function well as quantum dots, and moreover are easily prepared and have stable fluorescence characteristics. It should be noted that the average particle diameter of quantum dots (A) can be defined by, for example, applying a dispersion liquid of quantum dots (A) onto a substrate and drying the liquid, removing a volatile component and then observing the surface with a transmission electron microscope (TEM). Typically, this average particle diameter can be defined as the number average diameter of circle equivalent diameters of particles obtained by image analysis of the TEM image.

The shape of quantum dots (A) is not particularly limited. Examples of the shape of quantum dots (A) include a spherical shape, a spheroid shape, a cylindrical shape, a polygonal shape, a disk shape, a polyhedral shape and the like. Among these, a spherical shape is preferred from the viewpoint of handleability and availability.

Because the characteristics as a wavelength conversion film and wavelength conversion characteristics are good, the quantum dots (A) preferably include one or more selected from the group consisting of a compound (A1) having a fluorescence maximum in a wavelength range of 520 nm or higher and 580 nm or lower, and a compound (A2) having a fluorescence maximum in a wavelength range of 600 nm or higher and 680 nm or lower, and more preferably consists of one or more selected from the group consisting of the compound (A1) and the compound (A2).

A method for producing quantum dots (A) is not particularly limited. Quantum dots produced by various well-known methods can be used as the quantum dots (A). As the method for producing the quantum dots (A), for example, a method in which an organometallic compound is thermally decomposed in a coordinating organic solvent can be used. In addition, the quantum dots (A) of the core-shell structure type can be produced by a method in which homogeneous cores are formed by reaction and then a shell layer precursor is allowed to react in the presence of dispersed cores to form a shell layer. In addition, for example, quantum dots (A) having the above core-multilayer shell structure can be produced by the method described in WO 2013/127662. It should be noted that various commercially available quantum dots (A) can also be used.

The content of the quantum dots in the wavelength conversion film is not particularly limited as long as the wavelength conversion film satisfies the above-described requirements regarding the light beam transmittances. The content of the quantum dots (A) in the wavelength conversion film is preferably 20% by mass or more and 80% by mass or less and more preferably 25% by mass or more and 60% by mass or less relative to the mass of the entire wavelength conversion film. The content of the quantum dots (A) is more preferably 30% by mass or more and 40% by mass or less. The content of the quantum dots (A) is the sum of the amount of the primary particles of the non-clustered quantum dots and the amount of the quantum dot clusters. The content ratio of the quantum dot clusters to the sum total of the amount of the primary particles of the non-clustered quantum dots and the amount of the quantum dot clusters in the wavelength conversion film is preferably 40% by mass or less and more preferably 30% by mass or less from the viewpoint of, for example, an improvement of the contrast. There is no particular lower limit, but the lower limit is, for example, preferably 1% by mass or more and more preferably 5% by mass or more.

<Light-scattering fine particles (B)>

As described above, the wavelength conversion film may contain light-scattering fine particles (B) in addition to the quantum dots. The form of the light-scattering fine particle (B) is not particularly limited. Examples of the form of the particle include polyhedral shapes such as a spherical shape, a substantially spherical shape, and a regular polyhedral shape, substantially polyhedral shapes, indeterminate shapes, and the like. The form of the particle is preferably a spherical shape, a substantially spherical shape, a polyhedral shape, and a substantially polyhedral shape from the viewpoint of performance that scatters light beams.

Specific examples of the light-scattering fine particles (B) include metal fine particles composed of a single metal or alloy of tungsten, zirconium, titanium, platinum, bismuth, rhodium, palladium, silver, tin, platinum, gold, or the like; and salts or oxides containing metals or semi-metals such as barium sulfate, barium carbonate, calcium carbonate, barium sulfate, magnesium carbonate, silica, talc, clay, kaolin, barium sulfate, alumina white, titanium oxide, magnesium oxide, barium oxide, aluminum oxide (alumina), bismuth oxide, zirconium oxide, zinc oxide, aluminum hydroxide, barium zirconate, calcium zirconate, calcium titanate, barium titanate, and strontium titanate.

Among the above-described light-scattering fine particles (B), titanium oxide, aluminum oxide (alumina), zirconium oxide, zinc oxide, calcium carbonate, barium sulfate, and silica are preferred from the viewpoint of availability, light-scattering performance, or the like. One type of the light-scattering fine particles (B) may be used individually or two or more types may be used in combination.

The particle diameters of the light-scattering fine particles (B) are not particularly limited as long as the objective of the present invention is not impaired. The particle diameters of the light-scattering fine particles may be 0.05 μm or more, 0.2 μm or more, or 0.3 μm or more as the volume-average particle diameters. The volume-average particle

diameter of the light-scattering fine particles (B) may be 1.0 μm or less, 0.6 μm or less, or 0.4 μm or less.

The content of the light-scattering fine particles (B) in the wavelength conversion film is as described above.

<Base (Ca) and base component (Cb)>

The wavelength conversion film commonly contains a base (Ca) that supports the quantum dots (A) or the quantum dot clusters of the light-scattering fine particles (B) or the quantum dots (A) in the film. The base (Ca), which is a material constituting the matrix of the wavelength conversion film, is not particularly limited as long as it is a translucent material. As the base (Ca), various transparent resins can be used. As a base component (Cb) that gives the base (Ca), typically, a resin material consisting of a polymer compound or a cured product of a reactive low-molecular-weight compound that forms crosslinking in response to heat or light exposure to give a polymer compound is used. The resin material used as the base component (Cb) may have a functional group that forms crosslinking in response to heat or light exposure. In other words, a thermosetting or photocurable resin may also be used as the base component (Cb). Further, the resin material used as the base component (Cb) may be a resin that is cured by baking. The base component (Ca) may be a material formed by a reaction in which only the base component (Cb) gets involved or may contain a material formed by a reaction between the base component (Cb) and a curing agent (D) described later.

It is preferable that the base component (Cb) be a thermosetting or photocurable base component because a shaped body excellent in physical properties such as hardness and tensile elongation tends to be formed. Next, specific examples of the base component (Cb) are described in order.

[Resin material]

A non-curable resin material used as the base component (Cb) is described. The non-curable resin material is not particularly limited as long as it is a non-curable resin material capable of giving the resulting wavelength conversion film forming composition with shapability such as film formation properties. Specific examples of the resin material include polyacetal resin, polyamide resin, polycarbonate resin, polyester resin (polybutylene terephthalate, polyethylene terephthalate, polyarylate and the like), FR-AS resin, FR-ABS resin, AS resin, ABS resin, polyphenylene oxide resin, polyphenylene sulfide resin, polysulfone resin, polyethersulfone resin, polyetheretherketone resin, fluorine-based resin, polyimide resin, polyamide imide resin, polyamide bismaleimide resin, polyetherimide resin, polybenzoxazole resin, polybenzothiazole resin, polybenzimidazole resin, silicone resin, BT resin, polymethylpentene, ultra high molecular weight polyethylene, FR-polypropylene, (meta)acrylic resin (polymethylmethacrylate and the like), polystyrene, and the like. Two or more of these resin materials may be used in combination.

The resin material described above is preferably dissolved in the wavelength conversion film forming composition. The resin material described above may be a suspension liquid such as a latex as long as the objects of the present invention are not inhibited.

(Alkali-soluble resin)

In a case where the wavelength conversion film forming composition is a negative-type composition, the composition preferably contains an alkali-soluble resin. The alkali-soluble resin is not particularly limited, and conventionally known alkali-soluble resins can be used. This alkali-soluble resin may be a resin having an ethylenically unsaturated group or a resin having no ethylenically unsaturated group. It should be noted that, in the present specification, the alkali-soluble resin refers to a resin that dissolves 0.01 μm or more in film thickness when a resin film having a film thickness of 1 μm is formed on a substrate using a resin solution having a resin concentration of 20% by mass (solvent: propylene glycol monomethyl ether acetate) and immersed in an aqueous solution of 2.38% by mass of tetramethylammonium hydroxide (TMAH) for 1 minute.

As the alkali-soluble resin having an ethylenically unsaturated group, for example, a resin obtained by further reacting a reaction product of an epoxy compound and an unsaturated carboxylic acid with a polybasic acid anhydride can be used. Such a resin is preferably a compound represented by the formula (c7) shown later, a resin having a constituent unit derived from a reaction product obtained by reacting acrylic acid with a constituent unit derived from glycidyl methacrylate described later, or a resin having a constituent unit derived from a compound obtained by reacting a polybasic acid anhydride with the reaction product.

Specific examples of the polybasic acid anhydride include maleic anhydride, succinic anhydride, itaconic anhydride, phthalic anhydride, tetrahydrophthalic anhydride, hexahydrophthalic anhydride, methylhexahydrophthalic anhydride, methyltetrahydrophthalic anhydride, trimellitic anhydride, pyromellitic anhydride, benzophenone tetracarboxylic dianhydride, 3-methylhexahydrophthalic anhydride, 4-methylhexahydrophthalic anhydride, 3-ethylhexahydrophthalic anhydride, 4-ethylhexahydrophthalic anhydride, tetrahydrophthalic anhydride, 3-methyltetrahydrophthalic anhydride, 4-methyltetrahydrophthalic anhydride, 3-ethyltetrahydrophthalic anhydride, 4-ethyltetrahydrophthalic anhydride, and the

like.

The alkali-soluble resin having an ethylenically unsaturated group can also be obtained by reacting an unsaturated carboxylic acid with an acrylic resin having a constituent unit having an epoxy group and then further reacting a polybasic acid anhydride therewith. As a specific example, when acrylic acid is reacted with a constituent unit derived from glycidyl methacrylate, a constituent unit having a hydroxyl group shown in the following reaction formula is formed. When a polybasic acid anhydride such as tetrahydrophthalic acid is reacted with such a constituent unit having a hydroxyl group, a constituent unit having a carboxy group and giving alkali solubility to the resin is generated.

[Chem. 1]

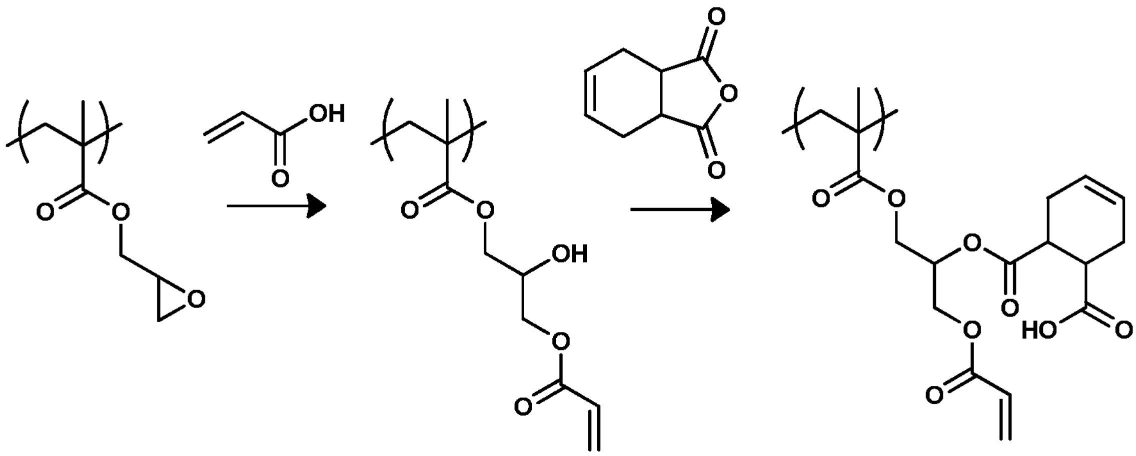

In addition, as the alkali-soluble resin having an ethylenically unsaturated group, a polyester (meth)acrylate obtained by subjecting a polyester prepolymer derived from condensation between a polyhydric alcohol and a monobasic acid or a polybasic acid to reaction with (meth)acrylic acid; a polyurethane (meth)acrylate obtained by subjecting a polyol and a compound having two isocyanate groups to reaction and then subjecting the resulting product to reaction with (meth)acrylic acid; an epoxy (meth)acrylate resin obtained by subjecting an epoxy resin such as a bisphenol A type epoxy resin, a bisphenol F type epoxy resin, a bisphenol S type epoxy resin, a phenol or cresol novolac type epoxy resin, a resole type epoxy resin, a triphenol methane type epoxy resin, a polycarboxylic acid polyglycidyl ester, a polyol polyglycidyl ester, an aliphatic or alicyclic epoxy resin, an amine epoxy resin, or a dihydroxybenzene type epoxy resin to reaction with (meth)acrylic acid; or the like can also be used. It should be noted that, in the present specification, "(meth)acrylic acid" means both acrylic acid and methacrylic acid. Similarly, "(meth) acrylate" means both acrylate and methacrylate.

On the other hand, as the alkali-soluble resin having no ethylenically unsaturated group, a resin obtained by copolymerizing an unsaturated carboxylic acid and other unsaturated compound can be used. As the other unsaturated compound, at least one selected from an epoxy group-containing unsaturated compound and an alicyclic group-containing unsaturated compound is preferably used.

Examples of the unsaturated carboxylic acid include monocarboxylic acids such as (meth)acrylic acid and crotonic acid; dicarboxylic acids such as maleic acid, fumaric acid, citraconic acid, mesaconic acid, and itaconic acid; anhydrides of these dicarboxylic acids; and the like. Among these, (meth)acrylic acid and maleic anhydride are preferable from the viewpoint of copolymerization reactivity, the alkali solubility of a resin to be obtained, availability, and the like. These unsaturated carboxylic acids may be used individually or in combination of two or more.

Examples of the epoxy group-containing unsaturated compound include an epoxy group-containing unsaturated compound having no alicyclic group and an epoxy group-containing unsaturated compound having an alicyclic group. Examples of the epoxy group-containing unsaturated compound having an alicyclic group include compounds represented by the formulas (c5-1) to (c5-15) shown later. As the epoxy group-containing unsaturated compound having no alicyclic group, a (meth)acrylic acid ester including an aromatic group and having an epoxy group or an aliphatic (meth)acrylic acid ester having a chain-like aliphatic epoxy group, which will be described later regarding the epoxy group-containing resin, can be preferably used.

The alicyclic group-containing unsaturated compound is not particularly limited as long as it is an unsaturated compound having an alicyclic group. The alicyclic group may be either monocyclic or polycyclic. Examples of the monocyclic alicyclic group include a cyclopentyl group, a cyclohexyl group, and the like. Examples of the polycyclic alicyclic group include an adamantyl group, a norbornyl group, an isobornyl group, a tricyclononyl group, a tricyclodecyl group,

a tetracyclododecyl group, and the like. Specific examples of the alicyclic group-containing unsaturated compound include compounds represented by the formulas (c6-1) to (c6-8) shown later.

It is also preferable to further polymerize a compound other than the above-described substances into the unsaturated carboxylic acid. Examples of the other compound include (meth)acrylic acid esters, (meth)acrylamides, allyl compounds, vinyl ethers, vinyl esters, styrenes, maleimides, and the like. These compounds can be used individually, or two or more thereof can be used in combination.

Examples of the (meth)acrylic acid esters include linear or branched alkyl (meth)acrylates such as methyl (meth)acrylate, ethyl (meth)acrylate, propyl (meth)acrylate, amyl (meth)acrylate, and t-octyl (meth)acrylate; chloroethyl (meth)acrylate, 2,2-dimethylhydroxypropyl (meth)acrylate, 2-hydroxyethyl (meth)acrylate, trimethylolpropane mono(meth)acrylate, benzyl (meth)acrylate, furfuryl (meth)acrylate; and the like.

Specific examples of the (meth)acrylamides, the allyl compounds, the vinyl ethers, the vinyl esters, the styrenes, and the maleimides will be described later in detail as monomers giving an epoxy group-containing resin.

In addition, a copolymer having at least a constituent unit having a polymerizable site with a photocurable low-molecular-weight compound described later together with a constituent unit derived from the unsaturated carboxylic acid or a copolymer having at least a constituent unit derived from the unsaturated carboxylic acid, a constituent unit derived from an epoxy group-containing unsaturated compound, and a constituent unit having a polymerizable site with a photopolymerizable compound described later can also be suitably used as the alkali-soluble resin.

The above-described copolymer having a constituent unit having a polymerizable site with a photocurable low-molecular-weight compound may further have one or more constituent units derived from the above-described (meth)acrylic acid esters, (meth)acrylamides, allyl compounds, vinyl ethers, vinyl esters, styrenes, maleimides, and the like.

The constituent unit having a polymerizable site with a photocurable low-molecular-weight compound is preferably a constituent unit having an ethylenically unsaturated group as the polymerizable site with a photocurable low-molecular-weight compound. A copolymer having such a constituent unit can be prepared by reacting at least part of carboxyl groups included in a homopolymer of unsaturated carboxylic acid and an epoxy group-containing unsaturated compound. In addition, the copolymer having a constituent unit having a polymerizable site with a photocurable low-molecular-weight compound can also be prepared by reacting at least part of epoxy groups in a copolymer having a constituent unit derived from unsaturated carboxylic acid and a constituent unit derived from an epoxy group-containing unsaturated compound with unsaturated carboxylic acid.

The proportion of the constituent unit derived from the unsaturated carboxylic acid in this alkali-soluble resin is preferably 3% by mass or more and 25% by mass or less and more preferably 5% by mass or more and 25% by mass or less. In addition, the proportion of the constituent unit derived from the epoxy group-containing unsaturated compound is preferably 30% by mass or more and 95% by mass or less and more preferably 50% by mass or more and 90% by mass or less. In addition, the proportion of the constituent unit derived from the alicyclic group-containing unsaturated compound is preferably 1% by mass or more and 30% by mass or less, more preferably 3% by mass or more and 25% by mass or less, and even more preferably 5% by mass or more and 20% by mass or less. When the proportions are set within the above-described ranges, the adhesion to the substrate and strength of the wavelength conversion film can be enhanced while making the alkali solubility of a resin to be obtained appropriate.

The mass-average molecular weight of the alkali-soluble resin is preferably 1,000 or more and 40,000 or less and more preferably 2,000 or more and 30,000 or less. When the mass-average molecular weight is set within the above-described range, sufficient heat resistance and film strength can be obtained while obtaining favorable developability.

The content of the alkali-soluble resin is preferably 5% by mass or more and 80% by mass or less and more preferably 15% by mass or more and 50% by mass or less relative to the solid content of the wavelength conversion film forming composition. When the content is set within the above-described range, the developability tends to be easily balanced.

[Thermosetting low-molecular-weight compound]

Examples of the thermosetting low-molecular-weight compound as the base component (Cb) that forms crosslinking in response to heat to give a polymer compound include an epoxy compound or an oxetane compound. When the composition including an epoxy compound or an oxetane compound as the base component (Cb) is heated to a predetermined temperature or higher, epoxy groups or oxetanyl groups of the epoxy compound or the oxetane compound crosslink with each other and thereby the resulting cured film becomes excellent in heat resistance and mechanical properties.

The epoxy compound or the oxetane compound is basically used as the thermosetting base component (Cb). In the case in which the epoxy compound or the oxetane compound is used in combination with an onium salt as a curing agent, the epoxy compound or the oxetane compound may be photo-cured.

(Epoxy compound)

The epoxy compound is not particularly limited as long as the epoxy compound is curable by heating alone, or by the action of a thermosensitive curing agent or a photosensitive curing agent. The epoxy compound preferably has two or more epoxy groups. Moreover, the epoxy compound preferably includes a cyclic structure other than the oxirane ring. The use of the epoxy compound having such a structure tends to form a wavelength conversion film that contains the quantum dots (A) in a favorable dispersion state and has a favorable fluorescence efficiency.

For the epoxy compound having a cyclic structure, the cyclic structure included in the epoxy compound is not particularly limited. The cyclic structure can be a cyclic structure including carbon as a ring-forming element such as a hydrocarbon ring structure or a heterocyclic ring structure, or can be a cyclic structure not including carbon as a ring-forming element such as a cyclic siloxane structure. Examples of heteroatoms which can be included in the heterocyclic ring structure include a nitrogen atom, an oxygen atom, a sulfur atom, a selenium atom, a silicon atom and the like. The cyclic structure can be a monocyclic structure or a polycyclic structure. The cyclic structure including carbon as a ring-forming element can be an aromatic ring structure, or an aliphatic ring structure, or a polycyclic structure in which an aromatic ring and an aliphatic ring are condensed.

Examples of rings to give the aromatic ring structure or the ring structure including an aromatic ring include a benzene ring, a naphthalene ring, an anthracene ring, a phenanthrene ring, a tetralin ring, an acenaphthene ring and a fluorene ring, and the like. Examples of rings to give the aliphatic ring structure include a monocycloalkane ring, a bicycloalkane ring, a tricycloalkane ring, a tetracycloalkane ring, and the like. Specific examples thereof include monocycloalkane rings such as a cyclopentane ring, a cyclohexane ring, a cycloheptane ring and a cyclooctane ring, an adamantane ring, a norbornane ring, an isobornane ring, a tricyclodecane ring and a tetracyclododecane ring.

Examples of epoxy compounds which can be suitably used and are widely used include bifunctional epoxy resins such as bisphenol A epoxy resin, bisphenol F epoxy resin, bisphenol S epoxy resin, bisphenol AD epoxy resin, naphthalene epoxy resin and biphenyl epoxy resin; epoxy group-containing fluorene compounds such as 9,9-bis[4-(glycidyloxy)phenyl]-9H-fluorene, 9,9-bis[4-[2-(glycidyloxy)ethoxy]phenyl]-9H-fluorene, 9, 9-bis[4-[2-(glycidyloxy)ethyl]phenyl]-9H-fluorene, 9,9-bis[4-(glycidyloxy)-3-methylphenyl]-9H-fluorene, 9,9-bis[4-(glycidyloxy)-3,5-dimethylphenyl]-9H-fluorene and 9,9-bis(6-glycidyloxynaphthalen-2-yl)-9H-fluorene; glycidylamine epoxy resins such as tetraglycidylaminodiphenylmethane, triglycidyl-p-aminophenol, tetraglycidyl methaxylylenediamine and tetraglycidyl bisaminomethylcyclohexane; trifunctional epoxy resins such as phloroglycinol triglycidyl ether, trihydroxybiphenyl triglycidyl ether, trihydroxyphenylmethane triglycidyl ether, 2-[4-(2,3-epoxypropoxy)phenyl]-2-[4-[1,1-bis[4-(2,3-epoxypropoxy)phenyl]ethyl]phenyl]propane and 1,3-bis[4-[1-[4-(2,3-epoxypropoxy)phenyl]-1-[4-[1-[4-(2,3-epoxypropoxy)phenyl]-1-methylethyl]phenyl]ethyl]phenoxy]-2-propanol; tetrafunctional epoxy resins such as tetrahydroxyphenylethane tetraglycidyl ether, tetraglycidylbenzophenone, bisresorcinol tetraglycidyl ether and tetraglycidoxybiphenyl, and a 1,2-epoxy-4-(2-oxiranyl)cyclohexane adduct of 2,2-bis(hydroxymethyl)-1-butanol. The 1,2-epoxy-4-(2-oxiranyl)cyclohexane adduct of 2,2-bis(hydroxymethyl)-1-butanol is commercially available as EHPE-3150 (manufactured by Daicel Corporation).

In addition, an oligomer or polymer type polyfunctional epoxy compound can be preferably used. Typical examples thereof include a phenol novolac epoxy compound, a brominated phenol novolac epoxy compound, an orthocresol novolac epoxy compound, a xylenol novolac epoxy compound, a naphthol novolac epoxy compound, a bisphenol A novolac epoxy compound, a bisphenol AD novolac epoxy compound, an epoxylated product of dicyclopentadiene phenol resin, an epoxylated product of naphthalene phenol resin, and the like.

In addition, a compound represented by the following formula (C1) is also given as a preferred example of the oligomer or polymer type polyfunctional epoxy compounds.

[Chem. 2]

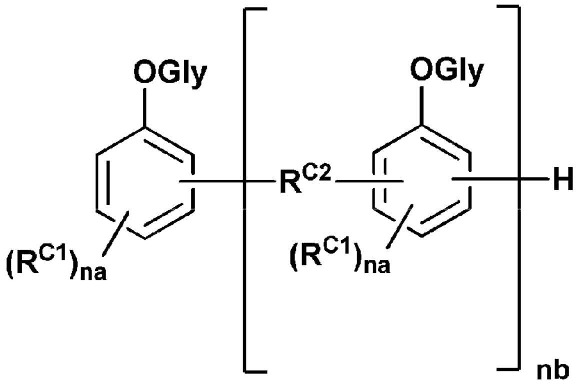

(C1)

In the formula (C1), OGly is a glycidyloxy group. $R^{C1}$ is a halogen atom or a monovalent group having 1 or more and 8 or less carbon atoms. na is an integer of 1 or more and 4 or less. nb is the number of repetitions of the unit in the brackets. Adjacent two $R^{C1}$ on the benzene ring may be bonded to each other to form a ring when na is an integer of 2 or more. $R^{C2}$ is a divalent aliphatic cyclic group or a group represented by the following formula (C1-1).

[Chem. 3]

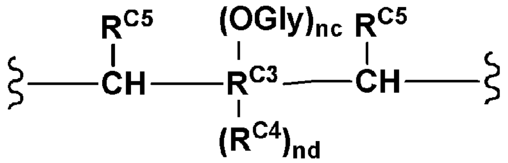

(C1-1)

In the formula (C1-1), OGly is a glycidyloxy group. $R^{C3}$ is an aromatic hydrocarbon group. $R^{C4}$ is a halogen atom or an alkyl group having 1 or more and 4 or less carbon atoms. nc is 0 or 1. nd is an integer of 0 or more and 8 or less. $R^{C5}$ is a hydrogen atom or a group represented by the following formula (C1-2).

[Chem. 4]

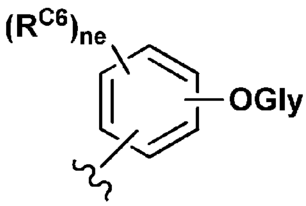

(C1-2)

In the formula (C1-2), OGly is a glycidyloxy group. $R^{C6}$ is a halogen atom, an alkyl group having 1 or more and 4 or less carbon atoms or a phenyl group. ne is an integer of 0 or more and 4 or less.

The epoxy compound represented by the above formula (C1) preferably has an average molecular weight of 800 or more. A cured product with good water resistance and strength is easily formed by using a compound having such an average molecular weight as the epoxy compound represented by the formula (C1). The average molecular weight of the epoxy compound represented by the formula (C1) is preferably 1,000 or more, more preferably 1,200 or more, and particularly preferably 1,500 or more. In addition, the average molecular weight of the epoxy compound represented by the formula (C1) is preferably 50,000 or less and more preferably 20,000 or less.

In the formula (C1), $R^{C1}$ is a halogen atom or a monovalent group having 1 or more and 8 or less carbon atoms. Specific examples of the monovalent group having 1 or more and 8 or less carbon atoms include an alkyl group, an

alkoxy group, a phenoxy group, an aliphatic acyl group, an aliphatic acyloxy group, a benzoyl group, a benzyl group, a phenethyl group and an unsaturated aliphatic hydrocarbon group. The alkyl group, alkoxy group, aliphatic acyl group, aliphatic acyloxy group and unsaturated aliphatic hydrocarbon group can be liner or branched.

Suitable examples of the halogen atom as $R^{C1}$ include a fluorine atom, a chlorine atom, a bromine atom and an iodine atom. Suitable examples of the alkyl group as $R^{C1}$ are preferably a methyl group, an ethyl group, an n-propyl group, an isopropyl group, an n-butyl group, an isobutyl group, a sec-butyl group and a tert-butyl group, and more preferably a methyl group and an ethyl group.

When $R^{C1}$ is a monovalent group having 1 or more and 8 or less carbon atoms, the monovalent group is preferably an alkyl group and an alkoxy group. Specific examples of the alkyl group include a methyl group, an ethyl group, an n-propyl group, an isopropyl group, an n-butyl group, an isobutyl group, a sec-butyl group, a tert-butyl group, an n-pentyl group, an n-hexyl group, an n-heptyl group, an n-octyl group and a 2-ethylhexyl group. Specific examples of the alkoxy group include a methoxy group, an ethoxy group, an n-propyloxy group, an isopropyloxy group, an n-butyloxy group, an isobutyloxy group, a sec-butyloxy group, a tert-butyloxy group, an n-pentyloxy group, an n-hexyloxy group, an n-heptyloxy group, an n-octyloxy group and a 2-ethylhexyloxy group.

When na is an integer of 2 or more and 4 or less, adjacent two $R^{C1}$ on the benzene ring of a plurality of $R^{C1}$ may be bonded to each other to form a ring. The ring formed by bonding two $R^{C1}$ can be an aromatic ring or an aliphatic ring, or can be a hydrocarbon ring or a heterocyclic ring. When the ring formed by bonding two $R^{C1}$ is a heterocyclic ring, examples of heteroatoms included in the ring include N, O, S, Se, and the like. Suitable examples of the group formed together with a benzene ring by bonding two $R^{C1}$ include a naphthalene ring and a tetralin ring.

In the formula (C1), the divalent aliphatic cyclic group as $R^{C2}$ is not particularly limited, and can be a polycyclic group of two or more monocyclic groups. It should be noted that the divalent aliphatic cyclic group does not commonly include an epoxy group in the structure, and it is preferred that an epoxy group not be included. Specific examples of the divalent aliphatic cyclic group are a group in which two hydrogen atoms are removed from monocycloalkane, or polycycloalkane such as bicycloalkane, tricycloalkane or tetracycloalkane, and the like. More specific examples thereof include a group in which two hydrogen atoms are removed from monocycloalkane such as cyclopentane or cyclohexane, or polycycloalkane such as adamantane, norbornane, isobornane, tricyclodecane or tetracyclododecane, and the like. The number of carbon atoms in the divalent aliphatic cyclic group is preferably 3 or more and 50 or less, more preferably 3 or more and 30 or less, and particularly preferably 3 or more and 20 or less. The number is most preferably 3 or more and 15 or less.

Specific examples of the divalent aliphatic cyclic group as $R^{C2}$ include groups shown below.

[Chem. 5]

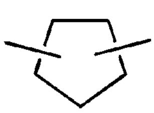
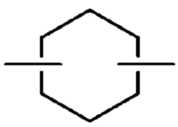
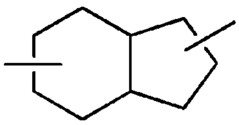
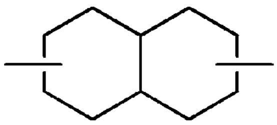
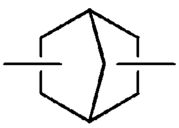
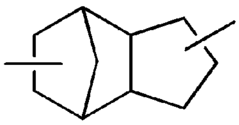
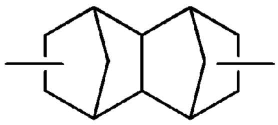

$R^{C3}$ is an aromatic hydrocarbon group. The number of valences in the aromatic hydrocarbon group as $R^{C3}$ is 2 + nc + nd. The aromatic hydrocarbon group is not particularly limited. An aromatic hydrocarbon ring forming the aromatic hydrocarbon group is typically a six-membered aromatic hydrocarbon ring (benzene ring) or a ring in which two or more benzene rings are condensed with each other or bonded through a single bond. Specific suitable examples of the aromatic hydrocarbon ring forming the aromatic hydrocarbon group are benzene, naphthalene, anthracene, phenanthrene, biphenyl and terphenyl. Groups obtained by removing the 2 + nc + nd number of hydrogen atoms from these aromatic hydrocarbon rings are suitable for the aromatic hydrocarbon group as $R^{C3}$.

In the group represented by the formula (C1-1), nc is 0 or 1. That is, a glycidyloxy group may not be bonded to $R^{C3}$, which is an aromatic hydrocarbon group, or one glycidyloxy group may be bonded thereto.

In the group represented by the formula (C1-1), $R^{C4}$ is a halogen atom or an alkyl group having 1 or more and 4 or less carbon atoms, and d is an integer of 0 or more and 8 or less. That is, $R^{C4}$ is a substituent other than the glycidyloxy group on $R^{C3}$, which is an aromatic hydrocarbon group, and the number of substituents on $R^{C3}$ is 0 or more

and 8 or less. nd is preferably an integer of 0 or more and 4 or less, more preferably an integer of 0 or more and 2 or less, and particularly preferably 0 or 1. Suitable examples of the halogen atom as $R^{C4}$ include a fluorine atom, a chlorine atom, a bromine atom and an iodine atom. Suitable examples of the alkyl group as $R^{C4}$ are preferably a methyl group, an ethyl group, an n-propyl group, an isopropyl group, an n-butyl group, an isobutyl group, a sec-butyl group and a tert-butyl group, and more preferably a methyl group and an ethyl group.

In the group represented by the formula (C1-1), $R^{C5}$ is a hydrogen atom or a group represented by the above-described formula (C1-2). $R^{C6}$ in the formula (C1-2) is a halogen atom, an alkyl group having 1 or more and 4 or less carbon atoms, or a phenyl group. Specific examples of the halogen atom and the alkyl group having 1 or more and 4 or less carbon atoms are the same as those of $R^{C4}$.

In the epoxy compound represented by the formula (C1) described above, it is preferred that $R^{C2}$ be a divalent aliphatic cyclic group or a divalent group represented by the above-described formula (C1-1) in which nc is 0 and $R^{C5}$ is a hydrogen atom. In this case, because a proper distance exists between a plurality of epoxy groups included in the epoxy compound represented by the formula (C1), a cured product with better water resistance is easily formed.

The epoxy compound represented by the formula (C1) can be acquired as a commercial product. Specific examples of the commercial product include NC-series and XD-series manufactured by Nippon Kayaku Co., Ltd. and the like. In addition, equivalent products having a specific structure can be acquired from DIC Corporation and Showa Denko K.K.

Suitable examples of chemical structures of the epoxy compound represented by the formula (C1) are shown below. In the following formulas, OGly represents a glycidyloxy group, and p0 represents the number of repetitions of the unit in brackets.

[Chem. 6]

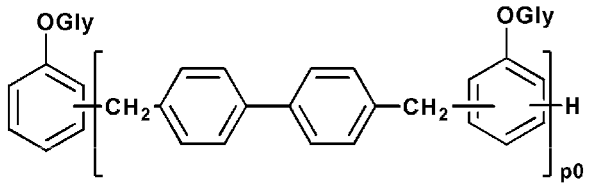

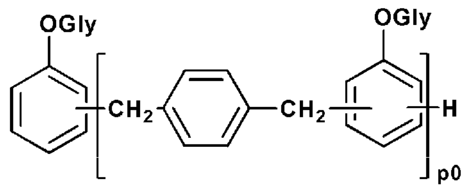

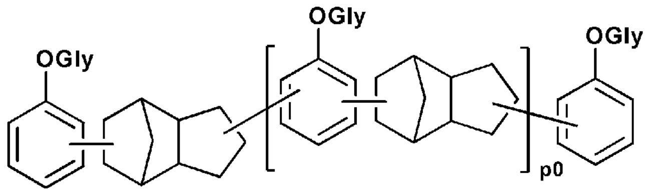

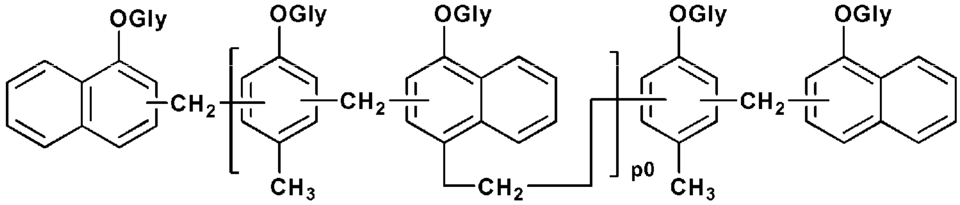

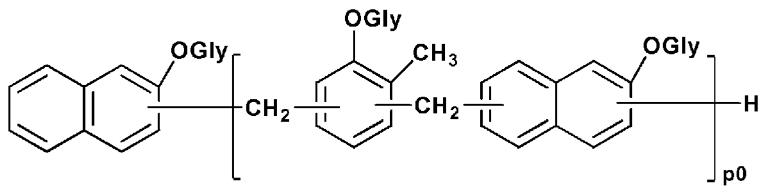

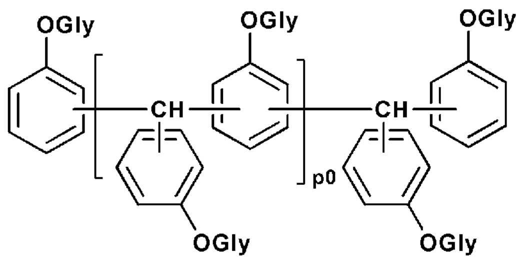
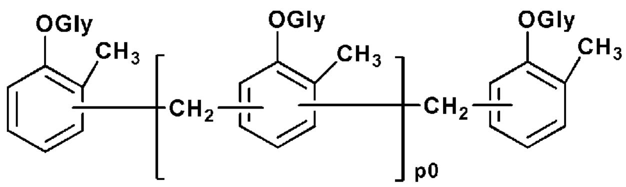

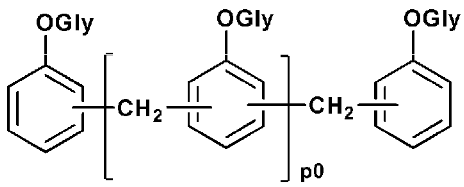
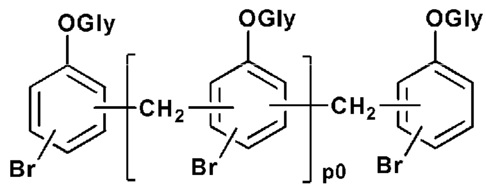

Other examples of suitable epoxy compounds include a polyfunctional alicyclic epoxy compound having an alicyclic epoxy group. Specific examples of the alicyclic epoxy compound include 2-(3,4-epoxycyclohexyl-5,5-spiro-3,4-epoxy)cyclohexane-meta-dioxane, bis(3,4-epoxycyclohexylmethyl)adipate, bis(3,4-epoxy-6-methylcyclohexylmethyl)adipate, 3,4-epoxy-6-methylcyclohexyl-3',4'-epoxy-6'-methylcyclohexanecarboxylate, ε-caprolactone-modified 3,4-epoxycyclohexylmethyl-3',4'-epoxycyclohexanecarboxylate, trimethylcaprolactone-modified 3,4-epoxycyclohexylmethyl-3' ,4'-epoxycyclohexanecarboxylate, β-methyl-δ-valerolactone-modified 3,4-epoxycyclohexylmethyl-3',4'-epoxycyclohexanecarboxylate, methylenebis(3,4-epoxycyclohexane), di(3,4-epoxycyclohexylmethyl) ether of ethylene glycol, ethylenebis(3,4-epoxycyclohexanecarboxylate), a polyfunctional epoxy compound having a tricyclodecene oxide group, and compounds represented by the following formulas (c1-1) to (c1-5). These alicyclic epoxy compounds can be used individually or two or more alicyclic epoxy compounds can be used in combination.

[Chem. 7]

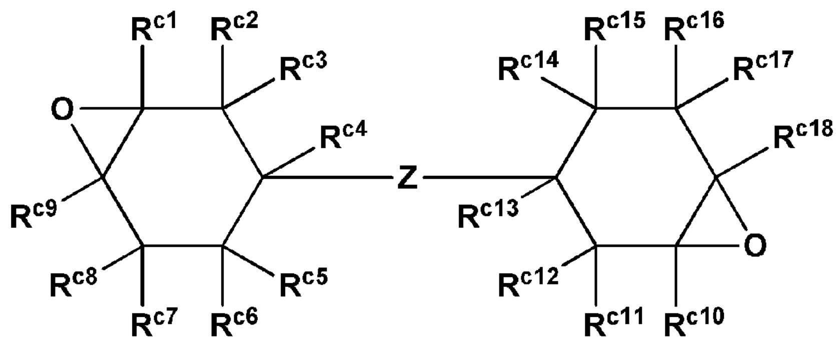

**(c1-1)**

In the formula (c1-1), Z represents a single bond or a linking group (a divalent group having one or more atoms). $R^{c1}$ to $R^{c18}$ are each independently a group selected from the group consisting of a hydrogen atom, a halogen atom and an organic group.

Examples of the linking group Z can include a divalent group selected form the group consisting of a divalent hydrocarbon group, -O-, -O-CO-, -S-, -SO-, $-SO_2-$, $-CBr_2-$, - $C(CBr_3)_2-$, $-C(CF_3)_2-$ and $-R^{c19}-O-CO-$, and a group formed by bonding a plural of these divalent groups, and the like.

Examples of the divalent hydrocarbon group as a linking group Z can include a linear or branched alkylene group having 1 or more and 18 or less carbon atoms, and a divalent alicyclic hydrocarbon group, and the like. Examples of the linear or branched alkylene group having 1 or more and 18 or less carbon atoms can include a methylene group, a methylmethylene group, a dimethylmethylene group, a dimethylene group, a trimethylene group, and the like. Examples of the above divalent alicyclic hydrocarbon group can include cycloalkylene groups (including cycloalkylidene groups) such as a 1,2-cyclopentylene group, a 1,3-cyclopentylene group, a cyclopentylidene group, a 1,2-cyclohexylene group, a 1,3-cyclohexylene group, a 1,4-cyclohexylene group and cyclohexylidene, and the like.

$R^{c19}$ is an alkylene group having 1 or more and 8 or less carbon atoms and preferably a methylene group or an ethylene group.

[Chem. 8]

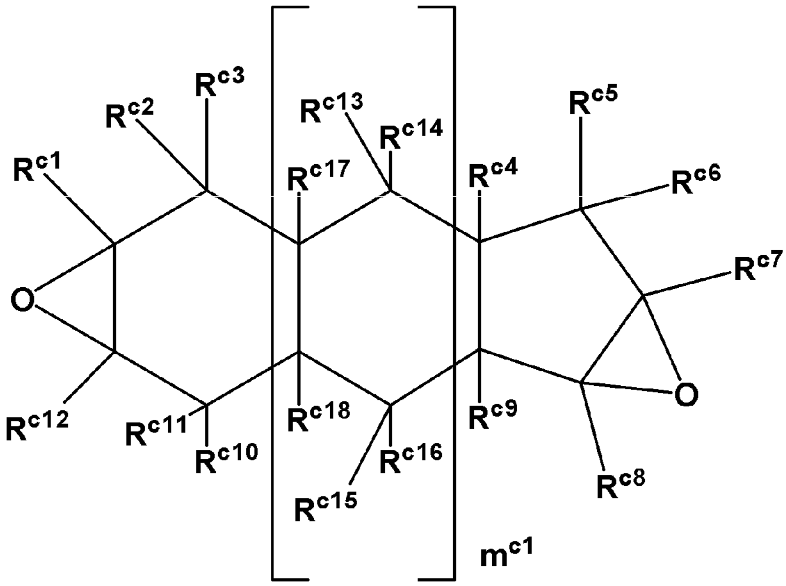

(c1-2)

In the formula (c1-2), $R^{c1}$ to $R^{c18}$ are a group selected from the group consisting of a hydrogen atom, a halogen atom and an organic group. $R^{c2}$ and $R^{c10}$ may be bonded to each other to form a ring. $R^{c13}$ and $R^{c16}$ may be bonded to each other to form a ring. $m^{c1}$ is 0 or 1.

[Chem. 9]

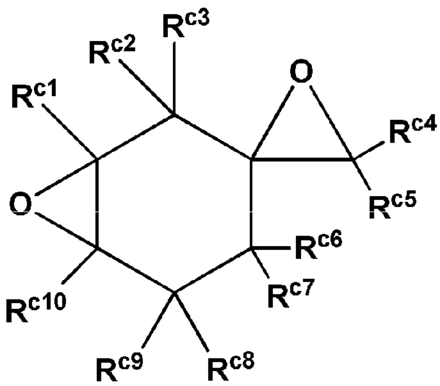

(c1-3)

In the formula (c1-3), $R^{c1}$ to $R^{c10}$ are a group selected from the group consisting of a hydrogen atom, a halogen atom and an organic group. $R^{c2}$ and $R^{c8}$ may be bonded to each other to form a ring.

[Chem. 10]

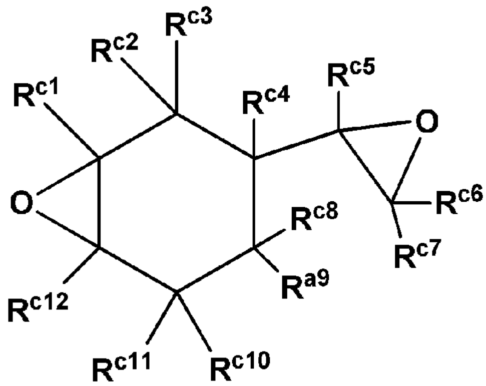

(c1-4)

In the formula (c1-4), $R^{c1}$ to $R^{c12}$ are a group selected from the group consisting of a hydrogen atom, a halogen atom and an organic group. $R^{c2}$ and $R^{c10}$ may be bonded to each other to form a ring.

[Chem. 11]

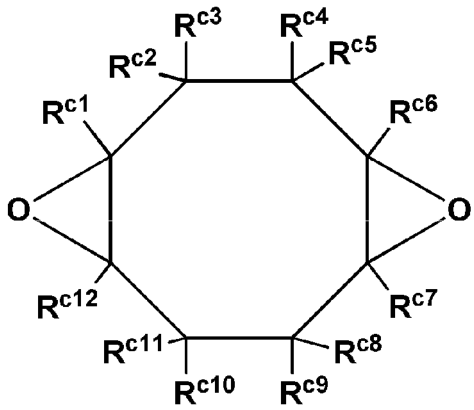

(c1-5)

In the formula (c1-5), $R^{c1}$ to $R^{c12}$ are a group selected from the group consisting of a hydrogen atom, a halogen atom and an organic group.

In the formulas (c1-1) to (c1-5), when $R^{c1}$ to $R^{c18}$ are an organic group, the organic group is not particularly limited as long as the object of the present invention is not inhibited, and the organic group may be a hydrocarbon group, or a group including a carbon atom and a halogen atom, or a group including a heteroatom such as a halogen atom, an oxygen atom, a sulfur atom, a nitrogen atom or a silicon atom, together with a carbon atom and a hydrogen atom. Examples of the halogen atom include a chlorine atom, a bromine atom, an iodine atom and a fluorine atom, and the like.

The organic group is preferably a hydrocarbon group, a group including a carbon atom, a hydrogen atom and an oxygen atom, a halogenated hydrocarbon group, a group including a carbon atom, an oxygen atom and a halogen atom, and a group including a carbon atom, a hydrogen atom, an oxygen atom and a halogen atom. When the organic group is a hydrocarbon group, the hydrocarbon group may be an aromatic hydrocarbon group, or an aliphatic hydrocarbon group, or a group including an aromatic skeleton and an aliphatic skeleton. The number of carbon atoms of the organic group is preferably 1 or more and 20 or less, more preferably 1 or more and 10 or less, and particularly preferably 1 or more and 5 or less.

Specific examples of the hydrocarbon group include chain alkyl groups such as a methyl group, an ethyl group, an n-propyl group, an isopropyl group, an n-butyl group, an isobutyl group, a sec-butyl group, a tert-butyl group, an n-pentyl group, an n-hexyl group, an n-heptyl group, an n-octyl group, a 2-ethylhexyl group, an n-nonyl group, an n-decyl group, an n-undecyl group, an n-tridecyl group, an n-tetradecyl group, an n-pentadecyl group, an n-hexadecyl group, an n-heptadecyl group, an n-octadecyl group, an n-nonadecyl group and an n-icosyl group; chain alkenyl groups such as a vinyl group, a 1-propenyl group, a 2-n-propenyl group (an allyl group), a 1-n-butenyl group, a 2-n-butenyl group

and a 3-n-butenyl group; cycloalkyl groups such as a cyclopropyl group, a cyclobutyl group, a cyclopentyl group, a cyclohexyl group and a cycloheptyl group; aryl groups such as a phenyl group, an o-tolyl group, an m-tolyl group, a p-tolyl group, an α-naphthyl group, a β-naphthyl group, a biphenyl-4-yl group, a biphenyl-3-yl group, a biphenyl-2-yl group, an anthryl group and a phenanthryl group; and aralkyl groups such as a benzyl group, a phenethyl group, an α-naphthylmethyl group, a β-naphthylmethyl group, an α-naphthylethyl group and a β-naphthylethyl group.

Specific examples of the halogenated hydrocarbon group are halogenated chain alkyl groups such as a chloromethyl group, a dichloromethyl group, a trichloromethyl group, a bromomethyl group, a dibromomethyl group, a tribromomethyl group, a fluoromethyl group, a difluoromethyl group, a trifluoromethyl group, a 2,2,2-trifluoroethyl group, a pentafluoroethyl group, a heptafluoropropyl group, a perfluorobutyl group and a perfluoropentyl group, a perfluorohexyl group, a perfluoroheptyl group, a perfluorooctyl group, a perfluorononyl group and a perfluorodecyl group; halogenated cycloalkyl groups such as a 2-chlorocyclohexyl group, a 3-chlorocyclohexyl group, a 4-chlorocyclohexyl group, a 2,4-dichlorocyclohexyl group, a 2-bromocyclohexyl group, a 3-bromocyclohexyl group and a 4-bromocyclohexyl group; halogenated aryl groups such as a 2-chlorophenyl group, a 3-chlorophenyl group, a 4-chlorophenyl group, a 2,3-dichlorophenyl group, a 2,4-dichlorophenyl group, a 2,5-dichlorophenyl group, a 2,6-dichlorophenyl group, a 3,4-dichlorophenyl group, a 3,5-dichlorophenyl group, a 2-bromophenyl group, a 3-bromophenyl group, a 4-bromophenyl group, a 2-fluorophenyl group, a 3-fluorophenyl group and a 4-fluorophenyl group; and halogenated aralkyl groups such as a 2-chlorophenylmethyl group, a 3-chlorophenylmethyl group, a 4-chlorophenylmethyl group, a 2-bromophenylmethyl group, a 3-bromophenylmethyl group, a 4-bromophenylmethyl group, a 2-fluorophenylmethyl group, a 3-fluorophenylmethyl group and a 4-fluorophenylmethyl group.

Specific examples of the group including a carbon atom, a hydrogen atom and an oxygen atom are hydroxy chain alkyl groups such as a hydroxymethyl group, a 2-hydroxyethyl group, a 3-hydroxy-n-propyl group and a 4-hydroxy-n-butyl group; hydroxycycloalkyl groups such as a 2-hydroxycyclohexyl group, a 3-hydroxycyclohexyl group and a 4-hydroxycyclohexyl group; hydroxyaryl groups such as a 2-hydroxyphenyl group, a 3-hydroxyphenyl group, a 4-hydroxyphenyl group, a 2,3-dihydroxyphenyl group, a 2,4-dihydroxyphenyl group, a 2,5-dihydroxyphenyl group, a 2,6-dihydroxyphenyl group, a 3,4-dihydroxyphenyl group and a 3,5-dihydroxyphenyl group; hydroxyaralkyl groups such as a 2-hydroxyphenylmethyl group, a 3-hydroxyphenylmethyl group and a 4-hydroxyphenylmethyl group; chain alkoxy groups such as a methoxy group, an ethoxy group, an n-propoxy group, an isopropoxy group, an n-butyloxy group, an isobutyloxy group, a sec-butyloxy group, a tert-butyloxy group, an n-pentyloxy group, an n-hexyloxy group, an n-heptyloxy group, an n-octyloxy group, a 2-ethylhexyloxy group, an n-nonyloxy group, an n-decyloxy group, an n-undecyloxy group, an n-tridecyloxy group, an n-tetradecyloxy group, an n-pentadecyloxy group, an n-hexadecyloxy group, an n-heptadecyloxy group, an n-octadecyloxy group, an n-nonadecyloxy group and an n-icosyloxy group; chain alkenyloxy groups such as a vinyloxy group, a 1-propenyloxy group, a 2-n-propenyloxy group (an allyloxy group), a 1-n-butenyloxy group, a 2-n-butenyloxy group and a 3-n-butenyloxy group; aryloxy groups such as a phenoxy group, an o-tolyloxy group, an m-tolyloxy group, a p-tolyloxy group, an α-naphthyloxy group, a β-naphthyloxy group, a biphenyl-4-yloxy group, a biphenyl-3-yloxy group, a biphenyl-2-yloxy group, an anthryloxy group and a phenanthryloxy group; aralkyloxy groups such as a benzyloxy group, a phenethyloxy group, an α-naphthylmethyloxy group, a β-naphthylmethyloxy group, an α-naphthylethyloxy group and a β-naphthylethyloxy group; alkoxyalkyl groups such as a methoxymethyl group, an ethoxymethyl group, an n-propoxymethyl group, a 2-methoxyethyl group, a 2-ethoxyethyl group, a 2-n-propoxyethyl group, a 3-methoxy-n-propyl group, a 3-ethoxy-n-propyl group, a 3-n-propoxy-n-propyl group, a 4-methoxy-n-butyl group, a 4-ethoxy-n-butyl group and a 4-n-propoxy-n-butyl group; alkoxyalkoxy groups such as a methoxymethoxy group, an ethoxymethoxy group, an n-propoxymethoxy group, a 2-methoxyethoxy group, a 2-ethoxyethoxy group, a 2-n-propoxyethoxy group, a 3-methoxy-n-propoxy group, a 3-ethoxy-n-propoxy group, a 3-n-propoxy-n-propoxy group, a 4-methoxy-n-butyloxy group, a 4-ethoxy-n-butyloxy group and a 4-n-propoxy-n-butyloxy group; alkoxyaryl groups such as a 2-methoxyphenyl group, a 3-methoxyphenyl group and a 4-methoxyphenyl group; alkoxyaryloxy groups such as a 2-methoxyphenoxy group, a 3-methoxyphenoxy group and a 4-methoxyphenoxy group; aliphatic acyl groups such as a formyl group, an acetyl group, a propionyl group, a butanoyl group, a pentanoyl group, a hexanoyl group, a heptanoyl group, an octanoyl group, a nonanoyl group and a decanoyl group; aromatic acyl groups such as a benzoyl group, an α-naphthoyl group and a β-naphthoyl group; chain alkyloxycarbonyl groups such as a methoxycarbonyl group, an ethoxycarbonyl group, an n-propoxycarbonyl group, an n-butyloxycarbonyl group, an n-pentyloxycarbonyl group, an n-hexyloxycarbonyl group, an n-heptyloxycarbonyl group, an n-octyloxycarbonyl group, an n-nonyloxycarbonyl group and an n-decyloxycarbonyl group; aryloxycarbonyl groups such as a phenoxycarbonyl group, an α-naphthoxycarbonyl group and a β-naphthoxycarbonyl group; aliphatic acyloxy groups such as a formyloxy group, an acetyloxy group, a propionyloxy group, a butanoyloxy group, a pentanoyloxy group, a hexanoyloxy group, a heptanoyloxy group, an octanoyloxy group, a nonanoyloxy group and a decanoyloxy group; and aromatic acyloxy groups such as a benzoyloxy group, an α-naphthoyloxy group and a β-naphthoyloxy group.

It is preferred that $R^{c1}$ to $R^{c18}$ be each independently a group selected from the group consisting of a hydrogen atom, a halogen atom, an alkyl group having 1 or more and 5 or less carbon atoms and an alkoxy group having 1 or more and 5 or less carbon atoms, and it is more preferred that all $R^{c1}$ to $R^{c18}$ be hydrogen atoms particularly because

a cured film with good mechanical properties is easily formed.

In the formulas (c1-2) to (c1-5), $R^{c1}$ to $R^{c18}$ are the same as $R^{c1}$ to $R^{c18}$ in the formula (c1-1) . Examples of the divalent group formed when $R^{c2}$ and $R^{c10}$ are bonded to each other in the formula (c1-2) and the formula (c1-4), when $R^{c13}$ and $R^{c16}$ are bonded to each other in the formula (c1-2), and when $R^{c2}$ and $R^{c8}$ are bonded to each other in the formula (c1-3) include $-CH_2-$ and $-C(CH_3)_2-$.

Specific examples of suitable compounds of the alicyclic epoxy compound represented by the formula (c1-1) can include alicyclic epoxy compounds represented by the following formulas (c1-1a), (c1-1b) and (c1-1c), 2,2-bis(3,4-epoxycyclohexan-1-yl)propane [=2,2-bis(3,4-epoxycyclohexyl)propane], and the like.

[Chem. 12]

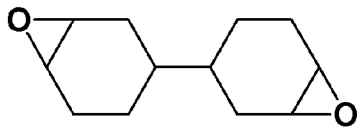
(c1-1a)

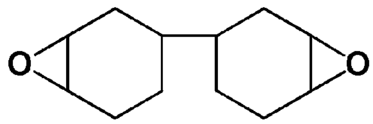
(c1-1b)

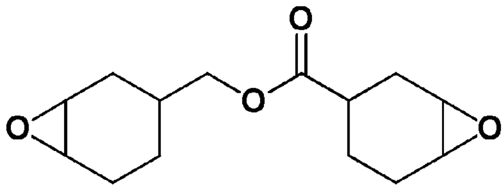
(c1-1c)

Specific examples of suitable compounds of the alicyclic epoxy compound represented by the formula (c1-2) include bicyclononadiene epoxide or dibicyclononadiene epoxide alicyclic epoxy compounds represented by the following formula (c1-2a) .

[Chem. 13]

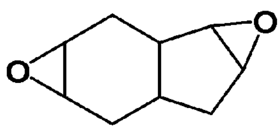
(c1-2a)
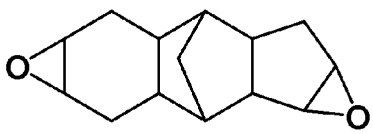
(c1-2b)

Specific examples of suitable compounds of the alicyclic epoxy compound represented by the formula (c1-3) include S-spiro[3-oxatricyclo[3.2.1.0$^{2,4}$]octane-6,2'-oxirane], and the like.

Specific examples of suitable compounds of the alicyclic epoxy compound represented by the formula (c1-4) include 4-vinylcyclohexene dioxide, dipentene dioxide, limonene dioxide, 1-methyl-4-(3-methyloxiran-2-yl)-7-oxabicyclo[4.1.0]heptane, and the like.

Specific examples of suitable compounds of the alicyclic epoxy compound represented by the formula (c1-5) include 1,2,5,6-diepoxycyclooctane, and the like.

Furthermore, a compound represented by the following formula (c1) can be suitably used as the epoxy compound.

[Chem. 14]

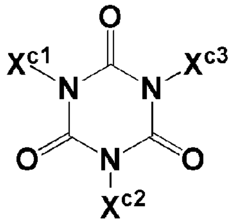

(c1)

In the formula (c1), $X^{c1}$, $X^{c2}$ and $x^{c3}$ are each independently a hydrogen atom or an organic group which may include an epoxy group, and the total number of epoxy groups of $X^{c1}$, $X^{c2}$ and $X^{c3}$ is 2 or more. The organic group in the formula (c1) is preferably a carbon atom-containing group and more preferably a group composed of one or more carbon atoms and one or more atoms selected from the group consisting of H, O, S, Se, N, B, P, Si, and a halogen atom. The number of carbon atoms in the carbon atom-containing group is not particularly limited, but is preferably 1 or more and 50 or less and more preferably 1 or more and 20 or less.

The compound represented by the above formula (c1) is preferably a compound represented by the following formula (c1-6) .

[Chem. 15]

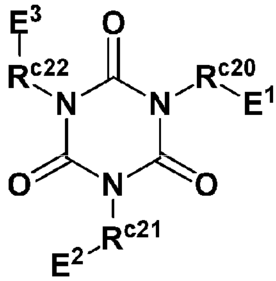

(c1-6)

In the formula (c1-6), $R^{c20}$ to $R^{c22}$ are a linear, branched or cyclic alkylene group, an arylene group, -O-, -C(=O)-, -NH- and a combination thereof, and may be the same or different. $E^1$ to $E^3$ are at least one substituent selected from the group consisting of an epoxy group, an oxetanyl group, an ethylenically unsaturated group, an alkoxysilyl group, an isocyanate group, a blocked isocyanate group, a thiol group, a carboxy group, a hydroxy group and a succinic acid anhydride group, or a hydrogen atom, provided that at least two of $E^1$ to $E^3$ are at least one selected from the group consisting of an epoxy group and an oxetanyl group.

In the formula (c1-6), each of at least two of a group represented by $R^{c20}$ and $E^1$, a group represented by $R^{c21}$ and $E^2$, and a group represented by $R^{c22}$ and $E^3$ is preferably a group represented by the following formula (c1-6a). It is more preferred that all of these groups are groups represented by the following formula (c1-6a). A plurality of groups represented by the formula (c1-6a) bonded to one compound are preferably the same.

$$-L-C^c \qquad (c1\text{-}6a)$$

In the formula (c1-6a), L is a linear, branched or cyclic alkylene group, an arylene group, -O-, -C(=O)-, -NH- and a combination thereof, and $C^c$ is an epoxy group. In the formula (c1-6a), L and $C^c$ may be bonded to each other to form a cyclic structure.

In the formula (c1-6a), the linear, branched or cyclic alkylene group as L is preferably an alkylene group having 1 or more and 10 or less carbon atoms, and additionally the arylene group as L is preferably an arylene group having 5 or more and 10 or less carbon atoms. In the formula (c1-6a), L is preferably a linear alkylene group having 1 or more and 3 or less carbon atoms, a phenylene group, -O-, -C(=O)-, -NH- and a combination thereof, and is preferably at least one of a linear alkylene group having 1 or more and 3 or less carbon atoms such as a methylene group and a phenylene group or a combination of these groups and at least one of -O-, -C(=O)- and -NH-.

As a case where L and $C^c$ are bonded to each other to form a cyclic structure in the formula (c1-6a), for example when a branched alkylene group and an epoxy group are bonded to each other to form a cyclic structure (a structure

having an epoxy group of an alicyclic structure), examples thereof include an organic group represented by the following formula (c1-6b) or (c1-6c) .

[Chem. 16]

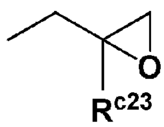

(c1-6b)

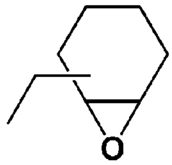

(c1-6c)

In the formula (c1-6b), $R^{c23}$ is a hydrogen atom or a methyl group.

As examples of the compound represented by the formula (c1-6), epoxy compounds having an oxiranyl group or an alicyclic epoxy group will be exemplified. It should be noted, however, that the compound represented by the formula (c1-6) is not limited thereto.

[Chem. 17]

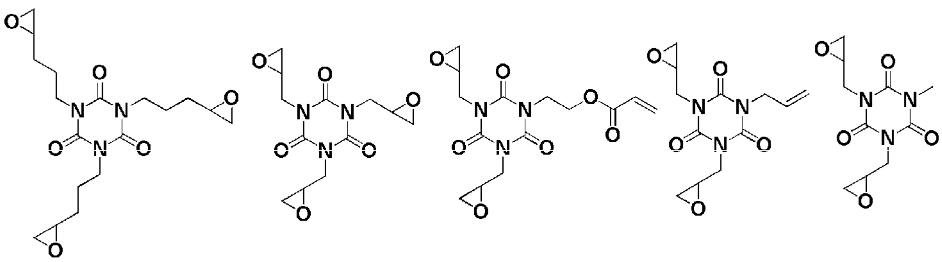

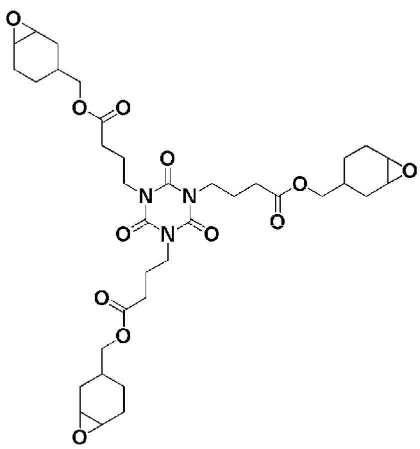

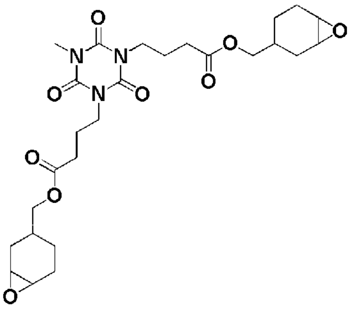

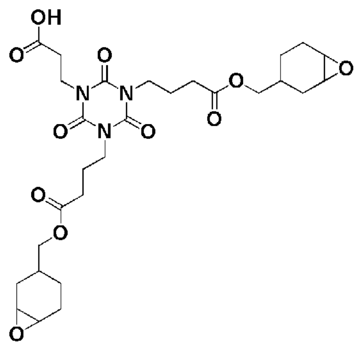

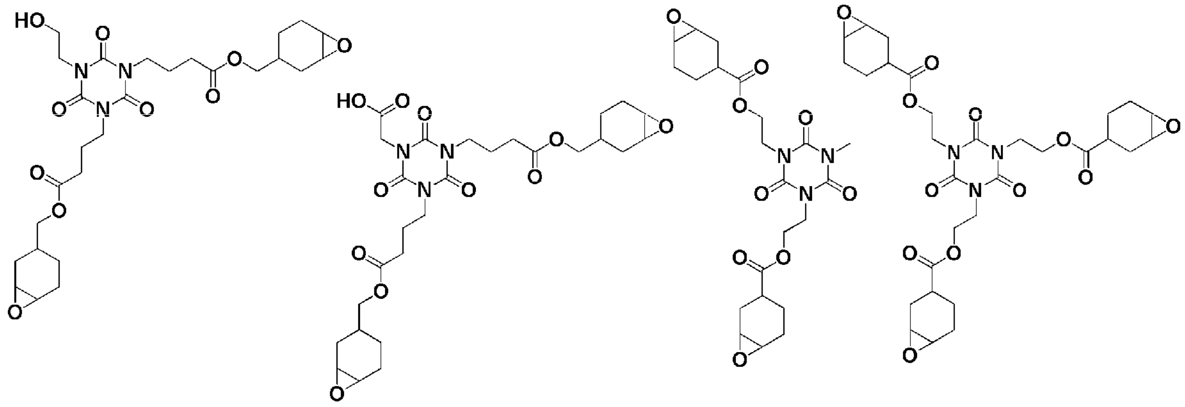

Furthermore, as a compound which can preferably be used as the epoxy compound, a siloxane compound having two or more epoxy groups in a molecule (hereinafter, also simply referred to as "siloxane compound") is exemplified.

The siloxane compound is a compound having a siloxane skeleton constituted with siloxane bonds (Si-O-Si) and two or more glycidyl groups in a molecule. Examples of the siloxane skeleton in the siloxane compound can include a cyclic siloxane skeleton, a polysiloxane skeleton and a basket or ladder type polysilsesquioxane skeleton.

As the siloxane compound, a compound having a cyclic siloxane skeleton represented by the following formula (c1-7) (hereinafter, may be referred to as "cyclic siloxane") is preferred, among others.

[Chem. 18]

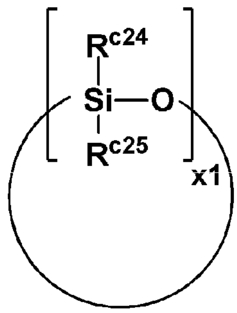

**(c1-7)**

In the formula (c1-7), $R^{c24}$ and $R^{c25}$ represent a monovalent group including an epoxy group, or an alkyl group. However, at least two of the x1 number of $R^{c24}$ and the x1 number of $R^{c25}$ in the compound represented by the formula (c1-7) are a monovalent group including an epoxy group. Furthermore, x1 in the formula (c1-7) represents an integer of 3 or more. It should be noted that $R^{c24}$ and $R^{c25}$ in the compound represented by the formula (c1-7) may be the same or different. In addition, a plurality of $R^{c24}$ may be the same or different. A plurality of $R^{c25}$ may also be the same or different.

The above monovalent group including an epoxy group is preferably a glycidyl ether group represented by -D-O-$R^{c26}$. D represents an alkylene group. $R^{c26}$ represents a glycidyl group. Examples of the above D (alkylene group) can include linear or branched alkylene groups having 1 or more and 18 or less carbon atoms such as a methylene group, a methylmethylene group, a dimethylmethylene group, a dimethylene group and a trimethylene group, and the like. In addition, an alicyclic epoxy group-containing group represented by -D-$R^{c27}$ is also preferred. $R^{c27}$ is an epoxycycloalkyl group. D is an alkylene group as described above. Preferred examples of the alkylene group as D are also as described above. The epoxycycloalkyl group as $R^{c27}$ is preferably a 2,3-epoxycyclopentyl group, a 3,4-epoxycyclohexyl group and a 2,3-epoxycyclohexyl group. The group represented by -D-$R^{c27}$ is preferably a 2-(3,4-epoxycyclohexyl)ethyl group.

Preferred examples of the alkyl group as $R^{c24}$ and $R^{c25}$ can include linear or branched alkyl groups having 1 or more and 18 or less carbon atoms such as a methyl group, an ethyl group, a propyl group and an isopropyl group. The number of carbon atoms of the alkyl group is more preferably 1 or more and 6 or less, and particularly preferably 1 or more and 3 or less.

In the formula (c1-7), x1 represents an integer of 3 or more, and particularly preferably an integer of 3 or more and 6 or less from the viewpoint of good crosslinking reactivity when a cured film is formed.

The number of epoxy groups in the molecule of the siloxane compound is 2 or more, and preferably 2 or more and 6 or less, and particularly preferably 2 or more and 4 or less from the viewpoint of good crosslinking reactivity when a cured film is formed.

The wavelength conversion film forming composition may include, in addition to the siloxane compound represented by the formula (c1-7), compounds having a siloxane skeleton such as alicyclic epoxy group-containing cyclic siloxane, an alicyclic epoxy group-containing silicone resin described in Japanese Unexamined Patent Application Publication No. 2008-248169, and an organopolysilsesquioxane resin having at least two epoxy functional groups in one molecule described in Japanese Unexamined Patent Application Publication No. 2008-19422.

More specific examples of the siloxane compound can include cyclic siloxane having two or more epoxy groups in a molecule represented by the following formulas, and the like. In addition, commercial products such as trade name "X-40-2670," "X-40-2701," "X-40-2728," "X-40-2738" and "X-40-2740" (all manufactured by Shinetsu Chemical Co., Ltd.), for example, can be used as the siloxane compound.

[Chem. 19]

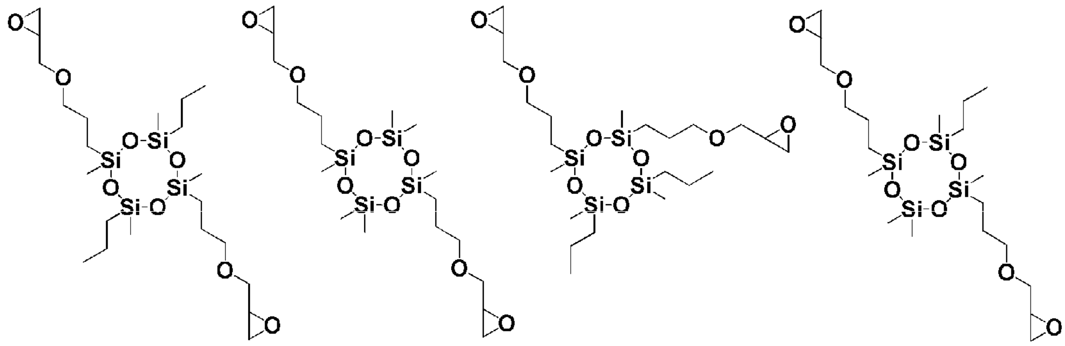

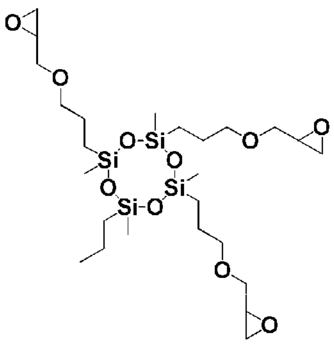

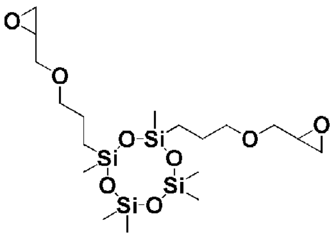

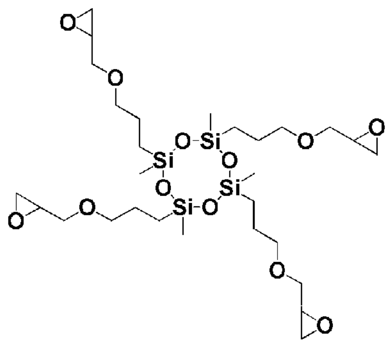

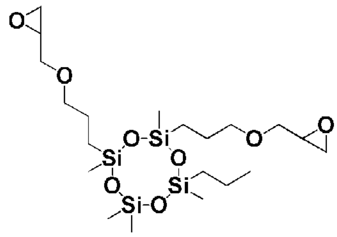
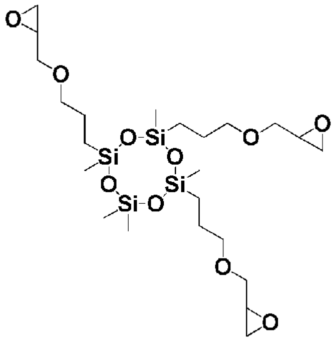
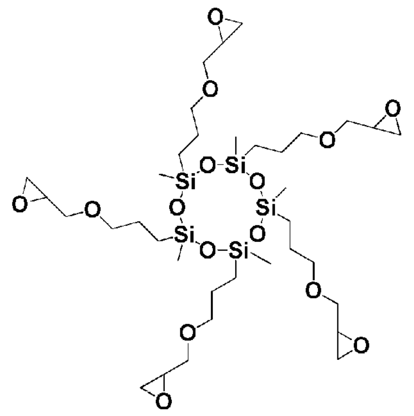
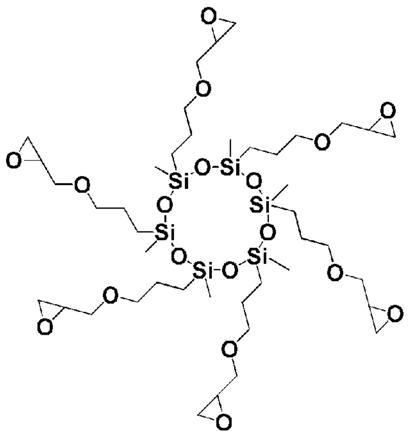

[Chem. 20]

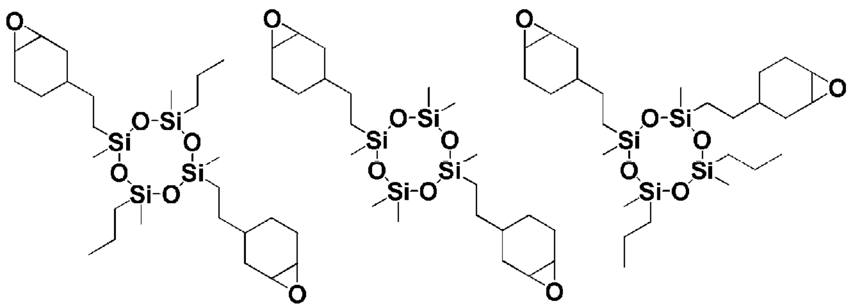
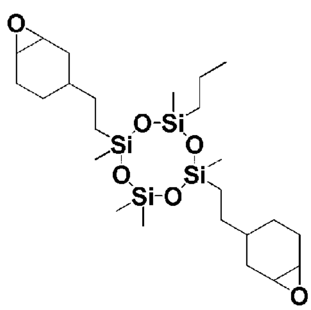
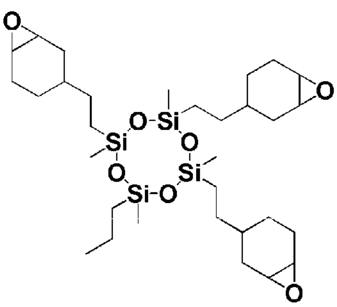
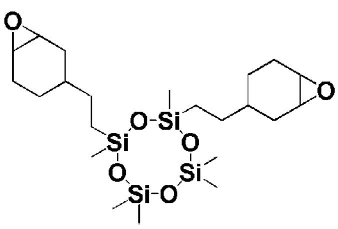
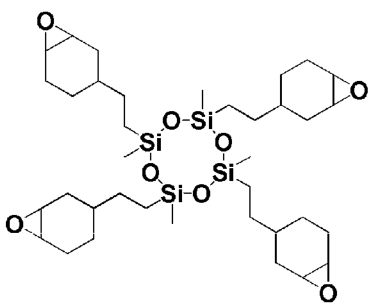

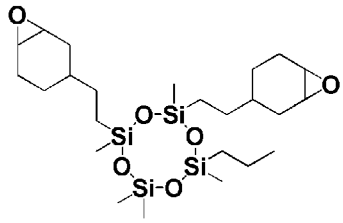

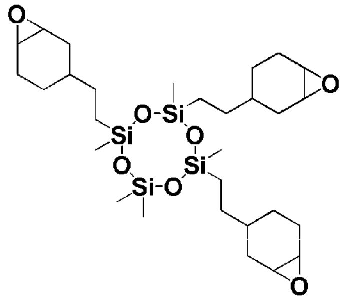

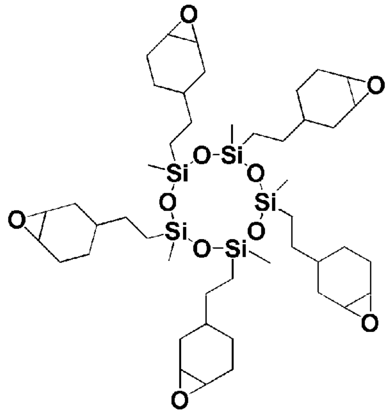

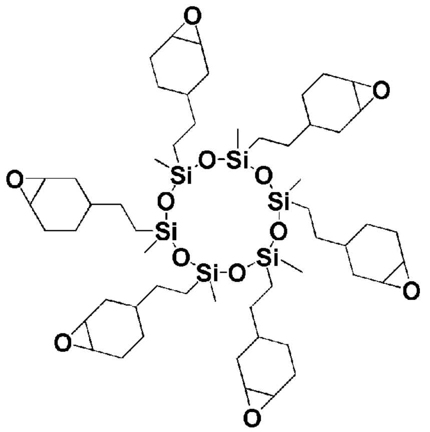

(Oxetane compound)

Examples of a preferable oxetane compound include 3,3'-(oxybismethylene)bis(3-ethyloxetane), 4,4-bis[(3-ethyl-3-oxetanyl)methyl]biphenyl, 3,7-bis(3-oxetanyl)-5-oxanonane, 3,3'-[1,3-(2-methylenyl)propanediylbis(oxymethylene)]bis(3-ethyloxetane), 1,4-bis[(3-ethyl-3-oxetanyl)methoxymethyl]benzene, 1,2-bis[(3-ethyl-3-oxetanyl)methoxymethyl]ethane, 1,3-bis[(3-ethyl-3-oxetanyl)methoxymethyl]propane, ethylene glycol bis[(3-ethyl-3-oxetanyl)methyl] ether, dicyclopentenylbis[(3-ethyl-3-oxetanyl)methyl] ether, triethylene glycol bis[(3-ethyl-3-oxetanyl)methyl] ether, tetraethylene glycol bis[(3-ethyl-3-oxetanyl)methyl] ether, tricyclodecanediyldimethylenebis[(3-ethyl-3-oxetanyl)methyl] ether, trimethylolpropane tris[(3-ethyl-3-oxetanyl)methyl] ether, 1,4-bis[(3-ethyl-3-oxetanyl)methoxy]butane, 1,6-bis[(3-ethyl-3-oxetanyl)methoxy]hexane, pentaerythritol tris[(3-ethyl-3-oxetanyl)methyl] ether, pentaerythritol tetrakis[(3-ethyl-3-oxetanyl)methyl] ether, polyethylene glycol bis[(3-ethyl-3-oxetanyl)methyl] ether, dipentaerythritol hexakis[(3-ethyl-3-oxetanyl)methyl] ether, dipentaerythritol pentakis[(3-ethyl-3-oxetanyl)methyl] ether, and dipentaerythritol tetrakis[(3-ethyl-3-oxetanyl)methyl] ether.

The oxetane compound may also be, for example, a reaction product of dipentaerythritolhexakis[(3-ethyl-3-oxetanyl)methyl] ether and caprolactone, a reaction product of dipentaerythritolpentakis[(3-ethyl-3-oxetanyl)methyl] ether and caprolactone, a reaction product of ditrimethylolpropanetetrakis[(3-ethyl-3-oxetanyl)methyl] ether, bisphenol A bis[(3-ethyl-3-oxetanyl)methyl] ether, and ethylene oxide, a reaction product of bisphenol A bis[(3-ethyl-3-oxetanyl)methyl] ether and propylene oxide, a reaction product of hydrogenated bisphenol A bis[(3-ethyl-3-oxetanyl)methyl] ether and ethylene oxide, a reaction product of hydrogenated bisphenol A bis[(3-ethyl-3-oxetanyl)methyl] ether and propylene oxide, or a reaction product of bisphenol F bis[(3-ethyl-3-oxetanyl)methyl] ether and ethylene oxide.

[Thermosetting polymer compound]

Examples of the thermosetting polymer compound that may be used as the base component (Cb) include a resin that causes an intramolecular aromatic ring formation reaction and/or an intermolecular crosslinking reaction in response to heat, and a resin for formation of a cured film by baking. In the case in which the wavelength conversion film forming composition includes a resin that causes an intramolecular aromatic ring formation reaction and/or an intermolecular crosslinking reaction in response to heat, it is preferable that the liquid composition includes a heat-responsive imidazole generator described in Japanese Unexamined Patent Application, Publication No. 2016-145308, and/or an imidazole compound described in Japanese Unexamined Patent Application, Publication No. 2017-025226 from the viewpoint of acceleration of the intramolecular aromatic ring formation reaction and/or the intermolecular

crosslinking reaction in response to heat. A curing agent which may be included by the wavelength conversion film forming composition in the case in which the wavelength conversion film forming composition includes a resin for formation of a cured film by baking will be described in detail later.

In the case in which an intramolecular aromatic ring formation reaction occurs, the structure of a molecular chain constituting the resin becomes rigid and therefore the wavelength conversion film forming composition tends to give a cured film excellent in heat resistance and mechanical properties. Examples of a preferable reaction as the intramolecular aromatic ring formation reaction include reactions shown by the following formulas (I) to (VI). The reactions in the following formulas are mere examples of the aromatic ring formation reaction. The structure of the resin used as the base component (Cb) that causes an intramolecular aromatic ring formation reaction in response to heat is not limited to the structures of the precursor polymers shown in the following formulas.

[Chem. 21]

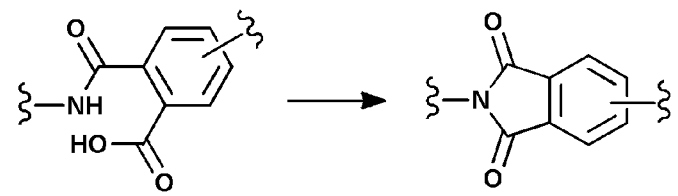
(I)

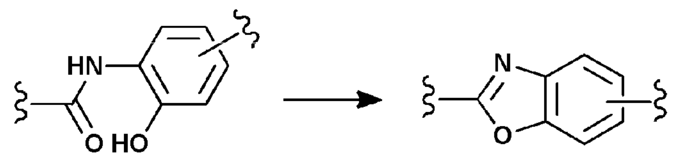
(II)

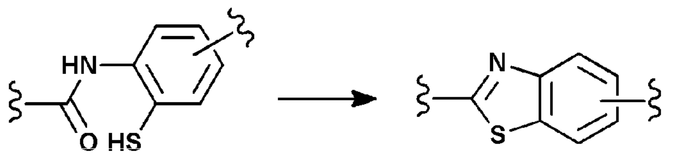
(III)

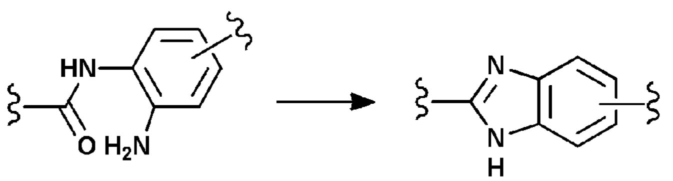
(IV)

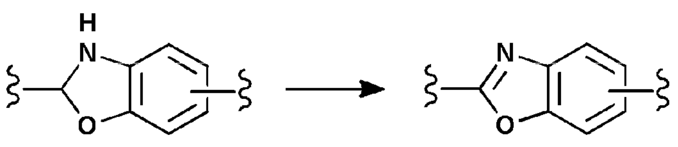
(V)

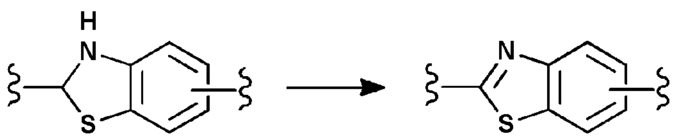
(VI)

In the case in which an intermolecular crosslinking reaction occurs, molecular chains constituting the resin crosslink to each other and thereby a three-dimensional crosslinked structure is formed. Therefore, by using the wavelength conversion film forming composition including a resin that causes a crosslinking reaction in response to heat as the base component (Cb), a cured film excellent in heat resistance and mechanical properties tends to be obtained.

As the resin that causes an intermolecular crosslinking reaction in response to heat, a resin containing a group

selected from a hydroxy group, a carboxylic anhydride group, a carboxy group, and an epoxy group in the molecule is preferable. In the case in which such a resin is used, crosslinking as described below takes place by the action of, for example, the aforementioned heat-responsive imidazole generator and/or the imidazole compound. In the case in which a resin containing a hydroxy group is used, crosslinking via dehydration condensation between hydroxy groups takes place between molecules in the resin. In the case in which a resin containing a carboxylic anhydride group is used, carboxy groups formed by hydrolysis of acid anhydride groups undergo dehydration condensation and thereby form crosslinks. In the case in which a resin containing a carboxy group is used, crosslinking via dehydration condensation between carboxy groups takes place between molecules in the resin. In the case in which a resin containing an epoxy group is used, crosslinking via polyaddition reaction between epoxy groups takes place between molecules in the resin.

Among these compounds that cause an intramolecular aromatic ring formation reaction or an intermolecular crosslinking reaction in response to heat, polyamic acid, a polybenzoxazole precursor, a polybenzothiazole precursor, a polybenzimidazole precursor, a styrene-(maleic acid) copolymer, and an epoxy-group-containing resin are preferable because a shaped body excellent in heat resistance tends to be formed.

(Epoxy-group-containing resin)

The epoxy-group-containing resin may be a polymer that is obtained by polymerizing a monomer having an epoxy group or a monomer mixture containing a monomer having an epoxy group. The epoxy-group-containing resin may be a polymer obtained by introducing an epoxy group into a polymer having a functional reactive group such as a hydroxy group, a carboxy group, or an amino group by using, for example, a compound having an epoxy group such as epichlorohydrin. As the polymer having an epoxy group, a polymer that is obtained by polymerizing a monomer having an epoxy group or a monomer mixture containing a monomer having an epoxy group is preferable because use of this polymer is advantageous in terms of, for example, availability, easy preparation, and easy adjustment of the amount of epoxy groups in the polymer.

Examples of a preferable epoxy-group-containing resin include novolac epoxy resins such as a phenol novolac type epoxy resin, a brominated phenol novolac type epoxy resin, an orthocresol novolac type epoxy resin, a bisphenol A novolac type epoxy resin, and a bisphenol AD novolac type epoxy resin; cyclic aliphatic epoxy resins such as an epoxidized product of a dicyclopentadiene type phenolic resin; and aromatic epoxy resins such as an epoxidized product of a naphthalene type phenolic resin.

Among the epoxy-group-containing resins, the polymer having an epoxy group is preferably a homopolymer of a (meth)acrylic acid ester having an epoxy group, or a copolymer of a (meth)acrylic acid ester having an epoxy group with other monomer in view of ease of preparation and the like.

The (meth)acrylic acid ester having an epoxy group may be either a (meth)acrylic acid ester having a chain aliphatic epoxy group, or the below-mentioned (meth)acrylic acid ester having an alicyclic epoxy group. The (meth)acrylic acid ester having an epoxy group may have an aromatic group. The (meth)acrylic acid ester having an epoxy group is preferably an aliphatic (meth)acrylic acid ester having a chain aliphatic epoxy group or an aliphatic (meth)acrylic acid ester having an alicyclic epoxy group, and more preferably an aliphatic (meth)acrylic acid ester having an alicyclic epoxy group.

Examples of the (meth)acrylic acid ester which has an aromatic group and an epoxy group include 4-glycidyloxyphenyl (meth)acrylate, 3-glycidyloxyphenyl (meth)acrylate, 2-glycidyloxyphenyl (meth)acrylate, 4-glycidyloxyphenylmethyl (meth)acrylate, 3-glycidyloxyphenylmethyl (meth)acrylate, and 2-glycidyloxyphenylmethyl (meth)acrylate.

Examples of the aliphatic (meth)acrylic acid ester having a chain aliphatic epoxy group include (meth)acrylic acid esters in which a chain aliphatic epoxy group is combined with an oxy group (-O-) in an ester group (-O-CO-), such as epoxyalkyl (meth)acrylate and epoxyalkyloxyalkyl (meth)acrylate. Such a chain aliphatic epoxy group possessed by the (meth)acrylic acid ester may have one or a plurality of oxy groups (-O-) in the chain. The number of carbon atoms of the chain aliphatic epoxy group is not particularly limited, and is preferably 3 or more and 20 or less, more preferably 3 or more and 15 or less, and particularly preferably 3 or more and 10 or less.

Specific examples of the aliphatic (meth)acrylic acid ester having a chain aliphatic epoxy group include epoxyalkyl (meth)acrylates such as glycidyl (meth)acrylate, 2-methyl glycidyl (meth)acrylate, 3,4-epoxybutyl (meth)acrylate, and 6,7-epoxyheptyl (meth)acrylate; and epoxyalkyloxyalkyl (meth)acrylates such as 2-glycidyloxyethyl (meth)acrylate, 3-glycidyloxy-n-propyl (meth)acrylate, 4-glycidyloxy-n-butyl (meth)acrylate, 5-glycidyloxy-n-hexyl (meth)acrylate, and 6-glycidyloxy-n-hexyl (meth)acrylate.

Specific examples of the aliphatic (meth)acrylic acid ester having an alicyclic epoxy group include compounds represented by the following formulas (c5-1) to (c5-15). Of these compounds, compounds represented by the following formulas (c5-1) to (c5-5) are preferable, and compounds represented by the following formulas (c5-1) to (c5-3) are more preferable.

[Chem. 22]

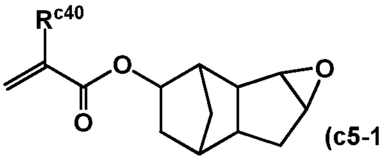
(c5-1)

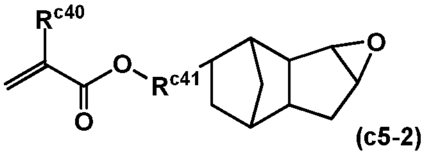
(c5-2)

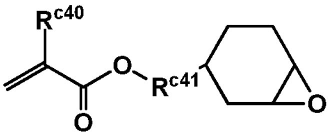
(c5-3)

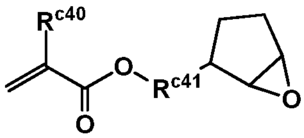
(c5-4)

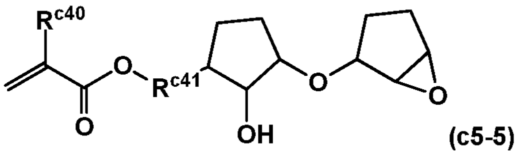
(c5-5)

[Chem. 23]

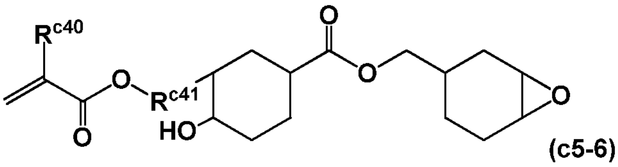
(c5-6)

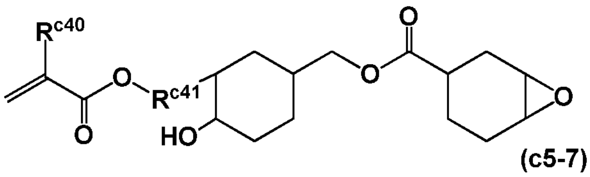
(c5-7)

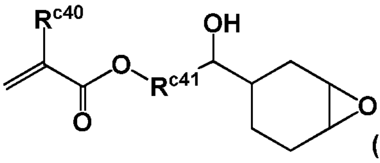
(c5-8)

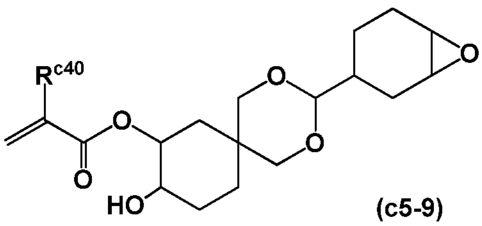
(c5-9)

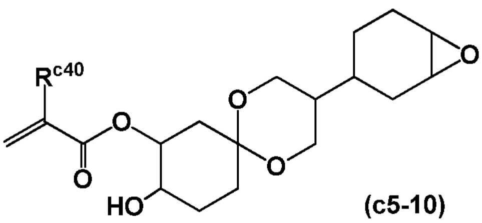
(c5-10)

[Chem. 24]

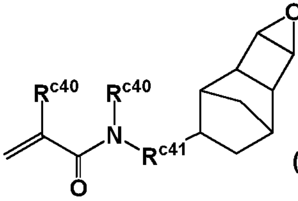
(c5-11)

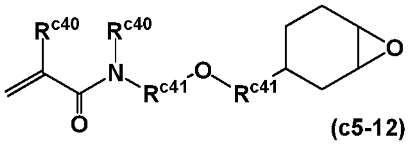
(c5-12)

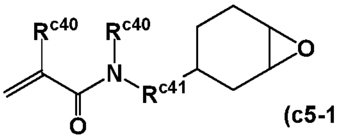
(c5-13)

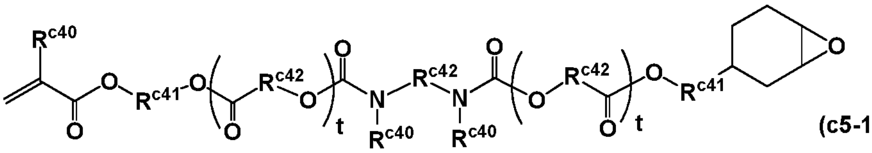
(c5-14)

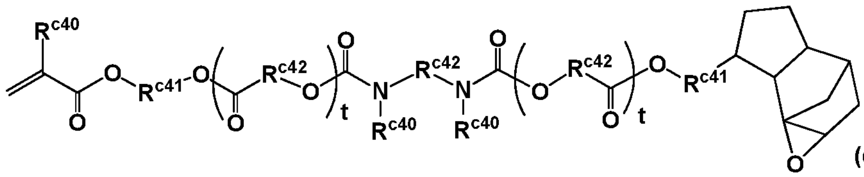
(c5-15)

In the above formulas, $R^{c40}$ represents a hydrogen atom or a methyl group; $R^{c41}$ represents a divalent aliphatic saturated hydrocarbon group having 1 or more and 6 or less carbon atoms; $R^{c42}$ represents a divalent hydrocarbon group having 1 or more and 10 or less carbon atoms; and t represents an integer of 0 or more and 10 or less. $R^{c41}$ is a linear or branched alkylene group and is preferably, for example, a methylene group, an ethylene group, a propylene group, a tetramethylene group, an ethylethylene group, a pentamethylene group, or a hexamethylene group. $R^{c42}$ is preferably, for example, a methylene group, an ethylene group, a propylene group, a tetramethylene group, an ethylethylene group, a pentamethylene group, a hexamethylene group, a phenylene group, or a cyclohexylene group.

It is possible to use, as the polymer having an epoxy group, both of a homopolymer of a (meth)acrylic acid ester having an epoxy group, and a copolymer of a (meth)acrylic acid ester having an epoxy group with the other monomer. The content of a unit derived from the (meth)acrylic acid ester having an epoxy group in the polymer having an epoxy group is preferably 70% by mass or more, more preferably 80% by mass or more, particularly preferably 90% by mass or more, and most preferably 100% by mass.

When the polymer having an epoxy group is a copolymer of the (meth)acrylic acid ester having an epoxy group with the other monomer, examples of the other monomer include an unsaturated carboxylic acid, a (meth)acrylic acid ester having no epoxy group, (meth)acrylamides, an allyl compound, vinyl ethers, vinyl esters, styrenes, maleimides and the like. These compounds can be used individually, or two or more thereof can be used in combination. In view of storage stability of the wavelength conversion film forming composition, and chemical resistance of a wavelength conversion film formed using the wavelength conversion film forming composition against alkali, it is preferred that the copolymer of the (meth)acrylic acid ester having an epoxy group with other monomer does not include a unit derived from an unsaturated carboxylic acid.

Examples of the unsaturated carboxylic acid include (meth)acrylic acid; (meth)acrylic acid amide; crotonic acid; maleic acid, fumaric acid, citraconic acid, mesaconic acid, itaconic acid, and anhydrides of these dicarboxylic acids.

Examples of the (meth)acrylic acid ester having no epoxy group include linear or branched alkyl (meth)acrylates such as methyl (meth)acrylate, ethyl (meth)acrylate, propyl (meth)acrylate, amyl (meth)acrylate, and t-octyl (meth)acrylate; chloroethyl (meth)acrylate, 2,2-dimethylhydroxypropyl (meth)acrylate, 2-hydroxyethyl (meth)acrylate, trimethylolpropane mono(meth)acrylate, benzyl (meth)acrylate, furfuryl (meth)acrylate; and a (meth)acrylic acid ester having a group with an alicyclic skeleton. Of (meth)acrylic acid esters having no epoxy group, a (meth)acrylic acid ester having a group with an alicyclic skeleton is preferable.

In the (meth)acrylic acid ester having a group with an alicyclic skeleton, an alicyclic group composing the alicyclic skeleton may be either monocyclic or polycyclic. Examples of the monocyclic alicyclic group include a cyclopentyl group, a cyclohexyl group, and the like. Examples of the polycyclic alicyclic group include a norbornyl group, an isobornyl group, a tricyclononyl group, a tricyclodecyl group, a tetracyclododecyl group, and the like.

Examples of the (meth)acrylic acid ester having a group with an alicyclic skeleton include compounds represented by the following formulas (c6-1) to (c6-8). Of these compounds, compounds represented by the following formulas (c6-3) to (c6-8) are preferable, and compounds represented by the following formulas (c6-3) or (c6-4) are more preferable.

[Chem. 25]

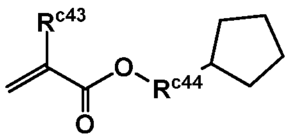
(c6-1)

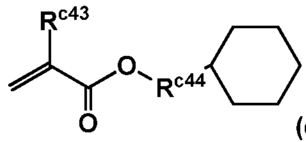
(c6-2)

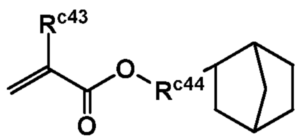
(c6-3)

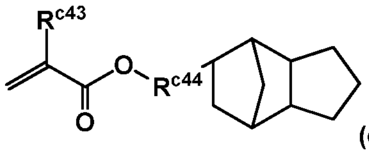
(c6-4)

[Chem. 26]

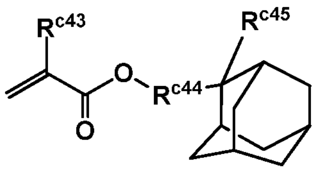
(c6-5)

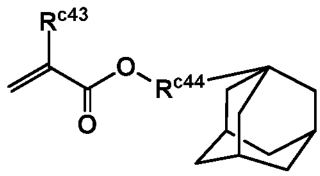
(c6-6)

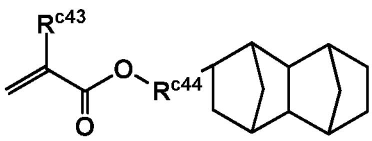
(c6-7)

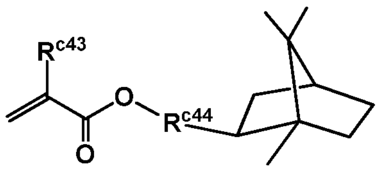
(c6-8)

In the above formulas, $R^{c43}$ represents a hydrogen atom or a methyl group; $R^{c44}$ represents a single bond or a divalent aliphatic saturated hydrocarbon group having 1 or more and 6 or less carbon atoms; and $R^{c45}$ represents a hydrogen atom or an alkyl group having 1 or more and 5 or less carbon atoms. $R^{c44}$ is preferably a single bond, or a linear or branched alkylene group, for example, a methylene group, an ethylene group, a propylene group, a tetramethylene group, an ethylethylene group, a pentamethylene group, or a hexamethylene group. $R^{c45}$ is preferably a methyl group or an ethyl group.

Examples of (meth)acrylamides include (meth)acrylamide, N-alkyl(meth)acrylamide, N-aryl(meth)acrylamide, N,N-dialkyl(meth)acrylamide, N,N-aryl(meth)acrylamide, N-methyl-N-phenyl(meth)acrylamide, N-hydroxyethyl-N-methyl(meth)acrylamide, and the like.

Examples of the allyl compound include allyl esters such as allyl acetate, allyl caproate, allyl caprylate, allyl laurate, allyl palmitate, allyl stearate, allyl benzoate, allyl acetoacetate, and allyl lactate; allyloxyethanol, and the like.

Examples of vinyl ethers include aliphatic vinyl ethers such as hexyl vinyl ether, octyl vinyl ether, decyl vinyl ether, ethylhexyl vinyl ether, methoxyethyl vinyl ether, ethoxyethyl vinyl ether, chloroethyl vinyl ether, 1-methyl-2,2-dimethylpropyl vinyl ether, 2-ethylbutyl vinyl ether, hydroxyethyl vinyl ether, diethylene glycol vinyl ether, dimethylaminoethyl vinyl ether, diethylaminoethyl vinyl ether, butylaminoethyl vinyl ether, benzyl vinyl ether, and tetrahydrofurfuryl vinyl ether; vinyl aryl ethers such as vinyl phenyl ether, vinyl tolyl ether, vinyl chlorophenyl ether, vinyl-2,4-dichlorophenyl ether, vinyl naphthyl ether, and vinyl anthranyl ether; and the like.

Examples of vinyl esters include vinyl butyrate, vinyl isobutyrate, vinyl trimethylacetate, vinyl diethylacetate, vinyl valerate, vinyl caproate, vinyl chloroacetate, vinyl dichloroacetate, vinyl methoxyacetate, vinyl butoxyacetate, vinyl

phenylacetate, vinyl acetoacetate, vinyl lactate, vinyl β-phenylbutyrate, vinyl benzoate, vinyl salicylate, vinyl chlorobenzoate, vinyl tetrachlorobenzoate, vinyl naphthoate, and the like.

Examples of styrenes include styrene; alkylstyrenes such as methylstyrene, dimethylstyrene, trimethylstyrene, ethylstyrene, diethylstyrene, isopropylstyrene, butylstyrene, hexylstyrene, cyclohexylstyrene, decylstyrene, benzylstyrene, chloromethylstyrene, trifluoromethylstyrene, ethoxymethylstyrene, and acetoxymethylstyrene; alkoxystyrenes such as methoxystyrene, 4-methoxy-3-methylstyrene, and dimethoxystyrene; halostyrenes such as chlorostyrene, dichlorostyrene, trichlorostyrene, tetrachlorostyrene, pentachlorostyrene, bromostyrene, dibromostyrene, iodostyrene, fluorostyrene, trifluorostyrene, 2-bromo-4-trifluoromethylstyrene, and 4-fluoro-3-trifluoromethylstyrene; and the like.

Examples of the maleimides include maleimides N-substituted with an alkyl group having 1 to 10 carbon atoms such as N-methylmaleimide, N-ethylmaleimide, N-n-propylmaleimide, N-isopropylmaleimide, N-n-butylmaleimide, N-n-pentylmaleimide, and N-n-hexylmaleimide; maleimides N-substituted with an alicyclic group having 3 to 20 carbon atoms such as N-cyclopentylmaleimide, N-cyclohexylmaleimide, and N-cycloheptylmaleimide; N-arylmaleimides N-substituted with an aryl group having 6 or more and 20 or less carbon atoms such as N-phenylmaleimide, N-α-naphthylmaleimide, and N-β-naphthylmaleimide; and N-aralkylmaleimides N-substituted with an aralkyl group having 7 or more and 20 or less carbon atoms such as N-benzylmaleimide and N-phenethylmaleimide.

The molecular weight of the epoxy group-containing resin is not particularly limited as long as the object of the present invention is not impaired, but the molecular weight is preferably 3,000 or more and 30,000 or less and more preferably 5,000 or more and 15,000 or less in terms of the mass-average molecular weight of polystyrene.

[Photopolymerizable low-molecular-weight compound]

The wavelength conversion film forming composition may contain a photopolymerizable low-molecular-weight compound (photopolymerizable monomer) as the base component (Cb). In a case where the wavelength conversion film forming composition contains a polyfunctional photopolymerizable low-molecular-weight compound, the wavelength conversion film forming composition preferably contains a photopolymerization initiator described later or the like. The photopolymerizable low-molecular-weight compound may be a monofunctional monomer or a polyfunctional monomer. Next, the monofunctional monomer and the polyfunctional monomer are described in order.

Examples of the monofunctional monomer include (meth)acrylamide, methylol (meth)acrylamide, methoxymethyl(meth)acrylamide, ethoxymethyl(meth)acrylamide, propoxymethyl(meth)acrylamide, butoxymethoxymethyl(meth)acrylamide, N-methylol (meth)acrylamide, N-hydroxymethyl(meth)acrylamide, (meth)acrylic acid, fumaric acid, maleic acid, maleic anhydride, itaconic acid, itaconic anhydride, citraconic acid, citraconic anhydride, crotonic acid, 2-acrylamide-2-methylpropanesulfonic acid, tert-butylacrylamide sulfonic acid, methyl (meth)acrylate, ethyl (meth)acrylate, butyl (meth)acrylate, 2-ethylhexyl (meth)acrylate, cyclohexyl (meth)acrylate, 2-hydroxyethyl (meth)acrylate, 2-hydroxypropyl (meth)acrylate, 2-hydroxybutyl (meth)acrylate, 2-phenoxy-2-hydroxypropyl (meth)acrylate, 2-(meth)acryloyloxy-2-hydroxypropyl phthalate, glycerol mono(meth)acrylate, tetrahydrofurfuryl (meth)acrylate, N,N-dimethyl-2-aminoethyl (meth)acrylate, glycidyl (meth)acrylate, 2,2,2-trifluoroethyl (meth)acrylate, 2,2,3,3-tetrafluoropropyl (meth)acrylate, and half (meth)acrylates of phthalic acid derivatives. These monofunctional monomers may be used individually, or two or more thereof may be used in combination.

Examples of the polyfunctional monomer include polyfunctional monomers such as ethylene glycol di(meth)acrylate, diethylene glycol di(meth)acrylate, tetraethylene glycol di(meth)acrylate, propylene glycol di(meth)acrylate, polypropylene glycol di(meth)acrylate, butylene glycol di(meth)acrylate, neopentyl glycol di(meth)acrylate, 1,6-hexane glycol di(meth)acrylate, trimethylolpropane tri(meth)acrylate, glycerol di(meth)acrylate, pentaerythritol triacrylate, pentaerythritol tetraacrylate, dipentaerythritol pentaacrylate, dipentaerythritol hexaacrylate, pentaerythritol di(meth)acrylate, pentaerythritol tri(meth)acrylate, pentaerythritol tetra(meth)acrylate, dipentaerythritol penta(meth)acrylate, dipentaerythritol hexa(meth)acrylate, 2,2-bis(4-(meth)acryloxydiethoxyphenyl)propane, 2,2-bis(4-(meth)acryloxypolyethoxyphenyl)propane, 2-hydroxy-3-(meth)acryloyloxypropyl (meth)acrylate, ethylene glycol diglycidyl ether di(meth)acrylate, diethylene glycol diglycidyl ether di(meth)acrylate, phthalic acid diglycidyl ester di(meth)acrylate, glycerol triacrylate, glycerol polyglycidyl ether poly(meth)acrylate, urethane (meth)acrylate (in other words, a reaction product of tolylene diisocyanate, trimethylhexamethylene diisocyanate, hexamethylene diisocyanate, or the like with 2-hydroxyethyl (meth)acrylate), methylenebis(meth)acrylamide, (meth)acrylamide methylene ether, condensates of a polyhydric alcohol and N-methylol (meth)acrylamide, and triacrylformal. These polyfunctional monomers may be used individually, or two or more thereof may be used in combination.

[Photopolymerizable polymer compound]

The wavelength conversion film forming composition may contain a photopolymerizable polymer compound as the base component (Cb). As the photopolymerizable polymer compound, a resin containing an ethylenically unsaturated group is preferably used. Examples of the resin containing an ethylenically unsaturated group include oligomers

derived from polymerization of (meth)acrylic acid, fumaric acid, maleic acid, monomethyl fumarate, monoethyl fumarate, 2-hydroxyethyl (meth)acrylate, ethylene glycol monomethyl ether (meth)acrylate, ethylene glycol monoethyl ether (meth)acrylate, glycerol (meth)acrylate, (meth)acrylamide, acrylonitrile, methacrylonitrile, methyl (meth)acrylate, ethyl (meth)acrylate, isobutyl (meth)acrylate, 2-ethylhexyl (meth)acrylate, benzyl (meth)acrylate, ethylene glycol di(meth)acrylate, diethylene glycol di(meth)acrylate, triethylene glycol di(meth)acrylate, tetraethylene glycol di(meth)acrylate, butylene glycol di(meth)acrylate, propylene glycol di(meth)acrylate, trimethylolpropane tri(meth)acrylate, tetramethylolpropane tetra(meth)acrylate, pentaerythritol tri(meth)acrylate, pentaerythritol tetra(meth)acrylate, dipentaerythritol penta(meth)acrylate, dipentaerythritol hexa(meth)acrylate, 1,6-hexanediol di(meth)acrylate, and cardo epoxy diacrylate; polyester (meth)acrylates obtained by subjecting a polyester prepolymer derived from condensation between a polyhydric alcohol and a monobasic acid or a polybasic acid to reaction with (meth)acrylic acid; polyurethane (meth)acrylates obtained by subjecting a polyol and a compound having two isocyanate groups to reaction and then subjecting the resulting product to reaction with (meth)acrylic acid; and epoxy (meth)acrylate resins obtained by subjecting an epoxy resin such as a bisphenol A type epoxy resin, a bisphenol F type epoxy resin, a bisphenol S type epoxy resin, a phenol or cresol novolac type epoxy resin, a resole type epoxy resin, a triphenol methane type epoxy resin, a polycarboxylic acid polyglycidyl ester, a polyol polyglycidyl ester, an aliphatic or alicyclic epoxy resin, an amine epoxy resin, or a dihydroxybenzene type epoxy resin to reaction with (meth)acrylic acid. A resin obtained by subjecting an epoxy (meth)acrylate resin to reaction with a polybasic acid anhydride may also be suitable for use.

A preferable resin containing an ethylenically unsaturated group is a resin obtained by subjecting a product of reaction between an epoxy compound and a carboxylic acid compound containing an unsaturated group to another reaction with a polybasic acid anhydride or a resin obtained by subjecting at least some of the carboxy groups of a polymer including a unit derived from an unsaturated carboxylic acid to reaction with a (meth)acrylic acid ester having an alicyclic epoxy group and/or a (meth)acrylic acid epoxyalkyl ester (hereinafter, these resins are collectively called "resin containing a constituent unit having an ethylenically unsaturated group"). The ethylenically unsaturated group of the constituent unit having an ethylenically unsaturated group is preferably a (meth)acryloyloxy group.

Among these, a resin containing a constituent unit having an ethylenically unsaturated group or a compound represented by the following formula (c7) is preferable. This compound represented by the formula (c7) is preferable because the compound itself is highly photocurable.

[Chem. 27]

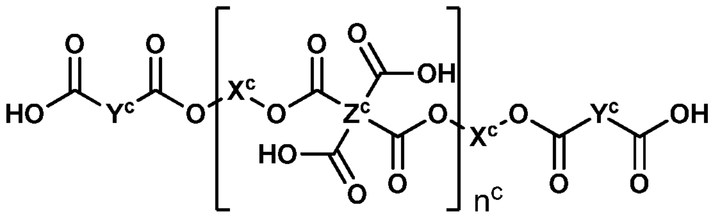

(c7)

In the formula (c7), $X^c$ represents a group represented by the following formula (c8).

[Chem. 28]

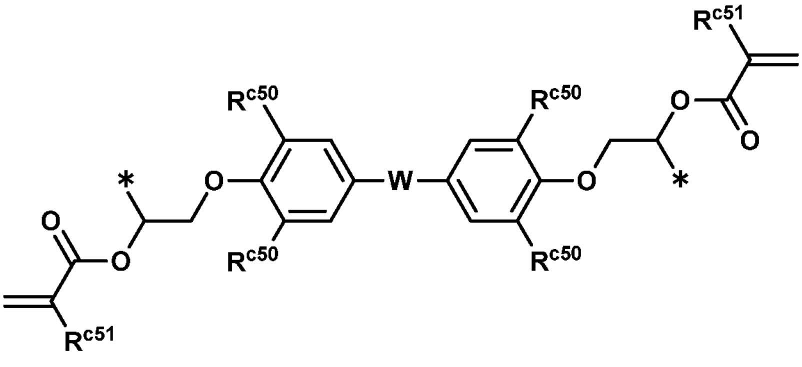

(c8)

In the formula (c8), $R^{c50}$ represents each independently a hydrogen atom, a hydrocarbon group having 1 or

more and 6 or less carbon atoms, or a halogen atom; $R^{c51}$ represents each independently a hydrogen atom or a methyl group; and W represents a single bond or a group represented by the following structural formula (c9). In the formulas (c8) and (c9), "*" represents the position where the divalent group is bonded.

[Chem. 29]

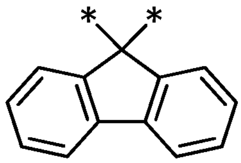

(c9)

In the formula (c7), $Y^c$ represents a residue that is obtained by removing an acid anhydride group (-CO-O-CO-) from a dicarboxylic anhydride. Examples of the dicarboxylic anhydride include maleic anhydride, succinic anhydride, itaconic anhydride, phthalic anhydride, tetrahydrophthalic anhydride, hexahydrophthalic anhydride, methylendomethylene tetrahydrophthalic anhydride, chlorendic anhydride, methyltetrahydrophthalic anhydride, and glutaric anhydride.

In the formula (c7), $Z^c$ represents a residue that is obtained by removing two acid anhydride groups from a tetracarboxylic dianhydride. Examples of the tetracarboxylic dianhydride include pyromellitic anhydride, benzophenonetetracarboxylic dianhydride, biphenyltetracarboxylic dianhydride, and biphenyl ether tetracarboxylic dianhydride. In the formula (c7), $n^c$ represents an integer of 0 or more and 20 or less.

The acid value of the resin containing an ethylenically unsaturated group is preferably 10 mg KOH/g or more and 150 mg KOH/g or less, more preferably 70 mg KOH/g or more and 110 mg KOH/g or less in terms of resin solid content. The acid value is preferably not lower than 10 mg KOH/g to be likely to obtain a wavelength conversion film forming composition having sufficient solubility in a developing solution in the case of imparting photolithography properties to the wavelength conversion film forming composition. The acid value is preferably not higher than 150 mg KOH/g to obtain sufficient curability and excellent surface properties.

The mass average molecular weight of the resin containing an ethylenically unsaturated group is preferably 1,000 or more and 40,000 or less, more preferably 2,000 or more and 30,000 or less. The mass average molecular weight is preferably not lower than 1,000 to be likely to form a cured film excellent in heat resistance and excellent film strength. The mass average molecular weight is preferably not higher than 40,000 to achieve excellent development.

[Resin for formation of cured film by baking]

The resin for formation of a cured film a by baking is exemplified by a silicon-containing resin. Examples of a preferred silicon-containing resin include one or more selected from a siloxane resin, and polysilane. Application of the wavelength conversion film forming composition containing these silicon-containing resins gives a wavelength conversion film that contains the silicon-containing resin, and baking of the wavelength conversion film gives a silica-based wavelength conversion film. Hereinafter, the siloxane resin and the polysilane are described.

(Siloxane resin)

As the siloxane resin, a siloxane resin obtained by hydrolysis and condensation of at least one type selected from a silane compound represented by the following formula (C-a) is suitably used, for example. $R_{4-n}Si(OR')_n$ (C-a)

In the formula (C-a), R represents a hydrogen atom, an alkyl group, an aryl group, or an aralkyl group; R' represents an alkyl group or a phenyl group; and n represents an integer of 2 or more and 4 or less. When a plurality of R are bonded to Si, the plurality of R may be the same as or different from each other. A plurality of (OR') groups bonded to Si may also be the same as or different from each other.

By subjecting the silane compound described above to hydrolysis and condensation by a conventional procedure, the siloxane resin is obtained. The mass average molecular weight of the siloxane resin is preferably 300 or more and 30,000 or less, more preferably 500 or more and 10,000 or less. Two or more siloxane resins having different mass average molecular weights may be mixed together. When the mass average molecular weight of the siloxane resin is within the above range, a wavelength conversion film forming composition having excellent film-forming properties and capable of forming a flat wavelength conversion film tends to be obtained.

(Polysilane)

The structure of the polysilane is not particularly limited. The polysilane may have any of a linear structure, a

branched structure, a mesh structure, and a cyclic structure, and preferably has a chain structure, namely, a linear structure or a branched structure. The polysilane may have a silanol group and/or an alkoxy group.

Among the polysilanes described above, a polysilane in which an alkyl group is bonded to a silicon atom and an aryl group or an aralkyl group is also bonded to a silicon atom or a polysilane in which an alkyl group alone is bonded to a silicon atom is preferable. More specifically, a polysilane in which a methyl group is bonded to a silicon atom and a benzyl group is also bonded to a silicon atom, a polysilane in which a methyl group is bonded to a silicon atom and a phenyl group is also bonded to a silicon atom, or a polysilane in which a methyl group alone is bonded to a silicon atom is preferably used.

The mass average molecular weight of the polysilane is preferably 300 or more and 100,000 or less, more preferably 500 or more and 70,000 or less, further preferably 800 or more and 30,000 or less. Two or more polysilanes having different mass average molecular weights may be mixed together.

The content of the silicon-containing resin (A) in the wavelength conversion film forming composition is not particularly limited and may be determined depending on the desired film thickness. From the viewpoint of film-forming properties, the content of the silicon-containing resin in the wavelength conversion film forming composition is preferably 1% by mass or more and 50% by mass or less, more preferably 5% by mass or more and 40% by mass or less, particularly preferably 10% by mass or more and 35% by mass or less.

The content of the base (Ca) in the wavelength conversion film is not limited as long as a desired amount of the quantum dots (A) are contained in the wavelength conversion film, and the mass ratio of the quantum dots (A): the base (C) is preferably 99:1 to 1:99 and more preferably 90:10 to 10:90.

<Curing agent (D)>

In a case where the wavelength conversion film contains a component such as an epoxy compound or an oxetane compound, a photocurable component, or a curable component such as a silicon-containing resin as the base component (Cb), in the wavelength conversion film forming composition, a curing agent (D) may be used as the base (Ca) in combination with the base component (Cb). In this case, the curing agent (D) may react with the base component (Cb) to be incorporated into the base (Ca). In addition, the wavelength conversion film may contain the curing agent (D) as it is or may contain a thermal decomposition product or a photo decomposition product of the curing agent (D).

Here, in the present description, the curing agent (D) is not particularly limited as long as the curing agent (D) can cause curing of the base component (Cb). For example, the socalled photopolymerization initiator and the like falls under the curing agent (D) in the present description. It should be noted that in the case in which the base component (Cb) included in the wavelength conversion film composition is an epoxy compound or an oxetane compound having a functional group such as a carboxy group, a carboxylic anhydride group or an amino group, which is reactive with an epoxy group or an oxetanyl group, the wavelength conversion film composition does not necessarily contain the curing agent.

[Photopolymerization initiator (D1)]

A photopolymerization initiator (D1) is used in combination with the photocurable base component (Cb) having an unsaturated double bond and cures the photocurable base component (Cb) through light exposure. The photopolymerization initiator (D1) is not particularly limited and may be a conventionally known photopolymerization initiator. As the wavelength conversion film forming composition containing the photopolymerization initiator (D1), a composition containing the above-described alkali-soluble resin and photopolymerizable low-molecular-weight compound together with the quantum dots (A) and the photopolymerization initiator (D1) is preferable from the viewpoint of photolithography characteristics by alkaline development.

Specific examples of the photopolymerization initiator (D1) include 1-hydroxycyclohexyl phenyl ketone, 2-hydroxy-2-methyl-1-phenylpropan-1-one, 1-[4-(2-hydroxyethoxy)phenyl]-2-hydroxy-2-methyl-1-propan-1-one, 1-(4-isopropylphenyl)-2-hydroxy-2-methylpropan-1-one, 1-(4-dodecylphenyl)-2-hydroxy-2-methylpropan-1-one, 2,2-dimethoxy-1,2-diphenylethan-1-one, bis(4-dimethylaminophenyl) ketone, 2-methyl-1-[4-(methylthio)phenyl]-2-morpholinopropan-1-one, 2-benzyl-2-dimethylamino-1-(4-morpholinophenyl)-butan-1-one, O-acetyl-1-[6-(2-methylbenzoyl)-9-ethyl-9H-carbazol-3-yl]ethanone oxime, (9-ethyl-6-nitro-9H-carbazol-3-yl) [4-(2-methoxy-1-methylethoxy)-2-methylphenyl]methanon O-acetyloxime, 1,2-octanedione, 1-[4-(phenylthio)-, 2-(benzoyloxime), 2,4,6-trimethylbenzoyldiphenylphosphine oxide, 4-benzoyl-4'-methyldimethyl sulfide, 4-dimethylaminobenzoic acid, methyl 4-dimethylaminobenzoate, ethyl 4-dimethylaminobenzoate, butyl 4-dimethylaminobenzoate, 4-dimethylamino-2-ethylhexylbenzoic acid, 4-dimethylamino-2-isoamylbenzoic acid, benzyl-β-methoxyethyl acetal, benzyl dimethyl ketal, 1-phenyl-1,2-propanedion-2-(O-ethoxycarbonyl) oxime, methyl o-benzoylbenzoate, 2,4-diethylthioxanthone, 2-chlorothioxanthone, 2,4-dimethylthioxanthone, 1-chloro-4-propoxythioxanthone, thioxanthene, 2-chlorothioxanthene, 2,4-diethylthioxanthene, 2-methylthioxanthene, 2-isopropylthioxanthene, 2-ethylanthraquinone, octamethylanthraquinone, 1,2-benzanthraquinone, 2,3-diphenylanthraquinone, azobisisobutyronitrile, benzoyl peroxide, cumene hydroperoxide, 2-mercaptobenzimidazole, 2-mercaptobenzoxazole, 2-mercaptobenzothiazole, 2-(o-chlorophenyl)-4,5-di(m-methoxyphenyl)-imidazolyl dimer, benzophenone, 2-chlorobenzophenone, p,p'-bisdimethylaminobenzophenone, 4,4'-bisdiethylaminobenzophenone, 4,4'-dichlorobenzophenone, 3,3-dimethyl-4-methoxybenzophenone, benzil, benzoin, benzoin methyl ether, benzoin ethyl ether, benzoin isopropyl ether, benzoin-n-butyl ether, benzoin isobutyl ether, benzoin butyl ether, acetophenone, 2,2-diethoxyacetophenone, p-dimethylacetophenone, p-dimethylaminopropiophenone, dichloroacetophenone, trichloroacetophenone, p-tert-butylacetophenone, p-dimethylaminoacetophenone, p-tert-butyltrichloroacetophenone, p-tert-butyldichloroacetophenone, $\alpha$,$\alpha$-dichloro-4-phenoxyacetophenone, thioxanthone, 2-methylthioxanthone, 2-isopropylthioxanthone, dibenzosuberone, pentyl 4-dimethylaminobenzoate, 9-phenylacridine, 1,7-bis-(9-acridinyl)heptane, 1,5-bis-(9-acridinyl)pentane, 1,3-bis-(9-acridinyl)propane, p-methoxytriazine, 2,4,6-tris(trichloromethyl)-s-triazine, 2-methyl-4,6-bis(trichloromethyl)-s-triazine, 2-[2-(5-methylfuran-2-yl)ethenyl]-4,6-bis(trichloromethyl)-s-triazine, 2-[2-(furan-2-yl)ethenyl]-4,6-bis(trichloromethyl)-s-triazine, 2-[2-(4-diethylamino-2-methylphenyl)ethenyl]-4,6-bis(trichloromethyl)-s-triazine, 2-[2-(3,4-dimethoxyphenyl)ethenyl]-4,6-bis(trichloromethyl)-s-triazine, 2-(4-methoxyphenyl)-4,6-bis(trichloromethyl)-s-triazine, 2-(4-ethoxystyryl)-4,6-bis(trichloromethyl)-s-triazine, 2-(4-n-butoxyphenyl)-4,6-bis(trichloromethyl)-s-triazine, 2,4-bis-trichloromethyl-6-(3-bromo-4-methoxy)phenyl-s-triazine, 2,4-bis-trichloromethyl-6-(2-bromo-4-methoxy)phenyl-s-triazine, 2,4-bis-trichloromethyl-6-(3-bromo-4-methoxy)styrylphenyl-s-triazine, and 2,4-bistrichloromethyl-6-(2-bromo-4-methoxy)styrylphenyl-s-triazine. The photopolymerization initiator (D1) may be used either individually or in combination of two or more.

Among these, an oxime-type photopolymerization initiator is particularly preferable from the viewpoint of sensitivity. Examples of the preferable oxime-type photopolymerization initiator include O-acetyl-1-[6-(2-methylbenzoyl)-9-ethyl-9H-carbazol-3-yl]ethanone oxime, O-acetyl-1-[6-(2-methylbenzoyl)-9-ethyl-9H-carbazol-3-yl]ethanone oxime, and 1,2-octanedione, 1-[4-(phenylthio)-, 2-(O-benzoyloxime)]. In addition, an oxime ester compound described later as a curing agent for a silicon-containing resin (D4) is also preferably used as the photopolymerization initiator.

The content of the photopolymerization initiator (D1) is preferably 0.5 parts by mass or more and 30 parts by mass or less, more preferably 1 part by mass or more and 20 parts by mass or less parts by mass relative to 100 parts by mass of the solid content of the wavelength conversion film forming composition.

The photopolymerization initiator (D1) may be used in combination with a photoinitiator aid. Examples of the photoinitiator aid include triethanolamine, methyldiethanolamine, triisopropanolamine, methyl 4-dimethylaminobenzoate, ethyl 4-dimethylaminobenzoate, isoamyl 4-dimethylaminobenzoate, 2-ethylhexyl 4-dimethylaminobenzoate, 2-dimethylaminoethyl benzoate, N,N-dimethyl-p-toluidine, 4,4'-bis(dimethylamino)benzophenone, 9,10-dimethoxyanthracene, 2-ethyl-9,10-dimethoxyanthracene, 9,10-diethoxyanthracene, 2-ethyl-9,10-diethoxyanthracene, and thiol compounds such as 2-mercaptobenzothiazole, 2-mercaptobenzoxazole, 2-mercaptobenzimidazole, 2-mercapto-5-methoxybenzothiazole, 3-mercaptopropionic acid, methyl 3-mercaptopropionate, pentaerythritol tetramercaptoacetate, and 3-mercaptopropionate. The photoinitiator aid may be used either individually or in combination of two or more.

[Onium salt (D2)]

The onium salt (D2) can be used together with an epoxy-group-containing resin, an epoxy compound, an oxetane compound, or the like, and accelerates curing of the epoxy-group-containing resin, the epoxy compound, the oxetane compound or the like by the action of light or heat. The onium salt is exemplified by a diazonium salt, an ammonium salt, an iodonium salt, a sulfonium salt, a phosphonium salt, an oxonium salt, and the like. Among these, a sulfonium salt and an iodonium salt are preferable in light of availability and favorable curing. Next, sulfonium salt is described.

An anion constituting the sulfonium salt is preferably a monovalent polyatomic anion, and more preferably an anion represented by $MY_a^-$, $(Rf)_bPF_{6-b}^-$, $R^{x1}{}_cBY_{4-c}^-$, $R^{x1}{}_cGaY_{4-c}^-$, $R^{x2}SO_3^-$, $(R^{x2}SO_2)_3C^-$ or $(R^{x2}SO_2)_2N^-$. In addition, the anion constituting the sulfonium salt may be a halogen anion and examples thereof include a fluoride ion, a chloride ion, a bromide ion, an iodide ion and the like.

M represents a phosphorus atom, a boron atom or an antimony atom. Y represents a halogen atom (preferably a fluorine atom).

Rf represents an alkyl group in which 80 mol% or higher of hydrogen atoms are substituted with fluorine atoms (an alkyl group having 1 or more and 8 or less carbon atoms is preferred). Examples of the alkyl group which is used as Rf by fluorine substitution include linear alkyl groups such as methyl, ethyl, propyl, butyl, pentyl and octyl, branched alkyl groups such as isopropyl, isobutyl, sec-butyl and tert-butyl, and cycloalkyl groups such as cyclopropyl, cyclobutyl, cyclopentyl and cyclohexyl and the like. The proportion of hydrogen atoms substituted with fluorine atoms in these alkyl groups in Rf is preferably 80 mol% or higher, further preferably 90% or higher, particularly preferably 100% based on the number of moles of hydrogen atoms included in an original alkyl group. When the proportion of substitution with fluorine atoms is within these preferred ranges, the sulfonium salt has a further good light sensitivity. Particularly preferred examples of Rf include $CF_3^-$, $CF_3CF_2^-$, $(CF_3)_2CF^-$, $CF_3CF_2CF_2^-$, $CF_3CF_2CF_2CF_2^-$, $(CF_3)_2CFCF_2^-$, $CF_3CF_2(CF_3)CF^-$ and

$(CF_3)_3C^-$. The b number of Rf are independent from each other and thus may be the same or different.

P represents a phosphorus atom, and F represents a fluorine atom.

$R^{x1}$ represents a phenyl group in which part of the hydrogen atoms are substituted with at least one element or electron-withdrawing group. Examples of the one element include halogen atoms such as a fluorine atom, a chlorine atom and a bromine atom. Examples of the electron-withdrawing group include a trifluoromethyl group, a nitro group and a cyano group, and the like. Among these, a phenyl group in which at least one hydrogen atom is substituted with a fluorine atom or a trifluoromethyl group is preferred. The c number of $R^{x1}$ are independent from each other and thus may be the same or different.

B represents a boron atom, and Ga represents a gallium atom.

$R^{x2}$ represents an alkyl group having 1 or more and 20 or less carbon atoms, a fluoroalkyl group having 1 or more and 20 or less carbon atoms, or an aryl group having 6 or more and 20 or less carbon atoms, the alkyl group and the fluoroalkyl group may be linear, branched or cyclic, and the alkyl group, fluoroalkyl group or aryl group may be unsubstituted or have a substituent. Examples of the above substituent include a hydroxy group, an optionally substituted amino group, and a nitro group, and the like. As the optionally substituted amino group, for example, groups exemplified in the description described below regarding the above formulas (D-II) to (D-VI) are exemplified. In addition, the carbon chain of the alkyl group, fluoroalkyl group or aryl group represented by $R^{x2}$ may have a heteroatom such as an oxygen atom, a nitrogen atom or a sulfur atom. In particular, the carbon chain of the alkyl group or fluoroalkyl group represented by $R^{x2}$ may have a divalent functional group (for example, an ether bond, a carbonyl bond, an ester bond, an amino bond, an amide bond, an imide bond, a sulfonyl bond, a sulfonylamide bond, a sulfonylimide bond, a urethane bond, etc.). When the alkyl group, fluoroalkyl group or aryl group represented by $R^{x2}$ has the above substituent, heteroatom or functional group, the number of the above substituents, heteroatoms or functional groups may be one or two or more.

S represents a sulfur atom, O represents an oxygen atom, C represents a carbon atom, and N represents a nitrogen atom.

a represents an integer of 4 or more and 6 or less.
b is preferably an integer of 1 or more and 5 or less, further preferably an integer of 2 or more and 4 or less, and particularly preferably 2 or 3.
c is preferably an integer of 1 or more and 4 or less, and further preferably 4.

Examples of the anion represented by $MY_a^-$ include an anion represented by $SbF_6^-$, $PF_6^-$ or $BF_4^-$, and the like.

Examples of the anion represented by $(Rf)_bPF_{6-b}^-$ include an anion represented by $(CF_3CF_2)_2PF_4^-$, $(CF_3CF_2)_3PF_3^-$, $((CF_3)_2CF)_2PF_4^-$, $((CF_3)_2CF)_3PF_3^-$, $(CF_3CF_2CF_2)_2PF_4^-$, $(CF_3CF_2CF_2)_3PF_3^-$, $((CF_3)_2CFCF_2)_2PF_4^-$, $((CF_3)_2CFCF_2)_3PF_3^-$, $(CF_3CF_2CF_2CF_2)_2PF_4^-$ or $(CF_3CF_2CF_2CF_2)_3PF_3^-$, and the like. Among these, an anion represented by $(CF_3CF_2)_3PF_3^-$, $(CF_3CF_2CF_2)_3PF_3^-$, $((CF_3)_2CF)_3PF_3^-$, $((CF_3)_2CF)_2PF_4^-$, $((CF_3)_2CFCF_2)_3PF_3^-$ or $((CF_3)_2CFCF_2)_2PF_4^-$ is preferred.

The anion represented by $R^{x1}{}_cBY_{4-c}^-$ is preferably:

$$R^{x1}{}_cBY_{4-c}^-,$$

herein $R^{x1}$ represents a phenyl group in which at least part of hydrogen atoms are substituted with a halogen atom or an electron-withdrawing group, Y represents a halogen atom, and c represents an integer of 1 or more and 4 or less, and examples thereof include an anion represented by $(C_6F_5)_4B^-$, $((CF_3)_2C_6H_3)_4B^-$, $(CF_3C_6H_4)_4B^-$, $(C_6F_5)_2BF_2^-$, $C_6F_5BF_3^-$ or $(C_6H_3F_2)_4B^-$, and the like. Among these, an anion represented by $(C_6F_5)_4B^-$ or $((CF_3)_2C_6H_3)_4B^-$ is preferred.

Examples of the anion represented by $R^{x1}{}_cGaY_{4-c}^-$ include an anion represented by $(C_6F_5)_4Ga^-$, $((CF_3)_2C_6H_3)_4Ga^-$, $(CF_3C_6H_4)_4Ga^-$, $(C_6F_5)_2GaF_2^-$, $C_6F_5GaF_3^-$ or $(C_6H_3F_2)_4Ga^-$, and the like. Among these, an anion represented by $(C_6F_5)_4Ga^-$ or $((CF_3)_2C_6H_3)_4Ga^-$ is further preferred.

Examples of the anion represented by $R^{x2}SO_3^-$ include a trifluoromethanesulfonate anion, a pentafluoroethanesulfonate anion, a heptafluoropropanesulfonate anion, a nonafluorobutanesulfonate anion, a pentafluorophenylsulfonate anion, a p-toluenesulfonate anion, a benzenesulfonate anion, a camphorsulfonate anion, a methanesulfonate anion, an ethanesulfonate anion, a propanesulfonate anion and a butanesulfonate anion, and the like. Among these, a trifluoromethanesulfonate anion, a nonafluorobutanesulfonate anion, a methanesulfonate anion, a butanesulfonate anion, a camphorsulfonate anion, a benzenesulfonate anion or a p-toluenesulfonate anion is further preferred.

Examples of the anion represented by $(R^{x2}SO_2)_3C^-$ include an anion represented by $(CF_3SO_2)_3C^-$, $(C_2F_5SO_2)_3C^-$, $(C_3F_7SO_2)_3C^-$ or $(C_4F_9SO_2)_3C^-$, and the like.

Examples of the anion represented by $(R^{x2}SO_2)_2N^-$ include an anion represented by $(CF_3SO_2)_2N^-$, $(C_2F_5SO_2)_2N^-$, $(C_3F_7SO_2)_2N^-$ or $(C_4F_9SO_2)_2N^-$, and the like.

As the monovalent polyatomic anion, in addition to an anion represented by $MY_a^-$, $(Rf)_bPF_{6-b}^-$, $R^{x1}{}_cBY_{4-c}^-$, $R^{x1}{}_cGaY_{4-c}^-$, $R^{x2}SO_3^-$, $(R^{x2}SO_2)_3C^-$ or $(R^{x2}SO_2)_2N^-$, perhalogenate ions (such as $ClO_4^-$ and $BrO_4^-$), halogenated sulfonate

ions (such as $FSO_3^-$ and $ClSO_3^-$), sulfate ions (such as $CH_3SO_4^-$, $CF_3SO_4^-$ and $HSO_4^-$), carbonate ions (such as $HCO_3^-$ and $CH_3CO_3^-$), aluminate ions (such as $AlCl_4^-$ and $AlF_4^-$) , hexafluorobismuthate ion ($BiF_6^-$), carboxylate ions (such as $CH_3COO^-$, $CF_3COO^-$, $C_6H_5COO$, $CH_3C_6H_4COO^-$, $C_6F_5COO^-$ and $CF_3C_6H_4COO^-$), arylborate ions (such as $B(C_6H_5)_4^-$ and $CH_3CH_2CH_2CH_2B(C_6H_5)_3^-$), thiocyanate ion ($SCN^-$), and nitrate ion ($NO_3^-$), and the like can be used.

Among these $X^-$, anions represented by $MY_a^-$, $(Rf)_bPF_{6-b}^-$, $R^{x1}{}_cBY_{4-c}^-$, $R^{x1}{}_cGaY_{4-c}^-$ and $(R^{x2}SO_2)_3C^-$ are preferred, $SbF_6^-$, $PF_6^-$, $(CF_3CF_2)_3PF_3^-$, $(C_6F_5)_4B^-$, $((CF_3)_2C_6H_3)_4B^-$, $(C_6F_5)_4Ga^-$, $((CF_3)_2C_6H_3)_4Ga^-$ and $(CF_3SO_2)_3C^-$ are more preferred, and $R^{x1}{}_cBY_{4-c}^-$ is further preferred from the viewpoint of cationic polymerization performance.

Specific examples of the cation constituting the sulfonium salt include following cation portions.

[Chem. 30]

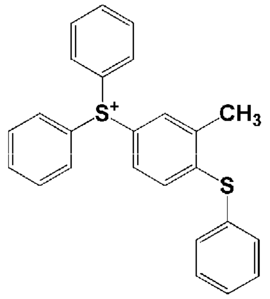
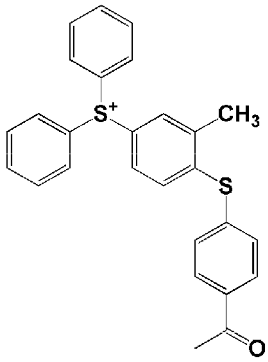
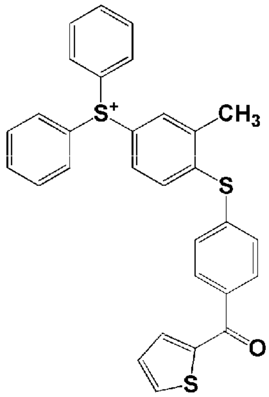
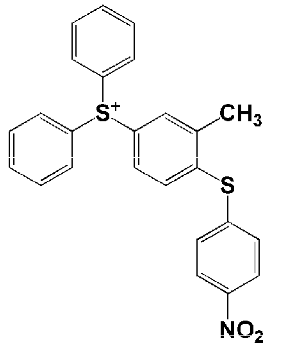

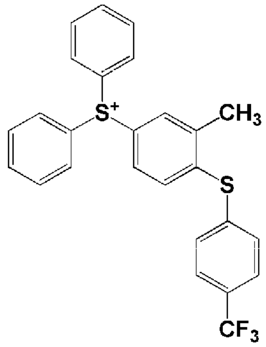
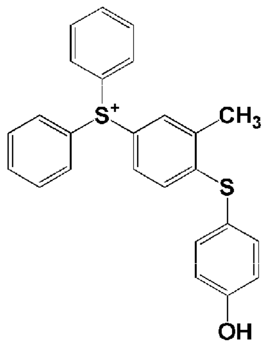
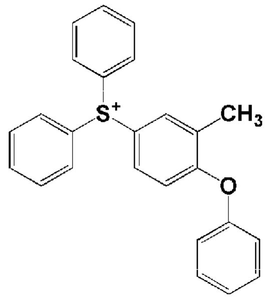
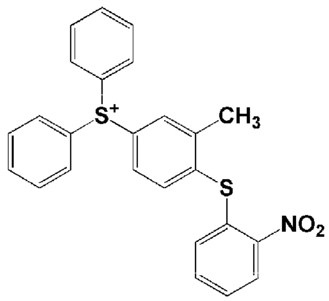

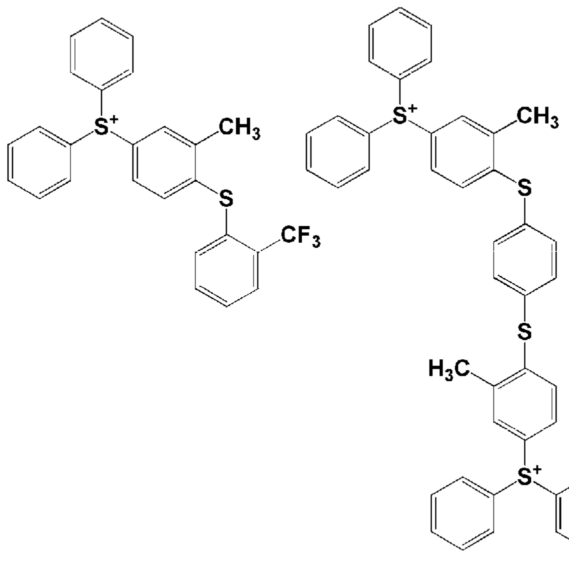
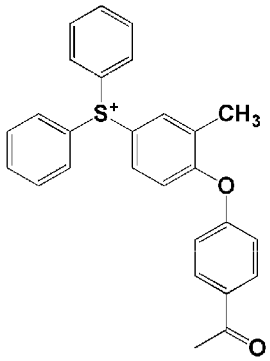
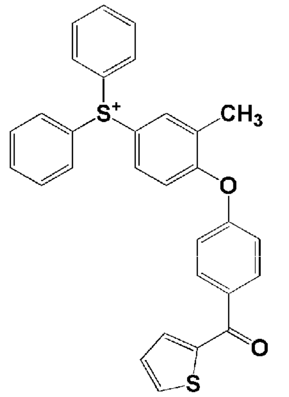

Among the aforementioned group of preferred cation portions, the cation portion represented by the following formula is more preferable.

[Chem. 31]

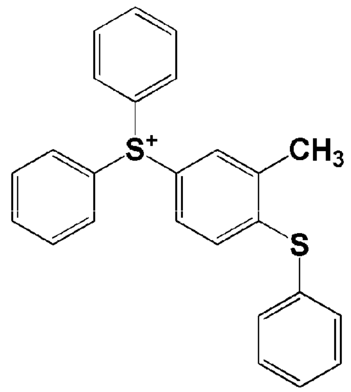

The content of the onium salt (D2) in the wavelength conversion film forming composition is not particularly limited as long as the curing of the wavelength conversion film forming composition favorably proceeds. The content of the onium salt (D2) in the wavelength conversion film forming composition relative to 100 parts by mass of the material to be cured by the onium salt (D2) such as the epoxy-group-containing resin, the epoxy compound, or the oxetane compound is typically 0.01 parts by mass or more and 50 parts by mass or less, preferably 0.01 parts by mass or more and 30 parts by mass or less, more preferably 0.01 parts by mass or more and 20 parts by mass or less, even more preferably 0.05 parts by mass or more and 15 parts by mass or less, and particularly preferably 1 part by mass or more and 10 parts by mass or less from the viewpoint of ease of favorably curing the wavelength conversion film forming composition.

[Curing agent for epoxy-group-containing resin, epoxy compound or oxetane compound (D3)]

A curing agent for an epoxy-group-containing resin, an epoxy compound or an oxetane compound (D3) (hereinafter, also referred to as "curing agent (D3)") can be appropriately selected from curing agents which are conventionally known and other than the onium salt (D2) described above. The curing agent (D3) can be used together with the epoxy-group-containing resin, the epoxy compound or the oxetane compound, and contributes to curing by heating.

Examples of the curing agent (D3) include a phenol-based curing agent, an acid anhydride-based curing agent, a polyamine-based curing agent, and catalytic curing agent. The amount of the phenol-based curing agent and the acid anhydride-based curing agent used relative to 100 parts by mass of the amount of the base component (Cb) in the wavelength conversion film forming composition is preferably 1 part by mass or more and 200 parts by mass or less, more preferably 50 parts by mass or more and 150 parts by mass or less, and particularly preferably 80 parts by mass or more and 120 parts by mass or less. The phenol-based curing agent, and the acid anhydride-based curing agent can be each used individually or two or more thereof can be used in combination. The amount of the polyamine-based curing agent used relative to 100 parts by mass of the amount of the base component (Cb) in the wavelength conversion film forming composition is preferably 0.1 parts by mass or more and 50 parts by mass or less, more preferably 0.5 parts by mass or more and 30 parts by mass or less, and particularly preferably 1 part by mass 15 parts by mass. These polyamine-based curing agents can be used individually or two or more polyamine-based curing agents can be used in combination. The amount of the catalytic curing agent used relative to 100 parts by mass of the amount of the base component (Cb) in the wavelength conversion film forming composition is preferably 1 part by mass or more and 100 parts by mass or less, more preferably 1 part by mass or more and 80 parts by mass or less, and particularly preferably 1 part by mass or more and 50 parts by mass or less. These catalytic curing agents can be used individually or two or more catalytic curing agents can be used in combination. It should be noted that the amount of the base component (Cb) is, in particular, the total of the amount of the epoxy compound and the amount of the oxetanyl compound. The amount of the epoxy compound and the amount of the oxetanyl compound include the amount of the resin including the epoxy group and/or the oxetanyl group.

[Curing agent for silicon-containing resin (D4)]

The wavelength conversion film forming composition including the silicon-containing resin as the base component (Cb) may comprise a curing agent for a silicon-containing resin (D4) (hereinafter, referred to as "curing agent (D4)"). When the wavelength conversion film forming composition including the silicon-containing resin comprises the curing agent (D4), it is likely to form a wavelength conversion film that is not readily subjected to dissolution, swelling, or deformation by the action of an organic solvent such as N-methyl-2-pyrrolidone and thus has an excellent organic solvent resistance.

Examples of a suitable curing agent (D4) include Brønsted acids such as hydrochloric acid, sulfuric acid, nitric acid, benzenesulfonic acid, and p-toluenesulfonic acid; imidazoles such as 2-methylimidazole and 2-ethyl-4-methylimidazole;

organic amines such as 2,4,6-tris(dimethylaminomethyl)phenol, benzylmethylamine, DBU (1,8-diazabicyclo[5.4.0]-7-undecene), and DCMU (3-(3,4-dichlorophenyl)-1,1-dimethylurea); phosphorus compounds represented by $PX_3$ (in the formula, X represents a halogen atom, a hydroxyl group, or an alkoxy group having 1 or more and 6 or less carbon atoms) such as phosphorus trichloride, phosphorus tribromide, phosphorous acid, trimethyl phosphite, triethyl phosphite and tripropyl phosphite;

phosphorus compounds represented by $POX_3$ (in the formula, X represents a halogen atom, a hydroxyl group, or an alkoxy group having 1 or more and 6 or less carbon atoms) such as oxyphosphorus trichloride, oxyphosphorus tribromide, phosphoric acid, trimethyl phosphate, triethyl phosphate and tripropyl phosphate;

phosphorus pentoxide;

phosphorus compounds represented by $H(HPO_3)_xOH$ (in the formula, x is an integer of 1 or more) such as polyphosphoric acid and polyphosphoric acid esters;

phosphorus compounds represented by $R^{D0}PX_2$ (in the formula, $R^{D0}$ represents a hydrogen atom or an organic group having 1 or more and 30 or less carbon atoms, in which a hydrogen atom in the organic group is optionally substituted with a halogen atom; X represents a halogen atom, a hydroxyl group, or an alkoxy group having 1 or more and 6 or less carbon atoms) such as methyldichlorophosphine, ethyldichlorophosphine and methoxydichlorophosphine;

organophosphorus compounds such as tributylphosphine, triphenylphosphine, tris(p-tolyl)phosphine, tris(m-tolyl)phosphine, tris(o-tolyl)phosphine, diphenylcyclohexylphosphine, tricyclohexylphosphine, tris(dimethoxyphenyl)phosphine, ethyltriphenylphosphonium bromide, benzyltriphenylphosphonium chloride, and 1,4-bis(diphenylphosphino)butane;

boron compounds represented by $BX_3$ (in the formula, X represents a halogen atom, a hydroxyl group, or an alkoxy group having 1 or more and 6 or less carbon atoms) such as boron trifluoride, boron trichloride, boric acid, trimethyl borate, triethyl borate, tripropyl borate, tributyl borate, triamyl borate, trihexyl borate, tricyclopentyl borate, tricyclohexyl borate, triallyl borate, triphenyl borate and ethyl dimethyl borate; boron oxide ($B_2O_3$);

boron compounds represented by $R^{D0}BX_2$ (in the formula, $R^{D0}$ represents a hydrogen atom or an organic group having 1 or more and 30 or less carbon atoms, in which a hydrogen atom in the organic group is optionally substituted with a halogen atom; X represents a halogen atom, a hydroxyl group, or an alkoxy group having 1 or more and 6 or less carbon atoms) such as phenylboronic acid, diisopropoxy(methyl)borane, methylboronic acid and cyclohexylboronic acid; organophosphorus compound complexes such as triphenylphosphine triphenylborane, tetraphenylphosphonium tetra-p-tolylborate, tetraphenylphosphonium tetraphenylborate,

tetraphenylphosphonium thiocyanate, tetraphenylphosphonium dicyanamide, and n-butyltriphenylphosphonium dicyanamide; complexes of a Lewis acid such as boron trifluoride and an organic amine (the organic amine is piperidine, for example); and

amidines such as azabicycloundecene, diazabicycloundecene toluenesulfonic acid salt, and diazabicycloundecene octylic acid salt. The organic group as the above-described $R^{D0}$ is a carbon atom-containing group and more preferably a group composed of one or more carbon atoms and one or more atoms selected from the group consisting of H, O, S, Se, N, B, P, Si, and a halogen atom. The number of carbon atoms in the carbon atom-containing group is not particularly limited, but is preferably 1 or more and 50 or less and more preferably 1 or more and 20 or less.

When the polysilane is used as the base component (Cb), it is preferable to use, in addition to the curing agent (D4) or alone, a curing agent that generates a base by the action of light or heat.

(Curing agent that generates base component by action of heat)

The curing agent that generates a base component by the action of heat is not particularly limited as far as it is a compound conventionally used as a heat-responsive base generator. As the curing agent that generates a base

component by the action of heat, 2-benzyl-2-dimethylamino-1-(4-morpholinophenyl)-butan-1-one may be used, for example. 2-Benzyl-2-dimethylamino-1-(4-morpholinophenyl)-butan-1-one also generates a base by the action of light.

In addition, the heat-responsive imidazole generator that generates an imidazole compound by heating is also preferably used as the curing agent. As such a heat-responsive imidazole generator, as described above, the compound described in Japanese Unexamined Patent Application, Publication No. 2016-145308 or Japanese Unexamined Patent Application, Publication No. 2017-025226 can be used.

Specific examples of the compounds particularly suitable for the heat-responsive imidazole generator are shown below.

[Chem. 32]

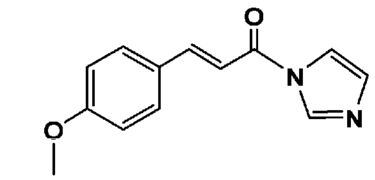
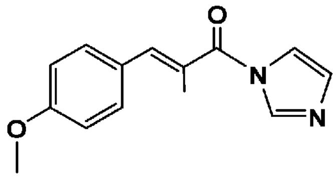
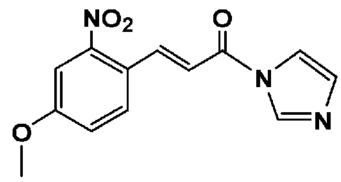
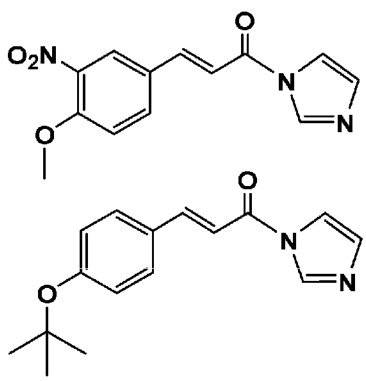
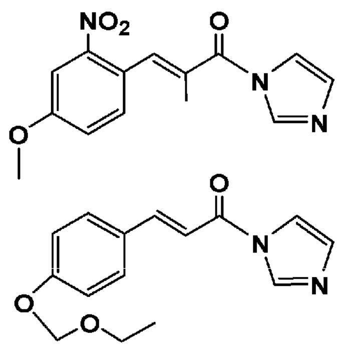
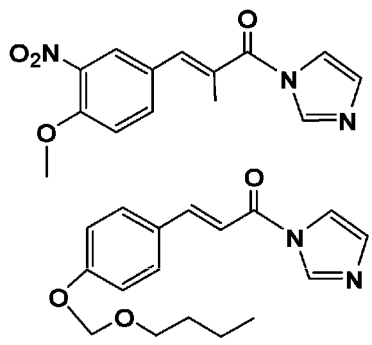

(Oxime ester compound)

An oxime ester compound degrades by the action of light and generates a base. Examples of a suitable oxime ester compound include following compounds 1 to 41.

[Chem. 33]

Compound 1

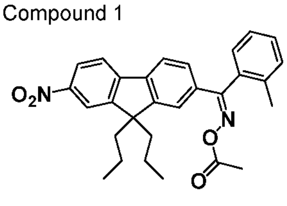

Compound 2

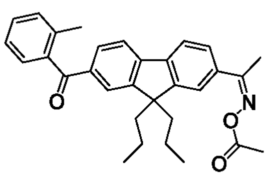

Compound 3

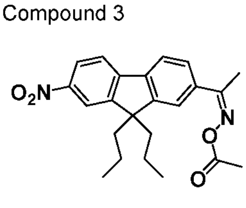

Compound 4

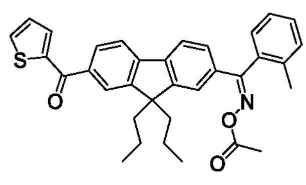

Compound 5

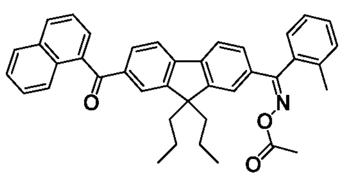

Compound 6

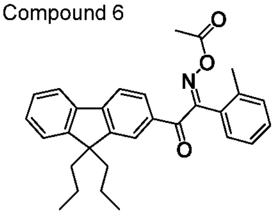

Compound 7

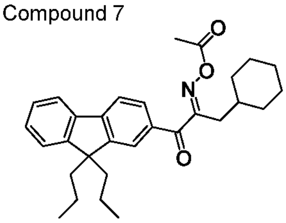

Compound 8

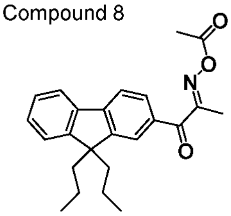

Compound 9

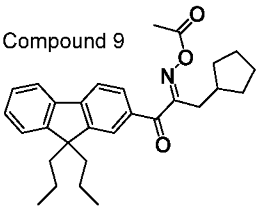

Compound 10

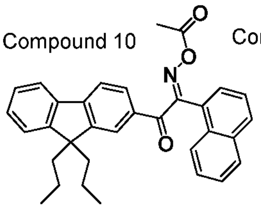

Compound 11

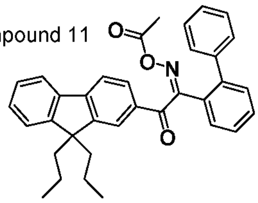

Compound 12

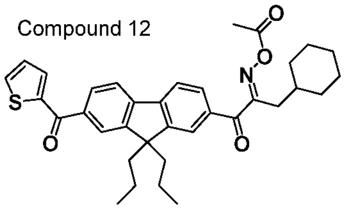

Compound 13

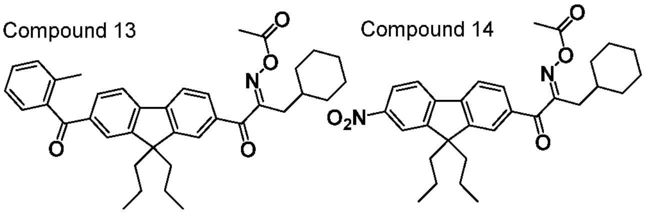

Compound 14

Compound 15

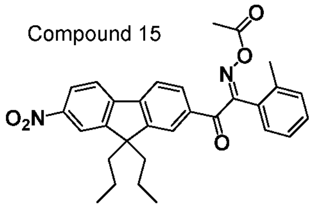

Compound 16

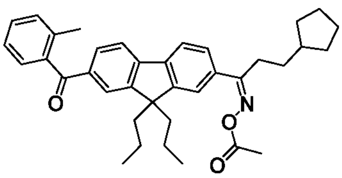

Compound 17

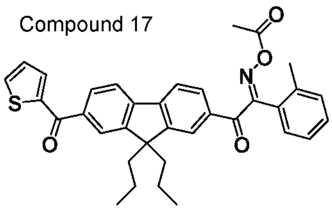

Compound 18

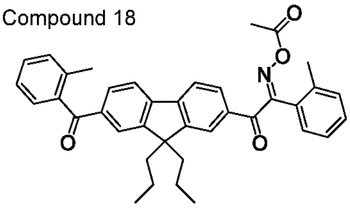

Compound 19

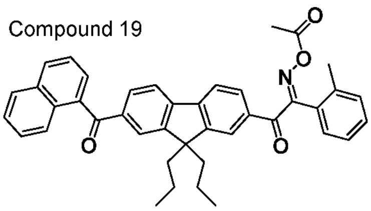

Compound 20

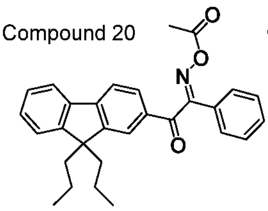

Compound 21

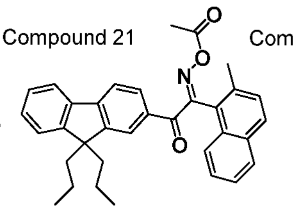

Compound 22

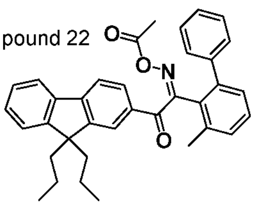

[Chem. 34]

Compound 23

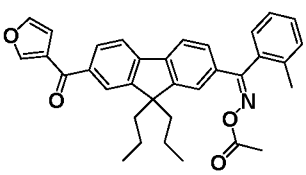

Compound 24

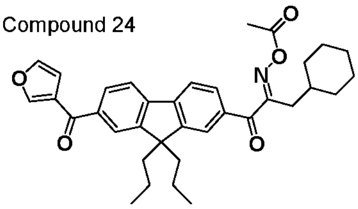

Compound 25

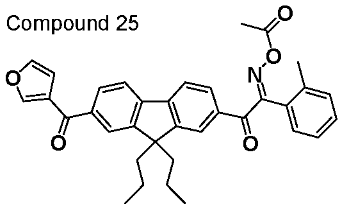

Compound 26

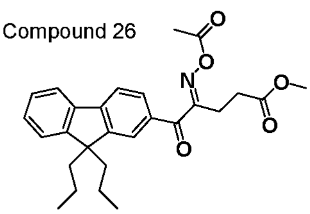

Compound 27

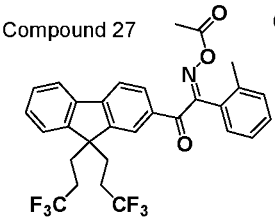

Compound 28

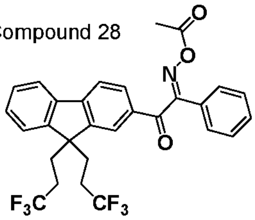

Compound 29

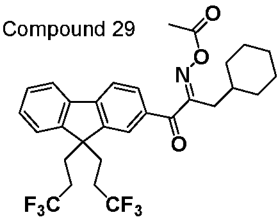

Compound 30 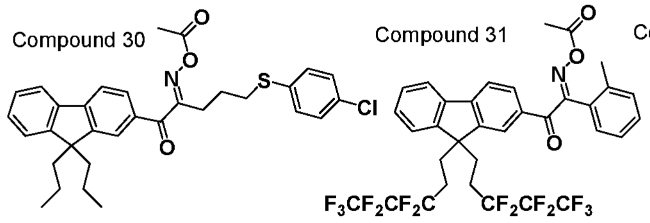 Compound 31

Compound 32 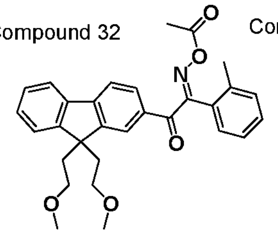

Compound 33 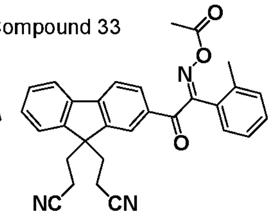

Compound 34 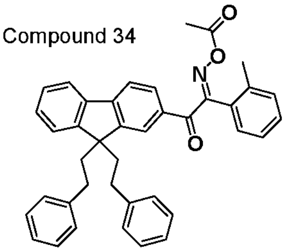

Compound 35 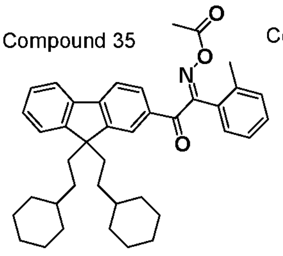

Compound 36 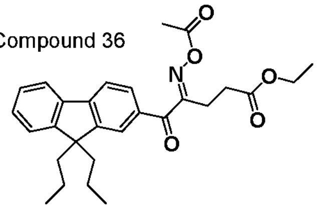

Compound 37 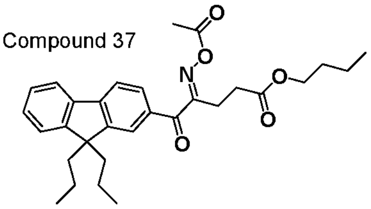

Compound 38 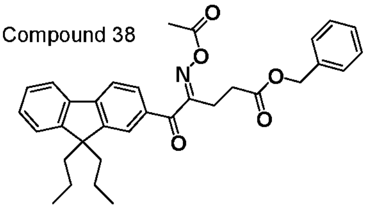

Compound 39 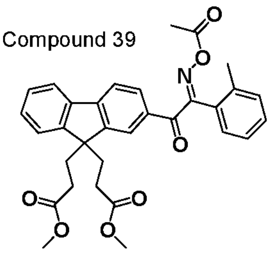

Compound 40 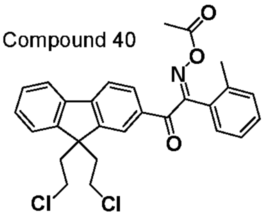

Compound 41 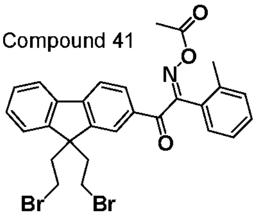

As the curing agent (D4) in the wavelength conversion film forming composition, two or more curing agents in different categories or of different types may be contained. Typically, the content of the curing agent (D4) in the wavelength conversion film forming composition is preferably 0.01% by mass or more and 40% by mass or less, more preferably 0.1% by mass or more and 20% by mass or less, and particularly preferably 1% by mass or more and 10% by mass or less relative to the mass of the solid content of the wavelength conversion film forming composition.

The wavelength conversion film may contain, in addition to the components described above, various components as long as the object of the present invention is not impaired. These arbitrary components will be described later regarding the wavelength conversion film forming composition.

The wavelength conversion film described above satisfies the above-described predetermined requirements regarding the light beam transmittances and thereby exhibits a high OD value. Therefore, in a case where the wavelength conversion film described above is applied to various image display panels and image display devices, it is easy to display highly bright and clear images.

<<Wavelength conversion film forming composition>>

Hereinafter, the wavelength conversion film forming composition used to form the above-described wavelength conversion film will be described.

As a first example of the wavelength conversion film forming composition from which the above-described wavelength conversion film can be formed, a wavelength conversion film forming composition containing primary particles of quantum dots and a quantum dot cluster composed of two or more primary particles of the quantum dots can be

exemplified. The wavelength conversion film forming composition may contain appropriately, in addition to the primary particles of the quantum dots (A) and the clusters of the quantum dots (A), one or more components selected from the group consisting of the ligands of the clusters of the quantum dots (A) (compound represented by the formula (1)), the above-described light-scattering fine particles (B), the base (Ca), the base component (Cb), the curing agent (D), a liquid organic compound described later, and other components.

It is preferable that a ligand is bonded to the surface of the quantum dot cluster. The ligand is as described above regarding the wavelength conversion film.

<Liquid organic compound>

The wavelength conversion film forming composition may contain a liquid organic compound from the viewpoint of the stability of the quantum dot clusters in the wavelength conversion film. Here, the liquid organic compound is an organic compound that is itself liquid at 20°C under atmospheric pressure or can dissolve in solvents (S) in the wavelength conversion film forming composition.

In a case where the wavelength conversion film forming composition contains the above-described liquid organic compound, the SP value of the liquid organic compound is 17 $MPa^{0.5}$ or more and 22 $MPa^{0.s}$ or less, which makes it possible to prepare the wavelength conversion film forming composition while maintaining the cluster property of the quantum dot clusters. Particularly, in a case where the quantum dot cluster contains the compound represented by the formula (1) as a ligand, since it is considered that, when the SP value of the liquid organic compound is within the above-described range, the balance of the interaction with the substituent R in the formula (1) becomes favorable, the quantum dot clusters can be dispersed in the system while maintaining the cluster state with appropriate sizes (100 nm to 700 nm and preferably 200 nm to 600 nm) (without being decomposed into the quantum dots (A) as single entities and dispersed). Therefore, the QY or the contrast of the OD values becomes favorable.

The SP value of the liquid organic compound may be 17.5 $MPa^{0.s}$ or more, 18 $MPa^{0.s}$ or more, or 19 $MPa^{0.s}$ or more. The SP value of the liquid organic compound may be 21.5 $MPa^{0.s}$ or less, 21 $MPa^{0.s}$ or less, or 20 $MPa^{0.s}$ or less.

In a case where the wavelength conversion film forming composition contains a solvent (S), the solvent (S) is preferably selected from liquid organic compounds having an SP value of 17 $MPa^{0.5}$ or more and 22 $MPa^{0.5}$ or less.

Suitable specific examples of the liquid organic compound having an SP value within the above-described range are described below. In the following compound group, the number described immediately after each compound is the SP value. Suitable specific examples of the organic compounds include hydrocarbons such as bicyclohexyl (17.00), 1,2-propanediene (17.01), cyclopentene (17.21), cyclopentadiene (17.22), dimethylacetylene (17.24), fenchene (17.25), cycloheptane (17.26), 2-pinene (DL) (17.28), cyclopropane (17.30), cyclohexene (17.34), 3-n-butyltoluene (17.43), 4-n-butyltoluene (17.43), n-butylbenzene (17.44), cyclopropene (17.48), cis-decahydronaphthalene (17.60), 2-n-butyltoluene (17.63), 1,2-diethylbenzene (17.73), dipentene (DL-limonene) (17.82), ethylbenzene (17.87), vinylacetylene (17.97), trans-decahydronaphthalene (18.00), high-boiling point naphtha (18.00), p-diethylbenzene (18.01), 1,3,5-trimethylbenzene (mesitylene) (18.02), 1,2,4-trimethylbenzene (18.06), methylacetylene (18.09), p-xylene (18.10), toluene (18.16), isopropylbenzene (cumene) (18.18), diphenylacetylene (18.39), benzene (18.51), 1,2,3,5-tetramethylbenzene (18.61), cyclohexylbenzene (18.73), α-methylstyrene (18.81), 1,2,3,4-tetramethylbenzene (18.81), 2-vinyltoluene (19.01), styrene (19.07), acetylene (19.15), hexamethylbenzene (19.27), phenylacetylene (19.42), diphenylmethane (19.55), biphenyl (19.83), p-divinylbenzene (19.90), tetrahydronaphthalene (19.91), naphthalene (20.19), 1-methylnaphthalene (20.27), indene (20.92), and fluorene (21.44); halogenated hydrocarbons such as 2-chloropropene (17.03), dichloromonofluoromethane (17.08), ethyl chloride (17.09), chloroprene (17.11), isopropyl chloride (17.12), 1-chlorobutane (17.22), 3-chloro-2-methylpropene (17.26), 1-chlorohexane (17.34), 1,1-dichloroethylene (17.37), vinyl chloride (17.44), 1,1,1-trichloroethane (17.46), 2-chloro-2-methylpropane (17.47), 2,3-dichloro-1,3-butadiene (17.48), 1-chloropentane (17.53), 2-chlorobutane (17.65), 1,1,1-trifluoroethane (17.70), 1,1-difluoroethane (17.80), 2-bromopropene (17.87), 1-chloro-1,3-butadiene (17.88), 1-chloro-1-fluoroethylene (17.88), propyl chloride (17.91), bromoethylene (17.93), 1,2-dibromoethylene (17.94), trifluoromethane (17.96), 1-chloro-2-butene (18.05), ethylfluoride (18.07), 1-chloro-2-methylpropene (18.09), 4-bromo-1-butene (18.12), 2-bromopropane (18.20), cic-1-bromopropene (18.21), 2,3-dichloropropene (18.23), 1,1-dichloropropane (18.23), allyl chloride (18.24), cyclohexyl chloride (18.26), 1,1-dibromoethylene (18.29), 1,3-bis(trifluoromethyl)benzene (18.31), lopropene (18.40), 3-chloropropyne (18.41), 2-iodo-1,3-butadiene (18.45), 1,1-dichloroethane (18.50), bromochloromethane (18.55), 2-bromobutane (18.56), 1-chloro-2-bromoethylene (18.57), pentachloroethane (18.63), methyl chloride (18.64), ethyl bromide (18.66), bromoprene (18.67), allyl bromide (18.70), hexachloroethane (18.71), trans-dichloroethylene (18.72), 4-bromo-1,2-butadiene (18.80), 1,3-dichloro-2-butene (18.81), 1-bromopropane (18.83), 1,2-dichloropropane (18.92), chloroform (18.95), 1,1,1,2-tetrachloroethane (19.00), 1,1,2-trichloroethylene (19. 02), cis-1,2-dichloroethylene (19.06), chlorocyclopropane (19.14), tetrachloroethylene (19.17), fluorobenzene (19.20), cis-1,2-dichloropropene (19.23), methyl bromide (19.32), bromoacetylene (19.39), 1,1,2,2-tetrachloropropane (19.40), 1,4-dichloro-2-butene (19.46), 4-iodo-1,2-butadiene (19.52), fluoromethane (19.55), p-chlorostyrene (19.58), chlorobenzene (19.58), trifluoromethylbenzene (19.59), 4-chloro-1,2-butadiene (19.61), 1-chloro-2-ethylbenzene (19.65), allyl iodide (19.67), o-chlorostyrene (19.67), 1,5-dichloropentane (19.67), 1,2,3-trichloropropane (19.73), o-chlorotoluene (19.76), ethyl iodide (19.78), dichloromethane (19.82), methyl iodide (19.84), ethylenedichloride (19.89), (trichloromethyl) benzene (19.92), 3-bromopropyne (19.95), 1,3-dichloropropane (20.00), bromotrichloromethane (20.01), m-dichlorobenzene (20.05), 1,4-dichlorobutane (20.05), 1,1,2-trichloroethane (20.14), o-difluorobenzene (20.15), 1,1,2,2-tetrachloroethane (20.19), vinyl iodide (20.19), p-chlorotoluene (20.25), benzyl chloride (20.26), 1,2-dichloro-1,3-butadiene (20.28), trichlorobiphenyl (20.34), o-bromotoluene (20.37), bromobenzene (20.39), hexachlorobenzene (20.41), 2-chloroethylbenzene (20.42), o-dichlorobenzene (20.47), (dichloromethyl) benzene (benzal chloride) (20.60), p-dichlorobenzene (20.66), 3,4-dichloro-α,α,α-trifluorotoluene (20.68), 2,5-dichloro-α,α,α-trifluorotoluene (20.68), o-bromostyrene (20.87), p-bromotoluene (20.87), 1,2,4-trifluorobenzene (20.88), 1-chloronaphthalene (21.23), 1-bromonaphthalene (21.23), dibromomethane (21.24), α,α,α,4-tetrachlorotoluene (21.32), 1,2-dibromoethane (21.33), o-chlorofluorobenzene (21.36), iodobenzene (21.55), pentachlorocyclopropane (21.59), 1,3-dichloro-2-fluorobenzene (21.60), bromoform (21.77), and 1,2,3-trichloropropane (21.90); ether compounds such as methyl vinyl ether (17.02), diethylene glycol dibutyl ether (17.06), ethylene glycol butylmethyl ether (17.07), allyl isopropyl ether (17.09), vinyl allyl ether (17.10), ethylene glycol diethyl ether (17.13), ethylene glycol di-tert-butyl ether (17.32), 1,3-dimethoxybutane (17.34), dimethyl ether (17.34), dimethoxymethane (17.38), 1,2-dimethoxyethane (dimethyl cellosolve) (17.58), 1,8-cineole (17.65), 1-ethoxy-2-propanol (17.69), diethylene glycol diethyl ether (17.77), cyclopentyl methyl ether (17.77), paraaldehyde (17.80), vinylbutylcarbitol (17.80), furan (17.90), methyl-1-propynyl ether (17.92), 1,1,3,3-tetramethoxypropane (17.93), ethyl-1-propynyl ether (17.97), di-(2-methoxyethyl) ether (18.05), ethylene glycol methyl tert-butyl ether (18.09), 2-methyl tetrahydrofuran (18.14), vinyl ethyl carbitol (18.23), ethylethynyl ether (18.29), triethylene glycol monooleyl ether (18.33), 1-methoxy-1,3-butadiene (18.39), propylene glycol monobutyl ether (18.41), vinyl(2-methoxyethyl) ether (18.55), vinyl(2-chloroethyl) ether (18.55), tetrahydropyran (18.56), propylene glycol monoisobutyl ether (18.60), ethylene glycol monoisobutyl ether (18.63), diisobutylcarbinol (18.66), menthofuran (18.66), 2-methyl-1,3-dioxolane (18.87), 1-chlorovinyl ethyl ether (18.89), ethyl methyl ether (18.91), diethylene glycol methyl-tert-butyl ether (18.97), 2-methylfuran (19.02), benzyl ethyl ether (19.17), dihydropyran (19.21), 2,5-diethoxytetrahydrofuran (19.23), diethylene glycol divinyl ether (19.28), tripropylene glycol monomethyl ether (19.30), phenetol (ethyl phenyl ether) (19.36), 2-methoxytetrahydropyran (19.38), tetrahydrofuran (19.46), 4-methylmorpholine (19.54), ethylene glycol mono-2-ethylhexyl ether (19.57), propylene glycol monopropyl ether (19.58), anisole (19.59), butoxyethoxypropanol (19.66), ethylene glycol mono-tert-butyl ether (19.70), propylene glycol mono-tert-butyl ether (19.70), dipropylene glycol mono-n-butyl ether (19.72), 3,4-epoxy-1-butene (19.74), 1,4-dioxane (19.76), 1,2-epoxy-2-propene (19.78), diethylene glycol hexyl ether (19.80), 3-butoxybutanol (19.89), trans-anetol (19.92), dipropylene glycol methyl ether (19.95), propylene glycol monoisopropyl ether (19.96), propylene glycol monoethyl ether (19.97), 2,5-dimethoxytetrahydrofuran (20.03), dipropylene glycol mono-n-propyl ether (20.04), diphenyl ether (20.10), bromomethyl methyl ether (20.17), 2,3-benzofuran (20.20), ethylene glycol mono-n-hexyl ether (20.27), dimethylisosorbide (20.41), diethylene glycol monobutyl ether (20.43), propylene glycol monomethyl ether (20.44), bis-(m-phenoxyphenyl) ether (20.49), bis(chloromethyl) ether (20.51), epichlorohydrin (20.54), dibenzyl ether (20.56), 1-chloro-4-ethoxybenzene (20.77), 1,2-dichlorovinyl ethyl ether (20.78), ethylene glycol monobutyl ether (20.82), diethylene glycol monopropyl ether (20.87), 1,2-methylenedioxybenzene (20.99), 2-methoxy-1,3-dioxolane (21.14), di(2-chloroethoxy) methane (21.14), p-fluoroanisole (21.16), 3-methoxybutanol (21.17), nonylphenoxyethanol (21.30), 1-chloro-2-ethoxybenzene (21.30), di(2-chloroisopropyl) ether (21.31), 1,3-dioxolane (21.39), 3-methoxy-3-methylbutanol (21.50), propylene glycol monophenyl ether (21.52), di(2-chloroethyl) ether (21.61), 1-bromo-4-ethoxybenzene (21.62), morpholine (21.66), 1,2-dimethoxybenzene (21.83), triethylene glycol monomethyl ether (21.83), and diethylene glycol monomethyl ether (21.96); esters compound such as isopropyl palmitate (17.07), isoamyl acetate (17.11), hexyl acetate (17.11), sec-butyl acetate (17.22), ethyl butyrate (17.22), butyl oleate (17.23), methyl oleate (17.24), amyl acetate (17.26), butyl-6-methyl-3-cyclohexene carboxylate (17.26), cyclohexane-1,2-dicarboxylic acid diisononyl ester (17.29), n-butyl methacrylate (17.29), ethyl propionate (17.36), n-butyl acetate (17.41), isobutyl acrylate (17.43), allyl methacrylate (17.44), n-propyl propionate (17.44), isoamyl propionate (17.46), n-butyl acrylate (17.49), diisononyl adipate (17.50), vinyl butyrate (17.50), hexylene glycol diacetate (17.50), 3-methyl-3-methoxybutyl acetate (17.54), ditridecyl phthalate (17.56), dioctyl adipate (17.58), n-pentyl propionate (17.58), isopropyl acetate (17.59), n-propyl acetate (17.62), n-butyl propionate (17.65), triisononyl trimellitate (17.69), benzyl methacrylate (17.77), dibutyl sebacate (17.77), 3-methoxybutyl acetate (17.79), triisooctyl trimellitate (17.83), diisodecyl phthalate (17.91), ethyl acrylate (17.91), glycerol tributyrate (17.91), methyl methacrylate (17.92), diisobutyl adipate (17.99), isobutyl formate (18.09), diisononyl phthalate (18.10), L-menthyl acetate (18.12), dimethyl sebacate (18.13), vinyl propionate (18.15), ethyl acetate (18.15), allyl acetate (18.19), dibutyl fumarate (18.24), propyl methacrylate (18.24), diethylhexyl phthalate (18.28), ethylene glycol butyl ether acetate (18.35), tri-n-butylacetyl citrate (18.44), diethylene glycol butyl ether acetate (18.44), methyl propionate (18.49), propylene glycol monoethyl ether acetate (18.50), vinyl acetate (18.51), diisoheptyl phthalate (18.59), 1-acetoxy-1,3-butadiene (18.64), 2-chloroethylethyl ether (18.69), methyl acetate (18.70), ethoxyethyl propionate (18.73), dibenzyl sebacate (18.76), allyl formate (18.80), dipropylene glycol monomethyl ether acetate (18.81), di(2-ethylhexyl) azelate (18.84), ethyl methacrylate (18.91), vinyl crotonate (18.94), dihexyl phthalate (18.97), 2,2,4-trimethyl-1,3-pentanediol monoisobutyrate (19.01), dibutyl maleate (19.01), propagyl acetate (19.02),

acetyltriethyl citrate (19.02), n-butyl acetoacetate (19.04), diethyladipate (19.07), propyl formate (19.10), ethylene glycol monoethyl ether acrylate (19.11), methyl acrylate (19.17), di(2-ethylhexyl) sebacate (19.19), glycidyl methacrylate (19.25), vinyl formate (19.25), propylene glycol monomethyl ether acetate (19.26), diethylene glycol monoethyl ether acetate (19.32), butyl formate (19.32), allyl acetacetate (19.35), dibasic acid ester (19.37), glycerol triacetate (19.37), meclofenoxate (19.38), diethyl glutarate (19.38), dimethyl-2-methyl glutarate (19.40), $\alpha$-chloromethyl acrylate (19.45), ethylene glycol diacetate (19.51), ethyl formate (19.53), 1,4-butanediol diacrylate (19.56), mono-2-ethylhexyl phthalate (19.60), dimethyl adipate (19.60), diethyl succinate (19.61), ethylene glycol monoethyl ether acetate (19.68), diethyl malonate (19.68), dimethyl glutarate (19.68), tri-n-butyl citrate (19.80), ethyl acetoacetate (19.86), ethyl benzoate (19.87), butyl lactate (19.90), dimethyl succinate (19.90), butyl benzoate (19.91), benzyl acetate (20.08), diethyl oxalate (20.10), dibutyl phthalate (20.19), methyl formate (20.22), 2-chloroallylidene-3,3-diacetate (20.24), ethyl cyanoacetate (20.25), ethylene glycol monomethyl ether acetate (20.44), methyl-p-methylbenzoate (20.44), castor oil (20.44), ethyl cyanoacrylate (20.45), methyl acetoacetate (20.55), diethyl phthalate (20.55), ethyl cinnamate (20.56), methyl chloroformate (20.69), dimethyl maleate (20.75), triethyl citrate (20.98), methylfuran-2-carboxylate (21.08), methyl benzoate (21.13), 2-chloroethyl acetate (21.18), benzyl benzoate (21.28), ethyl chloroformate (21.31), phenyl acetate (21.45), ethyl lactate (21.68), and n-butyl salicylate (21.92); ketones such as ethyl amyl ketone (17.31), ethyl butyl ketone (17.44), 4-methoxy-4-methyl-2-pentanone (pentoxone) (17.46), methyl isoamyl ketone (17.47), dimethyl ketone (17.57), methyl-n-amyl ketone (17.66), diacetyl (17.85), diethyl ketone (18.15), dipropyl ketone (18.20), dibutyl ketone (18.29), methyl n-propyl ketone (18.33), mesityl oxide (18.60), hexachloroacetone (18.79), methyl ethyl ketone (19.05), cyclodecanone (19.05), L-menthone (19.34), isophorone (19.44), 1,1-dichloroacetone (19.48), 2-methylcyclohexanone (19.82), 3-methylcyclohexanone (19.87), acetone (19.94), ethyl vinyl ketone (19.94), acetylacetone (19.94), cyclooctanone (20.04), 4-(trifluoromethyl) acetophenone (20.07), chloroacetone (20.12), cyclohexanone (20.33), pulegon (20.39), methyl isopropenyl ketone (20.48), methyl vinyl ketone (20.61), methyl-1-propenyl ketone (20.71), cycloheptanone (20.77), cyclopropyl methyl ketone (20.82), diacetone alcohol (20.82), 4-fluoropropiophenone (21.14), d-camphor (21.21), acetophenone (21.22), p-chloroacetophenone (21.40), benzophenone (21.40), and pentafluorobenzophenone (21.62); oximes such as methyl ethyl ketoxime (17.35) and acetoxime (19.95); ketenes such as dimethyl ketene (17.57) and ketene (18.00); carboxylic acids such as oleic acid (17.39), stearic acid (17.52), caprylic acid ((octanoic acid) 18.02), pentanoic acid (18.65), isobutyric acid (19.64), propionic acid (19.95), Isovaleric acid (20.01), methacrylic acid (20.04), butanoic acid (20.34), hexanoic acid (20.39), acrylic acid (20.41), 4-pentenoic acid (20.70), acetic acid (21.37), cis-2-methylacrylic acid (21.52), trifluoroacetic acid (21.62), and sebacic acid (21.90); aldehydes such as isovaleraldehyde (18.20), hexanal (18.66), 4-pentenal (18.76), 2-ethylcrotonaldehyde (18.80), pentanal (19.20), methacrylaldehyde (19.53), butyraldehyde (19.59), 3-ethoxypropionaldehyde (19.70), propionaldehyde (20.12), trichloroacetaldehyde (chloral) (20.21), acrolein (20.35), dichloroacetaldehyde (20.44), acetaldehyde (20.85), 2-chloro-2-butenal (21.40), benzaldehyde (21.43), 2-methyl-2-butenal (21.80), 4-chlorobenzaldehyde (21.89), and propargyl aldehyde (21.90); alcohols or phenols such as methanol cluster (18.42), oleyl alcohol (18.52), hexafluorohexanol (18.58), cetyl alcohol (18.66), tridecyl alcohol (18.79), dodecanol (18.93), L-menthol (18.95), 2-decanol (19.10), nonylphenol (19.33), 1-decanol (19.71), 4-methyl-2-pentanol (19.98), 1-nonanol (20.00), 2-ethylhexanol (20.07), 2-octanol (20.11), 1-octanol (20.16), 2-heptanol (20.31), 3-heptanol (20.47), 1-heptanol (20.52), 2-tert-butyl-4-methylphenol (20.57), isooctanol (20.67), 1-hexanol (21.04), 2-methyl-2-butanol (21.17), 3-methyl-2-butanol (21.21), 2-ethyl-1-butanol (21.22), 1-methylcyclohexanol (21.27), isoamyl alcohol (21.30), 2-methyl-1-pentanol (21.35), 2-pentanol (21.48), 2,2-dimethyl-1-propanol (21.63), tert-butyl alcohol (21.75), and 1-pentanol (21.93); amines such as 2-ethylhexylamine (17.36), diallylamine (17.56), N-methylpyrrolidine (18.29), n-butylamine (18.62), cyclohexylamine (18.65), hydrazine (18.70), propylamine (18.81), piperazine (18.93), ethylamine (19.26), N-chlorodimethylamine (19.47), dimethylamine (19.56), allylamine (19.62), piperidine (19.67), 1,1-dimethylhydrazine (19.75), N,N-dichloromethylamine (19.81), N,N-dichloroethylamine (19.98), pyrrolidine (20.43), 2-(diethylamino) ethanol (20.59), propyleneimine (20.73), vinylamine (20.92), nicotine (21.10), diphenylamine (21.11), benzylamine (21.69), 2,4-dimethylaniline (21.71), and N-methylaniline (21.84); boron-containing compounds such as tri-n-butylborate (17.42); sulfide-containing compounds such as diethyl sulfide (17.20), vinyl butyl sulfide (17.61), 1-butane thiol (17.72), carbonyl sulfide (17.79), chloromethyl sulfide (17.90), ethyl methyl sulfide (2-thiabutane) (17.94), divinyl sulfide (18.02), 1-propanethiol (18.04), methyl vinyl sulfide (18.14), vinyl (4-ethoxybutyl) sulfide (18.19), ethane thiol (18.42), vinyl ethyl sulfide (18.50), vinyl (2-ethoxyethyl) sulfide (18.81), 2-propanethiol (18.81), dimethyl sulfide (18.84), 2-chloroethylethyl sulfide (18.92), sulfuryl chloride (19.02), diethyl disulfide (19.14), allyl mercaptan (19.23), methyl mercaptan (20.22), dimethyl disulfide (20.32), thioacetic acid (20.32), diisobutyl sulfoxide (20.33), di-n-butyl sulfoxide (20.41), sulfur dioxide (20.50), thiophene (20.59), tetrahydrothiophene (20.66), methylphenyl sulfide (20.72), N,N,N',N'-tetramethylthiourea (21.11), ethyl thiocyanate (21.12), $\gamma$-thiobutyrolactone (21.14), 1,2-etandithiol (21.16), 2-bromothiophene (21.27), dihydrogen disulfide (21.29), hydrogen sulfide (21.46), tetrahydrothiapyran (21.47), 1,4-thioxane (21.54), ethane-1,2-diol bis(methanesulfonate) (21.55), 2-chlorothiophene (21.70), diisopropyl sulfoxide (21.82), and thiocyanic acid (21.91); phosphorus-containing compounds such as trioctyl phosphate (17.75), tri-n-butyl phosphate (18.00), diisopropyl methylphosphonate (20.04), and trimethyl phosphate (21.47); cyano compounds such as 2-methylidene propanedinitrile (18.13), trichloroacetonitrile (19.00), cyanogen (dicyan) (19.16), methacrylonitrile (19.21), valeronitrile (19.45), butyronitrile (20.34), allyl acetonitrile (20.40), 2-methyl-3-butenenitrile (20.56), 1-cyano-1,3-butadiene (20.65), dichloroacetonitrile (20.79), 4-chlorobenzonitrile (21.47), acrylonitrile (21.59), 1-fluoroacrylonitrile (21.64), and propionitrile (21.65); amides or ureas such as N,N-dibutylformamide (18.92), vinylpyrrolidone (19.75), N-benzylpyrrolidone (20.00), N-cyclohexyl-2-pyrrolidone (20.49), N,N-dimethylbutylamide (20.88), N-n-butylpyrrolidone (20.93), N,N-diethylacetamide (21.28), N-acetylcaprolactam (21.35), N,N,N',N'-tetramethylurea (21.61), and N,N-diethylformamide (21.99); other compounds such as trichloromethylsilane (18.11), pine oil (18.67), ethyl hypochlorite (19.04), methyl isocyanate (19.54), ethyl isocyanate (19.68), n-propyl nitrate (19.85), 4,4'-methylenebis(phenyl isocyanate) (20.00), dimethyl carbonate (20.21), 4-ethyl-1,3-dioxolan-2-one (20.28), 4-vinylpyridine (20.63), acridine (20.95), 2,5-dimethylpyrrole (20.95), cyanogen chloride (21.30), allyl isocyanide (21.39), methyl nitrate (21.65), 2,4-diisocyanato-1-methylbenzene (21.73), and pyridine (21.75); and the like.

Among these, the hydrocarbons, the ester compounds, the ketones, the alcohols or phenols, the sulfur-containing compounds, or the ureas are preferable. Further, in a case where the wavelength conversion film forming composition contains the base (Ca) and/or the base component (Cb), the ester compounds, the ketones, the sulfur-containing compounds, or the ureas are preferable from the viewpoint of compatibility and the like.

In a case where the wavelength conversion film forming composition is used as a quantum dot cluster dispersion liquid in an ink use and the like, the content of the liquid organic compound is, for example, preferably 10% by mass or more and 99% by mass or less, more preferably 30% by mass or more and 90% by mass or less, and even more preferably 40% by mass or more and 80% by mass or less relative to the entire wavelength conversion film forming composition. In this case, the total sum of the quantum dot clusters, the (non-clustered) quantum dots, and the liquid organic compound is, for example, 70% by mass or more, preferably 80% by mass, and more preferably 90% by mass and may be 100% by mass relative to the entire wavelength conversion film forming composition. In the case of using a photosensitive or curable component in combination, the content of the liquid organic compound is, for example, preferably 20% by mass or more and 80% by mass or less, more preferably 30% by mass or more and 70% by mass or less, and even more preferably 40% by mass or more and 60% by mass or less relative to the entire wavelength conversion film forming composition.

<Other components>

The wavelength conversion film forming composition may contain other components other than the above-described various components as long as the object of the present invention is not impaired. Examples of the other components include a silane coupling agent, an adhesion enhancer, a dispersant, a surfactant, an ultraviolet ray-absorbing agent, an antioxidant, an antifoaming agent, a viscosity modifier, a resin, rubber particles, a colorant, and the like. In addition, in a case where the wavelength conversion film forming composition contains rubber particles, elasticity is given to wavelength conversion films to be formed, and it is easy to eliminate the brittleness of the wavelength conversion films.

In addition, the wavelength conversion film forming composition preferably contains an ionic liquid (I) from the viewpoint of promoting the dispersion of the quantum dots (A) or the stabilization of the dispersion. In a case where the wavelength conversion film forming composition contains the ionic liquid (I), the composition preferably contains the above-described organic solvent (S2a) together with the ionic liquid (I). When the wavelength conversion film forming composition contains the ionic liquid (I) and the organic solvent (S2a) in combination, the effects of promoting the dispersion of the quantum dots (A) and the stabilization of the dispersion are likely to be further enhanced.

As the ionic liquid (I), ionic liquids that are used in the field of organic synthesis and in electrolytes for batteries etc. can be used without any particular limitation. The ionic liquid (I) is typically a salt capable of being molten in a temperature region of 140°C or lower, and is preferably a stable salt that is liquid at 140°C or lower.

The melting point of the ionic liquid (I) is preferably 120°C or lower, more preferably 100°C or lower, and even more preferably 80°C or lower from the viewpoint of, for example, more reliable achievement of desired effects and the handleability of the ionic liquid (I) and the wavelength conversion film forming composition.

The ionic liquid (I) is preferably composed of an organic cation and an anion. The ionic liquid (I) is preferably composed of a nitrogen-containing organic cation, a phosphorus-containing organic cation, or a sulfur-containing organic cation, and a counteranion, and more preferably of a nitrogen-containing organic cation or a phosphorus-containing organic cation, and a counteranion.

As the organic cation constituting the ionic liquid (I), at least one selected from the group consisting of an alkyl chain quaternary ammonium cation, a piperidinium cation, a pyrimidinium cation, a pyrrolidinium cation, an imidazolium cation, a pyridinium cation, a pyrazolium cation, a guanidinium cation, a morpholinium cation, a phosphonium cation and a sulfonium cation is preferable, and an alkyl chain quaternary ammonium cation, a piperidinium cation, a pyrrolidinium cation, an imidazolium cation, a morpholinium cation, or a phosphonium cation is more preferable in light of e.g. their favorable affinity for the solvent (S) described later, and a pyrrolidinium cation, an imidazolium cation, or a phosphonium cation is even more preferable from the viewpoint of the effects of the present invention.

Specific examples of the alkyl chain quaternary ammonium cation include a quaternary ammonium cation represented by the following formula (L1). More specifically, the alkyl chain quaternary ammonium cation is exemplified by, for example, a tetramethylammonium cation, an ethyltrimethylammonium cation, a diethyldimethylammonium cation, a triethylmethylammonium cation, a tetraethylammonium cation, an octyltrimethylammonium cation, a hexyltrimethylammonium cation, a methyltrioctylammonium cation, and the like. Specific examples of the piperidinium cation include a piperidinium cation represented by the following formula (L2). More specifically, the piperidinium cation is exemplified by, for example, a 1-propylpiperidinium cation, a 1-pentylpiperidinium cation, a 1,1-dimethylpiperidinium cation, a 1-methyl-1-ethylpiperidinium cation, a 1-methyl-1-propylpiperidinium cation, a 1-methyl-1-butylpiperidinium cation, a 1-methyl-1-pentylpiperidinium cation, a 1-methyl-1-hexylpiperidinium cation, a 1-methyl-1-heptylpiperidinium cation, a 1-ethyl-1-propylpiperidinium cation, a 1-ethyl-1-butylpiperidinium cation, a 1-ethyl-1-pentylpiperidinium cation, a 1-ethyl-1-hexylpiperidinium cation, a 1-ethyl-1-heptylpiperidinium cation, a 1,1-dipropylpiperidinium cation, a 1-propyl-1-butylpiperidinium cation, a 1,1-dibutylpiperidinium cation, and the like. Specific examples of the pyrimidinium cation include a 1,3-dimethyl-1,4,5,6-tetrahydropyrimidinium cation, a 1,2,3-trimethyl-1,4,5,6-tetrahydropyrimidinium cation, a 1,2,3,4-tetramethyl-1,4,5,6-tetrahydropyrimidinium cation, a 1,2,3,5-tetramethyl-1,4,5,6-tetrahydropyrimidinium cation, a 1,3-dimethyl-1,4-dihydropyrimidinium cation, a 1,3-dimethyl-1,6-dihydropyrimidinium cation, a 1,2,3-trimethyl-1,4-dihydropyrimidinium cation, a 1,2,3-trimethyl-1,6-dihydropyrimidinium cation, a 1,2,3,4-tetramethyl-1,4-dihydropyrimidinium cation, a 1,2,3,4-tetramethyl-1,6-dihydropyrimidinium cation, and the like.

Specific examples of the pyrrolidinium cation include a pyrrolidinium cation represented by the following formula (L3), and more specifically, a 1,1-dimethylpyrrolidinium cation, a 1-ethyl-1-methylpyrrolidinium cation, a 1-methyl-1-propylpyrrolidinium cation, a 1-methyl-1-butylpyrrolidinium cation, a 1-methyl-1-pentylpyrrolidinium cation, a 1-methyl-1-hexylpyrrolidinium cation, a 1-methyl-1-heptylpyrrolidinium cation, a 1-ethyl-1-propylpyrrolidinium cation, a 1-ethyl-1-butylpyrrolidinium cation, a 1-ethyl-1-pentylpyrrolidinium cation, a 1-ethyl-1-hexylpyrrolidinium cation, a 1-ethyl-1-heptylpyrrolidinium cation, a 1,1-dipropylpyrrolidinium cation, a 1-propyl-1-butylpyrrolidinium cation, a 1,1-dibutylpyrrolidinium cation, and the like. Specific examples of the imidazolium cation include an imidazolium cation represented by the following formula (L5), and more specifically, a 1,3-dimethylimidazolium cation, a 1,3-diethylimidazolium cation, a 1-ethyl-3-methylimidazolium cation, a 1-propyl-3-methylimidazolium cation, a 1-butyl-3-methylimidazolium cation, a 1-hexyl-3-methylimidazolium cation, a 1-octyl-3-methylimidazolium cation, a 1-decyl-3-methylimidazolium cation, a 1-dodecyl-3-methylimidazolium cation, a 1-tetradecyl-3-methylimidazolium cation, a 1,2-dimethyl-3-propylimidazolium cation, a 1-ethyl-2,3-dimethylimidazolium cation, a 1-butyl-2,3-dimethylimidazolium cation, a 1-hexyl-2,3-dimethylimidazolium cation, and the like. Specific examples of the pyridinium cation include a pyridinium cation represented by the following formula (L6), and more specifically, a 1-ethylpyridinium cation, a 1-butylpyridinium cation, a 1-hexylpyridinium cation, a 1-butyl-3-methylpyridinium cation, a 1-butyl-4-methylpyridinium cation, a 1-hexyl-3-methylpyridinium cation, a 1-butyl-3,4-dimethylpyridinium cation, and the like.

Specific examples of the pyrazolium cation include a 1,3-dimethyl-1,4,5,6-tetrahydropyrimidinium cation, a 1,2,3-trimethyl-1,4,5,6-tetrahydropyrimidinium cation, a 1,2,3,4-tetramethyl-1,4,5,6-tetrahydropyrimidinium cation, a 1,2,3,5-tetramethyl-1,4,5,6-tetrahydropyrimidinium cation, a 1,3-dimethyl-1,4-dihydropyrimidinium cation, a 1,3-dimethyl-1,6-dihydropyrimidinium cation, a 1,2,3-trimethyl-1,4-dihydropyrimidinium cation, a 1,2,3-trimethyl-1,6-dihydropyrimidinium cation, a 1,2,3,4-tetramethyl-1,4-dihydropyrimidinium cation, a 1,2,3,4-tetramethyl-1,6-dihydropyrimidinium cation, and the like.

Specific examples of the phosphonium cation include a phosphonium cation represented by the following formula (L4). More specifically, the phosphonium cation is exemplified by tetraalkylphosphonium cations such as a tetrabutylphosphonium cation, a tributylmethylphosphonium cation, and a tributylhexylphosphonium cation, and a triethyl(methoxymethyl)phosphonium cation, and the like. Specific examples of the sulfonium cation include a triethylsulfonium cation, a dimethylethylsulfonium cation, a triethylsulfonium cation, an ethylmethylpropylsulfonium cation, a butyldimethylsulfonium cation, a 1-methyltetrahydrothiophenium cation, a 1-ethyltetrahydrothiophenium cation, a 1-propyltetrahydrothiophenium cation, a 1-butyltetrahydrothiophenium cation, or a 1-methyl-[1,4]-thioxonium cation, and the like. Among these, as the sulfonium cation, a sulfonium cation having a cyclic structure such as a tetrahydrothiophenium-based or hexahydrothiopyrylium-based 5-membered ring or 6-membered ring is preferable, and the sulfonium cation may have a heteroatom such as an oxygen atom in the cyclic structure.

[Chem. 35]

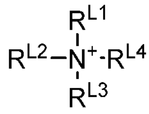

(L1)

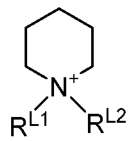

(L2)

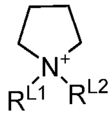

(L3)

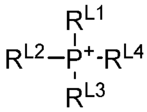

(L4)

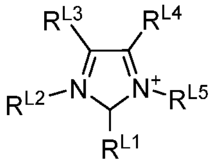

(L5)

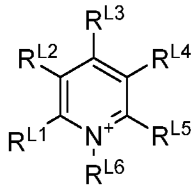

(L6)

In the formulas (L1) to (L4), $R^{L1}$ to $R^{L4}$ each independently represent an alkyl group having 1 or more and 20 or less carbon atoms, or an alkoxyalkyl group represented by $R^{L7}$-O-$(CH_2)_{Ln}$- (in which, $R^{L7}$ represents a methyl group or an ethyl group, and Ln represents an integer of 1 or more and 4 or less). In the formula (L5), $R^{L1}$ to $R^{L4}$ each independently represent an alkyl group having 1 or more and 20 or less carbon atoms, an alkoxyalkyl group represented by $R^{L7}$-O-$(CH_2)_{Ln}$-(in which, $R^{L7}$ represents a methyl group or an ethyl group, and Ln represents an integer of 1 or more and 4 or less), or a hydrogen atom. In the formula (L6), $R^{L1}$ to $R^{L6}$ each independently represent an alkyl group having 1 or more and 20 or less carbon atoms, an alkoxyalkyl group represented by $R^{L7}$-O-$(CH_2)_{Ln}$- (in which, $R^{L7}$ represents a methyl group or an ethyl group, and Ln represents an integer of 1 or more and 4 or less), or a hydrogen atom.

The anion constituting the ionic liquid (I) may be an organic anion or an inorganic anion. The organic anion is preferable because of favorable affinity of the ionic liquid (I) for the solvent (S). The organic anion is preferably at least one selected from the group consisting of a carboxylic acid-based anion, an N-acylamino acid ion, an acidic amino acid anion, a neutral amino acid anion, an alkyl sulfuric acid-based anion, a fluorine-containing compound-based anion and a phenol-based anion, more preferably a carboxylic acid-based anion or an N-acylamino acid ion.

Specific examples of the carboxylic acid-based anion include an acetate ion, a decanoate ion, a 2-pyrrolidone-5-carboxylate ion, a formate ion, an $\alpha$-lipoate ion, a lactate ion, a tartarate ion, a hippurate ion, an N-methylhippurate ion, and the like. Among these, an acetate ion, a 2-pyrrolidone-5-carboxylate ion, a formate ion, a lactate ion, a tartarate ion, a hippurate ion and an N-methylhippurate ion are preferable, and an acetate ion, an N-methylhippurate ion and a formate ion are more preferable. Specific examples of the N-acylamino acid ion include an N-benzoylalanine ion, an N-acetylphenylalanine ion, an aspartate ion, a glycine ion, an N-acetylglycine ion, and the like, and among these, an N-benzoylalanine ion, an N-acetylphenylalanine ion and an N-acetylglycine ion are preferable, and an N-acetylglycine ion is more preferable.

Specific examples of the acidic amino acid anion include an aspartate ion, a glutamate ion, and the like, and specific examples of the neutral amino acid anion include a glycine ion, an alanine ion, a phenylalanine ion, and the like. Specific examples of the alkyl sulfuric acid-based anion include a methanesulfonate ion, and the like. Specific examples of the fluorine-containing compound-based anion include a trifluoromethanesulfonate ion, a hexafluorophosphonate ion, a trifluorotris(pentafluoroethyl)phosphonate ion, a bis(fluoroalkylsulfonyl)imide ion (for example, a bis(perfluoroalkylsulfonyl)imide ion having 1 or more and 5 or less carbon atoms, and preferably bis(trifluoromethanesulfonyl)imide ion), a trifluoroacetate ion, a tetrafluoroborate ion, and the like. Specific examples of the phenol-based anion include a phenol ion, a 2-methoxyphenol ion, a 2,6-di-tert-butylphenol ion, and the like.

The inorganic anion is preferably at least one selected from the group consisting of $F^-$, $Cl^-$, $Br^-$, $I^-$, $BF_4^-$, $PF_6^-$ and $N(SO_2F)_2^-$, more preferably $BF_4^-$, $PF_6^-$ or $N(SO_2F)_2^-$, and even more preferably $BF_4^-$ or $PF_6^-$ from the viewpoint of more reliable achievement of the effects of the invention.

The ionic liquid (I) can be produced by, for example, a procedure disclosed in paragraph 0045 of PCT International Publication No. 2014/178254, etc. The ionic liquid (I) can be used individually or two or more ionic liquids (B) can be used in combination. The content of the ionic liquid (I) relative to 100 parts by mass of the quantum dots (A) is preferably 10 parts by mass or more and 500 parts by mass or less, more preferably 90 parts by mass or more and 400 parts by mass or less, and even more preferably 100 parts by mass or more and 300 parts by mass or less from the viewpoint of a favorable effect of dispersion of the quantum dots (A) in the wavelength conversion film forming composition.

<<Method for producing cluster-containing quantum dot >>

A method for producing a cluster-containing quantum dot containing the above-described quantum dot clusters is not particularly limited. As a preferred production method, a method including heating a mixture containing quantum dots and a compound represented by the following formula (1):

R-SH (1)

(R in the formula (1) is a saturated aliphatic hydrocarbon group having 6 or more and 18 or less carbon atoms) to a temperature of 150°C or higher and 300°C or lower, and cooling the heated mixture to cluster primary particles of the quantum dots, can be exemplified.

Hereinafter, the step of heating the mixture containing the quantum dots and the compound represented by the formula (1) to a temperature of 150°C or higher and 300°C or lower is also referred to as a heating step. The step of cooling the heated mixture to cluster the primary particles of the quantum dots is also referred to as a cooling step.

<Heating step>

In the heating step, the mixture containing the quantum dots and the compound represented by the formula (1) is heated to a temperature of 150°C or higher and 300°C or lower. The compound represented by the formula (1) is as described above regarding the wavelength conversion film. The compound represented by the formula (1) acts as a ligand bonding to the surfaces of quantum dot clusters and also acts as a dispersion medium that disperses the quantum dots when the quantum dot clusters are produced. The amount of the compound represented by the formula (1) used is, for example, 1 part by mass or more and 200 parts by mass or less, preferably 5 parts by mass or more and 120 parts by mass or less, more preferably 10 parts by mass or more and 100 parts by mass or less, and even more preferably 20 parts by mass or more and 80 parts by mass or less relative to 100 parts by mass of the quantum dots.

In the heating step, an organic solvent may be used together with the compound represented by the formula (1) as long as the formation of the clusters is not inhibited. As the organic solvent, a liquid organic compound can be used. In addition, a dispersion medium for the quantum dots, which are a starting material, may be contained. The boiling point of the dispersion medium for the quantum dots is preferably lower than 150°C or 150°C or higher and lower than the boiling point of the compound represented by the formula (1), which is heated together with the dispersion medium.

The quantum dots used in the preparation of the mixture may be a dry powder or a dispersion liquid dispersed in the organic solvent and/or the compound represented by the formula (1). From the viewpoint of availability, commercially available quantum dots are preferably used as the dispersion liquid dispersed in the organic solvent in the preparation of the mixture.

The mixture may contain various substances to an extent that the formation of the quantum dot clusters is possible. As such substances, dispersants for dispersing the quantum dots, for example, materials that can coat the outermost surfaces of the primary particles of the quantum dots during heating such as metal salts of fatty acids or carboxylic acids such as zinc stearate, zinc acetate, zinc propionate, zinc myristate, and zinc oleate; zinc halides such as zinc fluoride, zinc chloride, zinc bromide, and zinc iodide; other zinc thiolates, dialkyl zinc, trialkylphosphine selenium, and selenol, and the like can be exemplified.

The concentrations of the quantum dots in the mixture before the heating and after the heating are, for example, preferably 10% by mass or more and 99.5% by mass or less, more preferably 25% by mass or more and 80% by mass or less, and even more preferably 30% by mass or more and 70% by mass or less.

The concentration of the quantum dots (A) in the mixture may vary during the heating. For example, the heating may be performed while distilling away the organic solvent and/or the compound represented by the formula (1). In addition, the heating may be performed while adding the organic solvent and/or the compound represented by the formula (1) to the mixture.

The mixture is heated to 150°C or higher and 300°C or lower, preferably 160°C or higher and 270°C or lower, and more preferably 170°C or higher and 250°C or lower. The heating is preferably performed under a condition where the compound represented by the formula (1) is not excessively distilled away. As the heating under a condition where the compound represented by the formula (1) is not distilled away, heating in a closed pressure-resistant container, heating at the boiling point of the compound represented by the formula (1) or lower, and heating while refluxing the compound represented by the formula (1) in the mixture can be exemplified. In a case where the mixture contains the organic solvent, part or all of the organic solvent may be distilled away during the heating.

The heating time is not particularly limited as long as the quantum dot clusters can be formed. The heating time is, typically, preferably 5 minutes or longer and 12 hours or shorter, more preferably 10 minutes or longer and 6 hours or shorter, and even more preferably 30 minutes or longer and 3 hours or shorter.

<Cooling step>

In the cooling step, the mixture heated in the heating step is cooled. When the mixture is cooled, part or all of the primary particles of the quantum dots in the mixture are clustered. The temperature of the mixture after the cooling is not particularly limited as long as clusters are formed. The temperature of the mixture after the cooling is preferably a temperature at which the organic solvent and/or the compound represented by the formula (1) does not solidify. Typically, the temperature of the mixture after the cooling is preferably 0°C or higher and 60°C or lower, more preferably 5°C or higher and 50°C or lower, and even more preferably 10°C or higher and 40°C or lower.
The cooling method is not particularly limited. The heated mixture may be cooled by being placed in an atmosphere at room temperature or the mixture may be cooled by contact with a refrigerant such as water, blast, or the like.
The cluster-containing quantum dots obtained by cooling the heated mixture as described above can be used in the preparation of the wavelength conversion film forming composition as a liquid containing the quantum dot clusters or as a powder separated from the liquid. The quantum dot cluster contained in the cluster-containing quantum dot has both a function as the quantum dot (A) and a function as the above-described light-scattering fine particle (B). Therefore, the cluster-containing quantum dots are used suitably in the formation of the above-described wavelength conversion film or in the preparation of the wavelength conversion film forming composition.

<<Method for forming wavelength conversion film>>

A wavelength conversion film is formed by drying and/or curing a coating film formed from the wavelength conversion film forming composition described above. When the wavelength conversion film forming composition is cured, a curing method is not particularly limited, and heating, light exposure, or a combination of heating and light exposure may be employed. The wavelength conversion film is suitably used for use of a light-emitting display element.
A typical example of a method for producing the wavelength conversion film is described below. The wavelength conversion film may be directly formed on various functional layers in a laminated body, a light-emitting display element panel or the like, or may be formed on a substrate of any material such as a metal substrate, a glass substrate or the like, and then peeled from the substrate for use. In addition, the wavelength conversion film may be formed in a region surrounded by light-shielding partition walls that define pixels in a light-emitting display element panel or the like.
First, the wavelength conversion film forming composition is coated on e.g. any substrate or a functional layer to form a coating film. Examples of the coating method include methods in which a contact transfer-type applicator such as a roll coater, a reverse coater or a bar coater, and a noncontact type applicator such as a spinner (a rotary applicator), a slit coater, or a curtain flow coater are used. After adjusting the viscosity of the wavelength conversion film forming composition within an appropriate range, the liquid composition may be coated by a printing method such as ink-jet printing or screen printing to form a coating film which is patterned into a desired shape.
Then, a volatile component such as the solvent (S) is removed as needed to dry the coating film. The method of drying is not particularly limited, and examples thereof include a method in which the coating film is dried under reduced pressure at room temperature using a vacuum dryer (VCD) and then dried on a hot plate at a temperature of 60°C or higher and 120°C or lower, and preferably 70°C or higher and 100°C or lower, for 60 seconds or longer and 180 seconds or shorter. After forming the coating film in this manner, the coating film is subjected to light exposure and/or heating. Light exposure is carried out by irradiation with active energy rays such as excimer laser light. The dose of energy used in the irradiation varies depending on the composition of the wavelength conversion film forming composition, and is for example preferably 30 mJ/cm$^2$ or more and 2,000 mJ/cm$^2$ or less, and more preferably 50 mJ/cm$^2$ or more and 500 mJ/cm$^2$ or less. The temperature for heating is not particularly limited, and is preferably 180°C or higher and 280°C or lower, more preferably 200°C or higher and 260°C or lower, and particularly preferably 220°C or higher and 250°C or lower. The heating time is typically preferably 1 minute or longer and 60 minutes or shorter, more preferably 10 minutes or longer and 50 minutes or shorter, and particularly preferably 20 minutes or longer and 40 minutes or shorter.
It should be noted that in the case in which the wavelength conversion film forming composition includes a silicon-containing resin as the base component (Cb), a coating film is baked to produce the wavelength conversion film. In this case, the material of the substrate is not particularly limited as long as the material can withstand the baking. Preferable examples of the material of the substrate include inorganic materials such as metals, silicon, and glass, and heat-resistant materials such as polycarbonate, polyethylene terephthalate, polyethersulfone, polyimide resin, and polyamide imide resin. The thickness of the substrate is not particularly limited, and the substrate may be in the form of a film or a sheet.
The substrate including the coating film is then baked. The baking method is not particularly limited, but the baking is typically conducted using electric furnace or the like. Typically, the baking temperature is preferably 300°C or higher, and more preferably 350°C or higher. The upper limit of the baking temperature is not particularly limited, but is, for example, 1,000°C or lower. A baking atmosphere is not particularly limited, and the baking may be conducted in an inert gas atmosphere such as a nitrogen atmosphere or an argon atmosphere, under vacuum, or under reduced pressure.

The baking may be conducted in ambient air, or under appropriate control of the oxygen concentration.

The film thickness of the wavelength conversion film is not particularly limited. The film thickness of the wavelength conversion film is typically 0.1 μm or more and 10 μm or less, preferably 0.2 μm or more and 5 μm or less, and more preferably 0.5 μm or more and 3 μm or less.

A wavelength conversion film including quantum dots (A) formed by the method described above can be suitably used as an optical film for a light-emitting display element because of good fluorescence efficiency and high OD value, and also can be suitably used to produce a laminated body suitably used in a light-emitting display element.

<<Laminated body>>

The laminated body is a laminated body including the wavelength conversion film. Such a laminated body can be a laminated body made of only a wavelength conversion film including the quantum dots (A), or a laminated body made of a wavelength conversion film including the quantum dots (A) and other functional layers.

<Laminated body of wavelength conversion film>

Examples of the laminated body include a laminated body in which two or more layers of wavelength conversion films containing the quantum dots (A) dispersed in various base (Ca) are laminated and the wavelength conversion films formed using the above-described wavelength conversion film forming composition are included. Such a laminated body may be a laminated body in which only wavelength conversion films formed by using the above-described wavelength conversion film forming composition are laminated or may be a laminated body in which a wavelength conversion film formed by using the above-described wavelength conversion film forming composition and other film containing the quantum dots (A), which is not the wavelength conversion film formed by using the above-described wavelength conversion film forming composition, are laminated.

It is preferred that a film including quantum dots (A) include quantum dots producing red light by wavelength conversion of incident light from a light source, and quantum dots producing green light by wavelength conversion of incident light from a light source. It is also preferred that a film including quantum dots producing red light and a film including quantum dots producing green light be alternately laminated. When a laminated body having such a structure is applied to a light-emitting display element panel, because green light and red light having high color purity can be extracted by wavelength conversion, the range of hue reproduction in a light-emitting display equipped with the light-emitting display element panel can be enlarged. It should be noted that blue light and white light can be typically used as a light source. Red light, green light and blue light having high color purity can be extracted by using such a light source in combination with the above laminated body, and a clear image with good hues can be shown.

The light-emitting display is not particularly limited as long as it is a device to show an image using light emission of a light source, and examples thereof include a liquid crystal display, an organic EL display and the like.

<Laminated body including film including wavelength conversion film and other functional layers>

It is also preferred that the wavelength conversion film formed using the aforementioned wavelength conversion film forming composition, which is a film including quantum dots (A), be laminated with other functional layers. It is preferred that a wavelength conversion film include quantum dots producing red light by wavelength conversion of incident light from a light source, and quantum dots producing green light by wavelength conversion of incident light from a light source. In addition, blue light and white light can be typically used as a light source.

Examples of other functional layers include a diffusion layer to diffuse light rays, a low refractive index layer having a lower refractive index than that of the wavelength conversion film, a reflection layer to reflect part of the incident light from a light source, a light guide plate to allow light emitted by a light source to enter the laminated body and the like. In addition, a gap may be provided in the laminated body as needed. The gap may be, for example, an air layer, and a layer of an inert gas such as nitrogen.

As the diffusion layer, various diffusion layers which have been conventionally used for various displays and optical devices can be used without particular limitation. Typical examples thereof include a film having a fine structure such as a prism on the surface thereof, a film in which beads are scattered or embedded on the surface thereof, and a film including fine particles and e.g. an interface or a gap structured to scatter light rays in the inside thereof.

The low refractive index layer is not particularly limited as long as it is a film having a lower refractive index than that of the above-described wavelength conversion film and films made of various materials can be used.

Examples of the reflection layer include a reflective polarizing film, a film having a fine structure such as a prism on the surface thereof to reflect part of the incident light, a metallic foil, a multilayer optical film and the like. The reflection layer reflects preferably 30% or more of the incident light, more preferably 40% or more and particularly preferably 50% or more. It is preferred that the reflection layer be provided so that light having passed through a wavelength conversion

film is reflected and reflected light is allowed to enter the wavelength conversion film again. The color purity of green light and red light emitted from the wavelength conversion film can be increased by reflecting light incident from a reflection layer to the wavelength conversion film in the direction of the reflection layer again by e.g. a diffusion layer, compared to a case where a reflection layer is not used.

As the light guide plate, various light guide plates which have been conventionally used for various displays and optical devices can be used without particular limitation.

Typical examples of preferred layer constitution of the laminated body including a wavelength conversion film and other functional layers include layer constitution in 1) to 8) below. It should be noted that in laminated bodies having the constitution in 1) to 8), light rays emitted from a light source are allowed to enter the layer described on the leftmost end, and light rays after wavelength conversion by a wavelength conversion film are extracted from the layer described on the rightmost end. A display panel is commonly provided so that light rays extracted from a laminated body are allowed to enter, and red light, green light and blue light having high color purity are used to show an image.

1) Diffusion layer/ wavelength conversion film/low refractive index layer/reflection layer,
2) light guide plate/diffusion layer/ wavelength conversion film/low refractive index layer/reflection layer,
3) low refractive index layer/ wavelength conversion film/gap/reflection layer,
4) light guide plate/low refractive index layer/ wavelength conversion film/gap/reflection layer,
5) low refractive index layer/ wavelength conversion film/low refractive index layer/reflection layer,
6) light guide plate/low refractive index layer/ wavelength conversion film/low refractive index layer/reflection layer,
7) reflection layer/low refractive index layer/ wavelength conversion film/low refractive index layer/reflection layer, and
8) light guide plate/reflection layer/low refractive index layer/wavelength conversion film/low refractive index layer/reflection layer.

It should be noted that in the laminated bodies described above, the wavelength conversion film formed using the aforementioned wavelength conversion film forming composition is preferably produced in accordance with the above-described method.

<<Light-emitting display element panel and light-emitting display>>

The wavelength conversion film formed using the above-described wavelength conversion film forming composition and the above-described laminated body are incorporated into various light-emitting display element panels, and are preferably used to extract red light, green light and blue light having high color purity from light rays emitted from a light source. Here, "quantum dot sheet" is a general term for the wavelength conversion film formed using the above-described wavelength conversion film forming composition and the above-described laminated body.

The light-emitting display element panel typically includes the combination of a backlight as a light source, a quantum dot sheet and a display panel. When the quantum dot sheet is equipped with a light guide plate, a light source is typically provided so that light rays are allowed to enter the lateral side of the light guide plate. The light rays having entered from the lateral side of the light guide plate pass through the quantum dot sheet and enter the display panel. When the quantum dot sheet is not equipped with a light guide plate, light rays from a surface light source are allowed to enter the main surface of the quantum dot sheet, and light rays having passed through the quantum dot sheet are allowed to enter the display panel. The type of the display panel is not particularly limited as long as an image can be formed using light rays having passed through a quantum dot sheet, and the type is typically a liquid crystal display panel.

Because red light, green light and blue light having particularly high color purity are easily extracted from light rays emitted from a light source, the quantum dot sheet is preferably the above-described laminated body. When the quantum dot sheet is a laminated body, preferred combinations of constitution of a light-emitting display element panel include the following a) to h) combinations. In the combinations described in a) to h) below, laminating is carried out from the constitution described on the leftmost end in the order described to form a light-emitting display element panel.

a) Surface light source/diffusion layer/quantum dot sheet/low refractive index layer/reflection layer/display panel,
b) light guide plate with light source/diffusion layer/quantum dot sheet/low refractive index layer/reflection layer/display panel,
c) surface light source/low refractive index layer/quantum dot sheet/gap/reflection layer/display panel,
d) light guide plate with light source/low refractive index layer/quantum dot sheet/gap/reflection layer/display panel,
e) surface light source/low refractive index layer/quantum dot sheet/low refractive index layer/reflection layer/display panel,
f) light guide plate with light source/low refractive index layer/quantum dot sheet/low refractive index layer/reflection layer/display panel,
g) surface light source/reflection layer/low refractive index layer/quantum dot sheet/low refractive index layer/reflection layer/display panel, and

h) light guide plate with light source/reflection layer/low refractive index layer/quantum dot sheet/low refractive index layer/reflection layer/display panel.

By using the light-emitting display element panel described above, a light-emitting display, which has a wide range of hue reproduction and can show a clear image with good hues, can be produced.

EXAMPLES

Hereinafter, the present invention is described in more detail by way of Examples, but the present invention is not limited to these Examples.

[Example 1]

To a raw material quantum dot dispersion liquid having a quantum dot concentration of 25% by mass, the same weight of dodecanethiol as raw material quantum dots was added, thereby obtaining a mixture. A dispersion medium in the raw material quantum dot dispersion liquid was propylene glycol monomethyl ether acetate (PGMEA). As the raw material quantum dots, core-shell type quantum dots having a core composed of InP coated with a shell layer composed of ZnS, which had a primary particle diameter of 10 nm and exhibited the emission maximum wavelength at 630 nm, were used. After that, the obtained mixture was heated at 200°C for 60 minutes. The heating distilled away PGMEA contained in the mixture before the heating. In addition, the color of the liquid under a yellow light was transparent red to orange. The heated mixture was left to stand in a room temperature atmosphere, and the mixture was cooled to room temperature. In the cooling process, it was observed that precipitates were formed and the primary particles of the quantum dots were clustered. A liquid containing 50% by mass of cluster-containing quantum dots in dodecanethiol was obtained as described above. In addition, among the primary particles of the quantum dots (raw material quantum dots) used, 25% by mass of the quantum dots were clustered.

[Example 2]

A liquid containing 50% by mass of cluster-containing quantum dots in dodecanethiol was obtained in the same manner as in Example 1 except that zinc stearate corresponding to 10% by mass of the mass of the dodecanethiol was added to the mixture. In addition, among the primary particles of the quantum dots (raw material quantum dots) used, 25% by mass of the quantum dots were clustered.

[Example 3 and Example 4]

The mixtures obtained in Example 1 and Example 2 were subjected to solvent substitution with PGMEA, respectively, thereby obtaining opaque liquid compositions 3 and 4 containing 50% by mass of cluster-containing quantum dots in PGMEA. Among the contained quantum dots, the proportions of quantum dots having dodecanethiol as a ligand (quantum dot clusters) were 86% by mass in the liquid composition 3 and 85% by mass in the liquid composition 4.

[Preparation Example 1]

(Preparation of quantum dot-containing negative-type composition 1)

41.3 parts by mass of an alkali-soluble resin as a base (Ca), 18 parts by mass of dipentaerythritol hexaacrylate as a base component (Cb), 5 parts by mass of a photopolymerization initiator having the following structure as a curing agent (D), 1 part by mass of 3-methacryloxypropyltrimethoxysilane, 0.1 parts by mass of a silicone-based surfactant, and 34.6 parts by mass of the quantum dots (in terms of the solid content) used in Example 1 were dissolved and dispersed in PGMEA such that the solid content concentration reached 41% by mass, thereby obtaining a quantum dot-containing negative-type composition 1 (solvent: PGMEA, solid content concentration: 41% by mass). The same operation was performed three times to prepare three quantum dot-containing negative-type compositions 1 having the same composition. As the alkali-soluble resin, a resin composed of the following constituent units was used. For each constituent unit, the value at the lower right of the parentheses is the molar ratio of each constituent unit in the resin.

[Chem. 36]

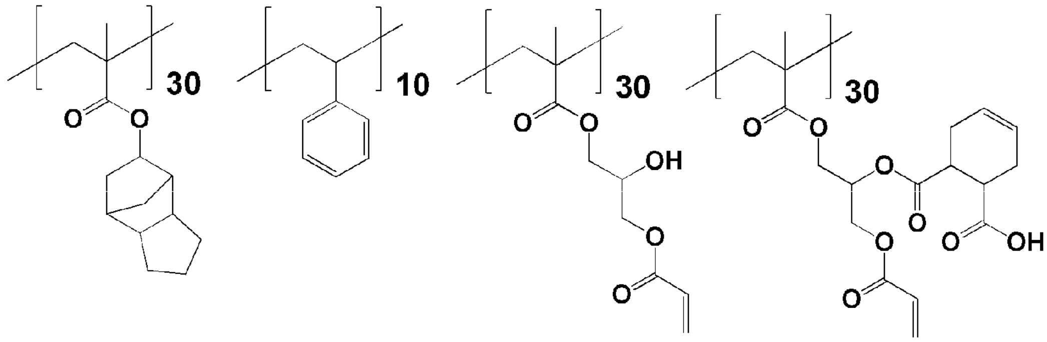

[Chem. 37]

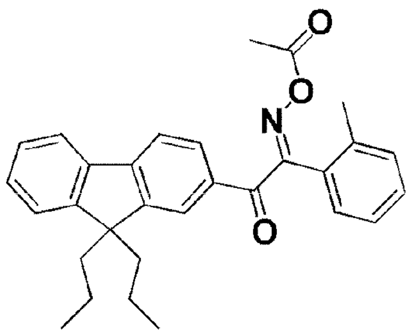

[Example 5 and Example 6]

(Preparation of wavelength conversion film forming composition)

Quantum dot clusters precipitated in Example 1 and Example 2, respectively, were separated and purified. The obtained purified quantum dot clusters were added to two negative-type compositions 1 obtained in Preparation Example 1 (25.3 parts by mass each relative to 100 parts by mass of a composition obtained by excluding the solvent from the negative-type composition 1), respectively, thereby obtaining a wavelength conversion film forming composition 1 containing the quantum dot clusters obtained in Example 1 and a wavelength conversion film forming composition 2 containing the quantum dot clusters obtained in Example 2.

(Contrast of wavelength conversion film)

The obtained wavelength conversion film forming compositions 1 and 2 were applied on glass substrates by a spin coating method to form coating films. Next, the coating films were baked in the air at 100°C, and then the entire surfaces of the coating films were exposed and cured at an exposure dose of 50 mJ/cm$^2$. Further, cured films were baked at 200°C for 60 minutes in a nitrogen atmosphere to obtain wavelength conversion films 1 and 2 having a film thickness of 5 μm, respectively. The light beam transmittances of the obtained wavelength conversion films 1 and 2 were measured using a spectrophotometer Vista (manufactured by Hunter Associates Laboratory, Inc.). The light beam transmittance of the glass substrate alone before the formation of the wavelength conversion films was used as a baseline, and a wavelength range to be scanned was set to 400 to 700 nm. A graph of the measurement results of the light beam transmittances is shown in FIG. 1. In addition, the OD value at a wavelength of 450 nm (OD@450 nm) and the OD value at an absorption wavelength at which the transmitted light intensity was maximized (OD@lmax) were obtained, respectively, and the differences between the two OD values are shown in the table as a contrast. It should be noted that the light beam transmittances were also measured in the same manner for samples with different film thicknesses, and, in samples with two different film thicknesses, the OD values at a film thickness of 5 μm (OD/5 μm) were obtained from the following formula:

$$OD\lambda = -(1/L)\ \log10(I0/I)$$

(L is the sample thickness through which light passes; λ is the wavelength; I0 is the incident light intensity; I is the transmitted light intensity).

In addition, as Comparative Example 1, a wavelength conversion film for comparison was obtained in the same manner using a negative-type composition 1 to which no quantum dot clusters were added, the light beam transmittances were measured, and the OD contrast was obtained.

[Table 1]

| | | OD value at 450nm (OD/5μm) | OD value at Imax (OD/5μm) | OD contrast |
|---|---|---|---|---|
| Example 5 | Wavelength conversion film forming composition 1 | 0.53 | 0.00136 | 0.52 |
| Example 6 | Wavelength conversion film forming composition 2 | 0.56 | 0.0074 | 0.55 |
| Comparative example 1 | negative-type composition 1 | 0.17 | -0.009 | 0.18 |

According to Table 1 and FIG. 1, it is found that, in a wavelength conversion film containing quantum dots converting blue light into red light, when the light beam transmittance of the wavelength conversion film at a wavelength of 450 nm is set to 40% or lower, and the light beam transmittance at a wavelength of 650 nm is set to 90% or higher, the wavelength conversion film exhibits a favorable OD value.

## Claims

1. A wavelength conversion film comprising quantum dots converting blue light into red light or green light,

   wherein a light beam transmittance of the wavelength conversion film at a wavelength of 450 nm is 40% or lower,
   a light beam transmittance of the wavelength conversion film at a wavelength of 650 nm is 90% or higher when a hue of a light beam after wavelength conversion is red, and
   a light beam transmittance of the wavelength conversion film at a wavelength of 550 nm is 90% or higher when a hue of a light beam after wavelength conversion is green, and
   wherein the light beam transmittance is measured on a wavelength conversion film having a film thickness of 5 μm formed using a wavelength conversion film-forming composition containing quantum dots.

2. The wavelength conversion film according to claim 1, wherein a content of inorganic particles other than the quantum dots in the wavelength conversion film is 5% by mass or less relative to a mass of the quantum dots.

3. The wavelength conversion film according to claim 1 or 2, wherein some of the quantum dots are in a form of a quantum dot cluster composed of two or more primary particles of quantum dots.

4. The wavelength conversion film according to claim 3, wherein a ligand is bonded to a surface of the quantum dot cluster.

5. The wavelength conversion film according to claim 4, wherein the ligand is a compound represented by the following formula (1):

   R-SH (1)

   wherein R is an aliphatic hydrocarbon group having 6 or more and 18 or less carbon atoms.

6. A wavelength conversion film forming composition comprising:

   primary particles of quantum dots; and
   a quantum dot cluster composed of two or more primary particles of quantum dots.

7. The wavelength conversion film forming composition according to claim 6, wherein a ligand is bonded to a surface of the quantum dot cluster.

8. The wavelength conversion film forming composition according to claim 7, wherein the ligand is a compound represented by the following formula (1):

R-SH (1)

wherein R is a saturated aliphatic hydrocarbon group having 6 or more and 18 or less carbon atoms.

9. The wavelength conversion film forming composition according to any one of claims 6 to 8, further comprising a liquid organic compound,
wherein the liquid organic compound has an SP value of 17 $MPa^{0.5}$ or more and 22 $MPa^{0.5}$ or less.

10. A method for producing a cluster-containing quantum dot, comprising:
heating a mixture containing quantum dots and a compound represented by the following formula (1):

R-SH (1)

wherein R is a saturated aliphatic hydrocarbon group having 6 or more and 18 or less carbon atoms,

to a temperature of 150°C or higher and 300°C or lower; and
cooling the heated mixture to cluster primary particles of the quantum dots.

FIG. 1

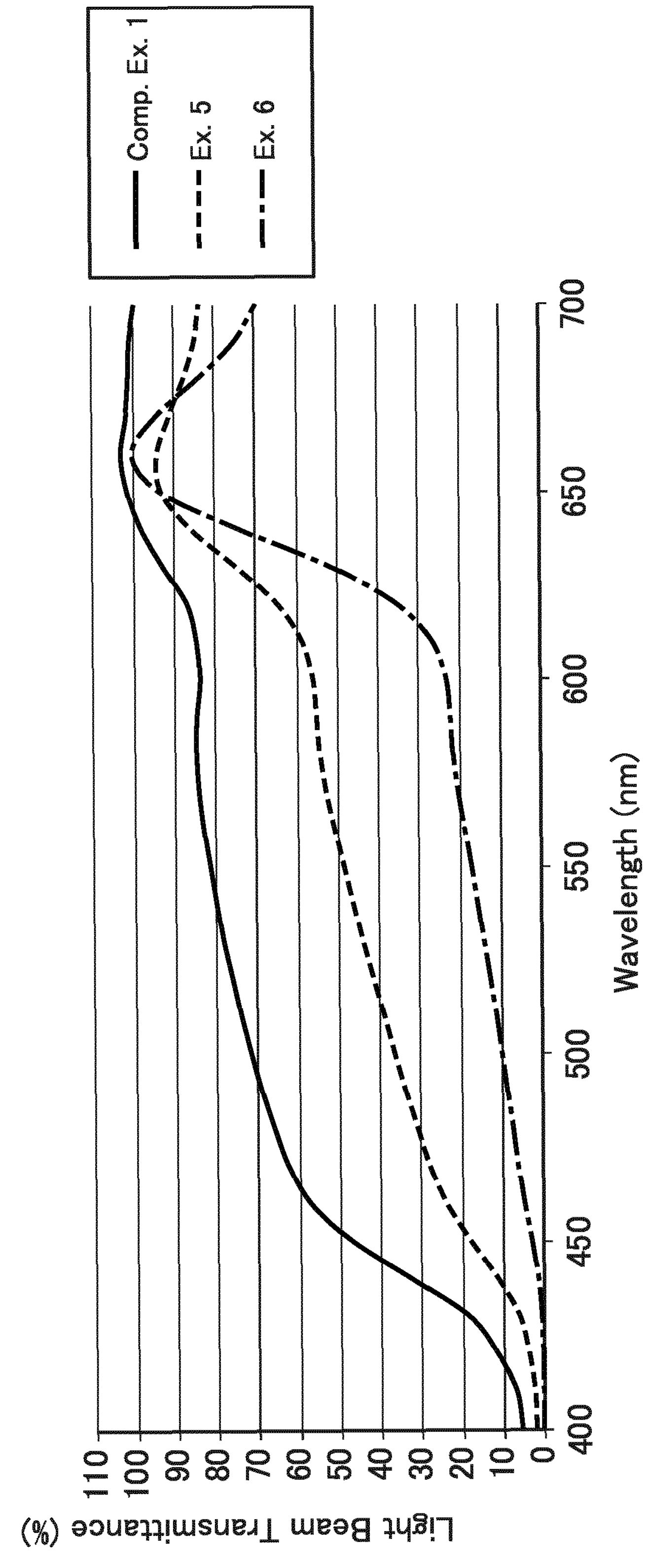
Comp. Ex. 1
Ex. 5
Ex. 6
Light Beam Transmittance (%)
110
100
90
80
70
60
50
40
30
20
10
0
400
450
500
550
600
650
700
Wavelength (nm)

**INTERNATIONAL SEARCH REPORT**

International application No.
PCT/JP2020/027021

A. CLASSIFICATION OF SUBJECT MATTER
C09K 11/08(2006.01)i; C09K 11/56(2006.01)i; C09K 11/70(2006.01)i; B82Y 20/00(2011.01)i; B82Y 40/00(2011.01) i; G02B 5/20(2006.01) i
FI: G02B5/20; C09K11/08 G; B82Y20/00; B82Y40/00; C09K11/70; C09K11/56
According to International Patent Classification (IPC) or to both national classification and IPC

B. FIELDS SEARCHED
Minimum documentation searched (classification system followed by classification symbols)
C09K11/08; C09K11/56; C09K11/70; B82Y20/00; B82Y40/00; G02B5/20

Documentation searched other than minimum documentation to the extent that such documents are included in the fields searched

| | |
|---|---|
| Published examined utility model applications of Japan | 1922-1996 |
| Published unexamined utility model applications of Japan | 1971-2020 |
| Registered utility model specifications of Japan | 1996-2020 |
| Published registered utility model applications of Japan | 1994-2020 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | US 2019/0157354 A1 (SAMSUNG ELECTRONICS CO., LTD.) 23.05.2019 (2019-05-23) paragraphs [0107], [0111]-[0112], fig. 11, 13 | 1-5 |
| Y | JP 9-115668 A (IDEMITSU KOSAN CO., LTD.) 02.05.1997 (1997-05-02) paragraphs [0010], [0035] | 1-5 |
| Y | KR 10-2018-0092671 A (SAMSUNG SDI CO., LTD.) 20.08.2018 (2018-08-20) paragraph [0071], fig. 1 | 3-5 |
| Y | WO 2018/114982 A1 (UNIVERSITEIT GENT) 28.06.2018 (2018-06-28) column 16, lines 11-18 | 5 |

☐ Further documents are listed in the continuation of Box C. ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 25 September 2020 (25.09.2020) | 06 October 2020 (06.10.2020) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

International application No.
PCT/JP2020/027021

**Box No. II Observations where certain claims were found unsearchable (Continuation of item 2 of first sheet)**

This international search report has not been established in respect of certain claims under Article 17(2)(a) for the following reasons:

1. ☐ Claims Nos.:
because they relate to subject matter not required to be searched by this Authority, namely:

2. ☐ Claims Nos.:
because they relate to parts of the international application that do not comply with the prescribed requirements to such an extent that no meaningful international search can be carried out, specifically:

3. ☐ Claims Nos.:
because they are dependent claims and are not drafted in accordance with the second and third sentences of Rule 6.4(a).

**Box No. III Observations where unity of invention is lacking (Continuation of item 3 of first sheet)**

This International Searching Authority found multiple inventions in this international application, as follows:
See extra sheet

1. ☐ As all required additional search fees were timely paid by the applicant, this international search report covers all searchable claims.
2. ☐ As all searchable claims could be searched without effort justifying additional fees, this Authority did not invite payment of additional fees.
3. ☐ As only some of the required additional search fees were timely paid by the applicant, this international search report covers only those claims for which fees were paid, specifically claims Nos.:

4. ☒ No required additional search fees were timely paid by the applicant. Consequently, this international search report is restricted to the invention first mentioned in the claims; it is covered by claims Nos.: 1-5

**Remark on Protest**

☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (January 2015)

**INTERNATIONAL SEARCH REPORT**
Information on patent family members

International application No.
PCT/JP2020/027021

| Patent Documents referred in the Report | Publication Date | Patent Family | Publication Date |
|---|---|---|---|
| US 2019/0157354 A1 | 23 May 2019 | KR 10-2019-0058130 A | |
| JP 9-115668 A | 02 May 1997 | (Family: none) | |
| KR 10-2018-0092671 A | 20 Aug. 2018 | (Family: none) | |
| WO 2018/114982 A1 | 28 Jun. 2018 | JP 2020-507102 A<br>US 2019/0330525 A1<br>EP 3559151 A1<br>CA 3044503 A<br>CN 110088227 A<br>KR 10-2019-0098171 A<br>IL 267383 D | |

Form PCT/ISA/210 (patent family annex) (January 2015)

**INTERNATIONAL SEARCH REPORT**

International application No.
PCT/JP2020/027021

<Continuation of Box No. III>

The claims are classified into the following two inventions.

(Invention 1) Claims 1-5

Claims 1-5 have the special technical feature of a "wavelength conversion film which contains a quantum dot and converts blue light into red light or green light, wherein the light transmittance of said wavelength conversion film at a wavelength of 450 nm is at most 40%, the light transmittance of said wavelength conversion film at a wavelength of 650 nm is at least 90% when the hue of the light ray after wavelength conversion is red, the light transmittance of said wavelength conversion film at a wavelength of 550 nm is at least 90% when the hue of the light ray after wavelength conversion is green, and the aforementioned light transmittances are measured for a wavelength conversion film which has a film thickness of 5 μm and is formed by using a wavelength conversion film-forming composition containing a quantum dot", and are thus classified as invention 1.

(Invention 2) Claims 6-10

Claims 6-10 share, with claim 1 classified as invention 1, the common technical feature of a "wavelength conversion film-forming composition containing a quantum dot", but said technical feature does not make a contribution over the prior art and thus cannot be said to be a special technical feature. Moreover, there do not exist other identical or corresponding special technical features between claims 6-10 and claim 1. Further, claims 6-10 are not dependent on claim 1. Furthermore, claims 6-10 are not substantially identical or equivalent to any of the claims classified as invention 1. Therefore, claims 6-10 cannot be classified as invention 1. In addition, claims 6-10 have the special technical feature of a "wavelength conversion film-forming composition containing primary particles of a quantum dot and a quantum dot cluster consisting of two or more primary particles of the quantum dot", and are thus classified as invention 2.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2019026780 A
- WO 2013127662 A
- JP 2008248169 A
- JP 2008019422 A
- JP 2016145308 A
- JP 2017025226 A
- WO 2014178254 A